(19) Europäisches Patentamt / European Patent Office / Office européen des brevets

(11) **EP 4 511 406 B1**

(12) **EUROPEAN PATENT SPECIFICATION**

(45) Date of publication and mention of the grant of the patent:
**22.10.2025 Bulletin 2025/43**

(21) Application number: **23709235.8**

(22) Date of filing: **09.03.2023**

(51) International Patent Classification (IPC):
***C08F 216/38*** (2006.01) ***C08F 220/04*** (2006.01)
***C08F 220/12*** (2006.01) ***C08F 224/00*** (2006.01)
***C09D 129/14*** (2006.01) ***C09D 133/02*** (2006.01)
***C09D 133/06*** (2006.01) ***C09D 137/00*** (2006.01)
***C09J 129/04*** (2006.01) ***C09J 133/02*** (2006.01)
***C09J 133/06*** (2006.01) ***C09J 137/00*** (2006.01)
***C08F 218/08*** (2006.01) ***C08F 2/06*** (2006.01)

(52) Cooperative Patent Classification (CPC):
(C-Sets available)
**C08F 216/38; C08F 218/08; C08F 220/04; C08F 220/12; C08F 224/00; C09D 129/14; C09D 133/02; C09D 133/062; C09D 137/00; C09J 129/04; C09J 133/02; C09J 133/062; C09J 137/00;** C08L 2201/06 (Cont.)

(86) International application number:
**PCT/EP2023/055959**

(87) International publication number:
**WO 2023/241833 (21.12.2023 Gazette 2023/51)**

(54) **METHOD FOR PRODUCING BIOBASED DEGRADABLE COPOLYMERS BY RADICAL POLYMERIZATION OF KETENE ACETALS AND CROTONIC ACID OR ITS ESTERS AND COPOLYMERS THUS PRODUCED AS WELL AS USES THEREOF**

VERFAHREN ZUR HERSTELLUNG BIOBASIERTER ABBAUBARER COPOLYMERE DURCH RADIKALISCHE POLYMERISATION VON KETENACETALEN UND CROTONSÄURE ODER DEREN ESTERN UND SO HERGESTELLTE COPOLYMERE SOWIE DEREN VERWENDUNG.

PROCÉDÉ DE FABRICATION DE COPOLYMÈRES DÉGRADABLES BIOSOURCÉS PAR POLYMÉRISATION RADICALAIRE D'ACÉTALS DE CÉTÈNE ET D'ACIDE CROTONIQUE OU DE SES ESTERS ET COPOLYMÈRES AINSI PRODUITS AINSI QUE LEURS UTILISATIONS.

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.06.2022 PCT/EP2022/066103**

(43) Date of publication of application:
**26.02.2025 Bulletin 2025/09**

(73) Proprietors:
- **The University of the Basque Country**
  **48940 Leioa (Bizkaia) (ES)**
- **Politecnico di Milano**
  **20133 Milano (IT)**

(72) Inventors:
- **ZANONI, Arianna**
  **20133 Milano (IT)**
- **GABIRONDO AMENABAR, Elena**
  **48940 Leioa (Bizkaia) (ES)**
- **BARQUERO SALABERRIA, Aitor**
  **48940 Leioa (Bizkaia) (ES)**
- **SARDON MUGURUZA, Haritz**
  **48940 Leioa (Bizkaia) (ES)**
- **LEIZA, Jose Ramon**
  **48940 Leioa (Bizkaia) (ES)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(74) Representative: **Von Rohr Patentanwälte Partnerschaft mbB**
**Rüttenscheider Straße 62**
**45130 Essen (DE)**

(56) References cited:
**EP-A1- 3 722 334 WO-A1-2011/141522**


- **FOUILLOUX HUGO ET AL: "Production and Polymerization of Biobased Acrylates and Analogs", MACROMOLECULAR RAPID COMMUNICATIONS, vol. 42, no. 3, 12 January 2021 (2021-01-12), DE, pages 2000530, XP055902388, ISSN: 1022-1336, Retrieved from the Internet <URL:https://onlinelibrary.wiley.com/doi/full-xml/10.1002/marc.202000530> DOI: 10.1002/marc.202000530**
- **REN L ET AL: "FREE-RADICAL COPOLYMERIZATION BEHAVIOR OF 5,6-BENZO-2-METHYLENE-1,3-DIOXEPANE AND METHACRYLIC ACID VIA THE IN SITU GENERATION OF 3-METHYL-1,5-DIHYDROBENZOÄEÜÄ1,3ÜDIOXEPIN-3-YL METHACRYLATE AND 2-(ACETOXYMETHYL) BENZYL METHACRYLATE", MACROMOLECULES, AMERICAN CHEMICAL SOCIETY, US, vol. 40, no. 22, 30 October 2007 (2007-10-30), pages 7834 - 7841, XP001509242, ISSN: 0024-9297, DOI: 10.1021/MA0711588**
- **DING DONGDONG ET AL: "A degradable copolymer of 2-methylene-1,3-dioxepane and vinyl acetate by photo-induced cobalt-mediated radical polymerization", POLYMER CHEMISTRY, vol. 7, no. 33, 1 January 2016 (2016-01-01), Cambridge, pages 5258 - 5264, XP093048051, ISSN: 1759-9954, DOI: 10.1039/C6PY01061J**
- **L SUN ET AL: "Synthesis and Enzymatic Degradation of 2-Methylene-1,3- dioxepane and Methyl Acrylate Copolymers", JOURNAL OF POLYMER SCIENCE: PART A: POLYMER CHEMISTRY, vol. 41, 15 July 2010 (2010-07-15), pages 2898 - 2904, XP055065001, DOI: 10.1002/pola.10868**


(52) Cooperative Patent Classification (CPC): (Cont.)

C-Sets
**C08F 216/38, C08F 220/04;**
**C08F 216/38, C08F 220/12;**
**C08F 218/08, C08F 216/38, C08F 220/12;**
**C08F 218/08, C08F 220/12, C08F 224/00;**
**C08F 220/04, C08F 216/38;**
**C08F 220/04, C08F 224/00;**
**C08F 220/12, C08F 216/38;**
**C08F 220/12, C08F 224/00;**
**C08F 224/00, C08F 220/04;**
**C08F 224/00, C08F 220/12**

## Description

### FIELD OF THE INVENTION

The present invention refers to the technical field of copolymers and polymeric compositions comprising these copolymers, which are at least partially biobased and degradable under defined conditions, as well as to the various usages thereof and to a method for their production.

Particularly, the present invention refers to the technical field of producing copolymers and polymeric compositions comprising these copolymers, especially copolymers and respective polymeric compositions, respectively, which are appropriate for use as a preferably degradable ingredient or component of adhesives, coating materials, lubricants, agricultural products, household cleaners, inks, personal care products, cosmetics, pharmaceuticals, packagings, drug delivery systems or the like but also for many other applications (such as e.g. additivation, compatibilization etc.). Especially, the present invention refers to the technical field of producing biobased and degradable copolymers and polymeric compositions, respectively, comprising these copolymers, particularly to biobased and degradable copolymers and respective polymeric compositions, respectively, which are appropriate for use as a preferably degradable ingredient or component of adhesives, coating materials, lubricants, agricultural products, household cleaners, inks, personal care products, cosmetics, pharmaceuticals, packagings, drug delivery systems, but also for many other applications (such as e.g. additivation and compatibilization).

Especially, the present invention relates to a method for producing a copolymer based on (cyclic) ketene acetals and crotonic esters (i.e. in other words, a ketene acetal / crotonic copolymer or, synonymously, a copolymer comprising moieties / structural units derived from (cyclic) ketene acetals and moieties / structural units derived from crotonic esters), particularly appropriate for use as a preferably degradable ingredient or component of adhesives, coating materials, lubricants, agricultural products, household cleaners, inks, personal care products, cosmetics, pharmaceuticals, packagings, drug delivery systems, but also for many other applications (such as additivation and compatibilization), as well as to the copolymer thus produced or thus obtainable as well as to its various uses, usages and applications.

Furthermore, the present invention is also directed to a polymeric composition, particularly appropriate for use as a preferably degradable ingredient or component of adhesives, coating materials, lubricants, agricultural products, household cleaners, inks, personal care products, cosmetics, pharmaceuticals, packagings, drug delivery systems, wherein the polymeric composition comprises at least one inventive copolymer obtainable or obtained by the inventive method as well as to the various uses, usages and applications of such polymeric composition.

Moreover, the present invention also refers to an adhesive, especially a pressure-sensitive adhesive, which is especially degradable or removable under neutral or basic (i.e. alkaline) conditions and which comprises the inventive copolymer obtainable or obtained by the inventive method or a polymeric composition comprising the inventive copolymer, respectively.

Further, the present invention is also directed to a coating material (particularly a coating material selected from paints, lacquers, varnishes, colors, impregnations, glazes, enamels, finishes and protective coatings), which is especially degradable or removable under neutral or basic (i.e. alkaline) conditions and which comprises the inventive copolymer obtainable or obtained by the inventive method or a polymeric composition comprising the inventive copolymer, respectively.

Finally, the present invention is also directed to a product selected from the group consisting of lubricants, agricultural products, household cleaners, inks, personal care products, cosmetics, pharmaceuticals, packagings, drug delivery systems and additives or compatibilizing agents (compatibilizers) determined for use in for polymeric systems, especially wherein such product is degradable or removable under defined conditions, particularly under mild or moderate conditions, especially under the conditions used during recycling or cleaning processes, preferably under neutral or basic (alkaline) conditions, which comprises the inventive copolymer obtainable or obtained by the inventive method or a polymeric composition comprising the inventive copolymer, respectively.

### BACKGROUND OF THE INVENTION

One of the most important challenges of the current century is to diminish the amount of residues and wastes produced by humans. The World Bank predicts that the yearly-generated amount of municipal solid waste is going to increase from 1.3 billion tons up to 2.2 billion tons by the year 2025. Apart from paper-based, metal-based and glass-based wastes, above all organic and plastic-based waste accounts for a considerable and substantial proportion of the overall waste amount.

Above all, in the 21$^{st}$ century, the effects of environmental pollutions and greenhouse gases release have led to a clear and significant change in the global environmental condition. Plastic production and usage are hugely contributing to this global crisis, either with microplastics release from plastic degradation and/or with $CO_2$ liberation during the production and disposal steps, starting from the oil extraction to the incineration (see e.g. S. RameshKumar et al., Current Opinion in

Green and Sustainable Chemistry 2020, 21: 75-81 "Bio-based and biodegradable polymers - State-of-the-art, challenges and emerging trends"; cf. also: https://doi.org/10.1016/j.cogsc.2019.12.005). This global crisis, together with the depletion of fossil resources, gives rise to an increasing attention towards degradable, especially biodegradable, and/or biobased polymers and plastics.

Thus, due to growing environmental concerns, recycling processes are becoming increasingly important. Especially, recycling of materials is particularly effective when different kinds of materials are separated and individually recycled. In this context, it is especially important to also remove, particularly without leaving residues, labels, coatings, tapes etc. from respective surfaces (e.g. from bottles, boxes, bags, packagings, wrappings etc.) made e.g. of stainless steel, glass or plastics such as polypropylene (PP), polyethylene (PE), polyethyleneterephthalate (PET) etc.

In this context, there exists an increasing demand for degradable plastic or polymeric materials (e.g. used as adhesives, coatings etc.) in order to be able to remove such plastic or polymeric materials, possibly without significant leaving residues, from the surfaces and objects to be recycled.

However, in spite of an increasing need for degradable plastic or polymeric materials (e.g. for use as or in adhesives, coatings etc.), the respective methods of their production are often not compatible with environmental requirements and constraints (e.g. since many production methods either use deleterious and/or toxic ingredients or materials, such as e.g. volatile organic compounds VOCs, metal-based catalysts etc. and/or lead to highly polluted wastes). In addition, most conventional production processes for such degradable plastic or polymeric materials require the use of oil-based raw or starting materials and high energy consumption, thus leading to a detrimental and high overall carbon footprint.

Particularly, degradable plastics or polymers are often synthesized by polycondensation reactions which usually require high temperatures and reduced pressure conditions. Consequently, these synthesis methods do not only constitute energy consuming processes but are also difficult to be handled or transferred on an industrially applicable large scale.

Moreover, most conventional production processes for such degradable plastic or polymeric materials often yield products with significantly reduced performance properties, which prevent their universal applicability.

Particularly with respect to the technical field of adhesives, there is an increasing need for degradable adhesives since, due to growing environmental concerns, recycling processes are becoming increasingly important where in the context of recycling processes it is essential to be able to remove, especially to completely remove, the used adhesives from the respective substrate under defined conditions or on demand, especially using an economic and environmental-friendly removal methods. However, conventional adhesives are mostly not completely degradable, at least not under mild or moderate conditions.

But also for many other applications and usages of plastic or polymeric materials it is important that these materials are degradable, especially under defined and particularly mild conditions and/or that these materials may undergo conventional or efficient, especially economic and environmental-friendly recycling processes in order to fulfill growing environmental requirements. **In** this respect, for instance and in a non-limiting manner, there may be mentioned the application and usage of plastic or polymeric materials in or as coating materials (e.g. coating materials selected from paints, lacquers, varnishes, colors, impregnations, glazes, enamels, finishes and protective coatings), lubricants, agricultural products (e.g. seeds and seed-related products, soil treatment agents, soil conditioners and fertilizers, particularly seed coatings or soil conditioners), household cleaners (e.g. laundry detergents and handwashings), inks, personal care products (e.g. face and body care products), cosmetics, pharmaceuticals, packagings (e.g. food and other packagings) or drug delivery systems (e.g. for pharmaceutical or nutritive applications), additives or compatibilizing agents (compatibilizers) determined for use in polymeric systems etc.

However, most conventional prior art techniques do not allow to produce degradable plastics or polymers under economic and environmentally compatible conditions also applicable under industrial or large-scale requirements. Above all, these degradable plastics or polymers are determined for a very limited if not single applicability but not for a widespread or even universal use.

Furthermore, most prior art approaches provide polymers which are merely synthetic or are based on a very low or insignificant biobased content.

EP 3 722 334 A1 refers to a method comprising the steps of contacting under emulsion polymerization conditions vinyl acetate, a cyclic ketene acetal monomer and monoethylenically unsaturated acid monomer or salt thereof to form an aqueous dispersion of copolymer particles comprising structural units of vinyl acetate, the cyclic ketene acetal and the monoethylenically unsaturated acid monomer or salt thereof.

Moreover, Hugo Fouilloux et al. "Production and Polymerization of Biobased Acrylates and Analogs", Macromolecular Rapid Communications, vol. 42, no. 3, 12 January 2021, page 2000530 refers to the production and polymerization of biobased acrylates and analogues.

Ren L. et al. "Free-Radical Copolymerization Behaviour of 5,6-Benzo-2-Methylene-1,3-Dioxepane and Methacrylic Acid vie the in situ Generation of 3-Methyl-1,5-Dihydrobenzo(e)(1,3)dioxepin-3-yl Methacrylate and 2-(Acetoxymethyl)benzyl Methacrylate", Macromolecules, American Chemical Society, US, vol. 40, no. 22, 30. October 2007,

pages 7834-7841 refers to free-radical copolymerization behavior of 5,6-benzo-2-methylene-1,3-dioxepane and methacrylic acid via the in-situ generation of 3-methyl-1,5-dihydrobenzo[e][1,3]dioxepin-3-yl-methyacrylate and 2-(acetoxymethyl)benzyl methacrylate.

WO 2011/141522 A1 refers to a superabsorbent material comprising a biodegradable cross-linked copolymer, wherein the copolymer comprises at least one constitutive unit A, wherein the unit A is derived from an olefinically unsaturated carboxylic acid, and at least one further constitutive unit B, wherein the unit B is suitable for inserting at least one biologically cleavable predetermined breaking point into the main chain of the cross-linked copolymer.

Moreover, Ding Dongdong et al. "A degradable copolymer of 2-methylene-1,3-dioxepane and vinyl acetate by photo-induced cobalt-mediated radical polymerization", Polymer Chemistry, vol. 7, no. 33, 1 January 2016, pages 5258-5264 refers to a degradable copolymer of 2-methylene-1,3-dioxepane and vinyl acetate by photo-induced cobalt-mediated radical polymerization.

Finally, Sun L. F. et al. "Synthesis and Enzymatic Degradation of 2-Methylene-1,3-dioxepane and Methyl Acrlyate Copolymers", Department of Chemistry, Wuhan University, June 30, 2003, pages 2898-2904 refers to the synthesis and enzymatic degradation of 2-methylene-1,3-dioxepane and methyl acrylate copolymers.

Thus, in the prior art, there do not exist high-performance polymers or polymeric compositions which are appropriate for a widespread or even universal use and which are degradable or removable under pre-defined, especially moderate or mild conditions, especially under neutral or basic (alkaline) conditions (i.e. in contact with water under neutral or basic/alkaline conditions), and which provide, at the same time, sufficient or even improved performance properties (e.g. particularly adhesivity and adhesiveness as well as cohesiveness in case of adhesives), especially for a multitude of different usages and applications and/or for universal use.

OBJECTS OF THE PRESENT INVENTION

What is needed are thus polymeric materials (i.e. polymers or copolymers, respectively, as well as polymeric compositions comprising them), which polymeric materials are especially appropriate for a widespread or even universal use (i.e. which allow a multitude of different usages and applications) and which polymeric materials additionally are degradable, especially biodegradable, under defined conditions (particularly under mild or moderate conditions, especially under the conditions used during recycling or cleaning processes, e.g. under neutral or basic / alkaline conditions) and which polymeric materials at the same time possess high-performance properties (such as e.g. PSA high-performance properties in case of use for adhesives, for example adhesivity etc.).

Therefore, it is an object of the present invention to provide a method for producing copolymers which are especially appropriate for a widespread or even universal use (i.e. for a multitude of different usages and applications), wherein the aforementioned disadvantages and/or drawbacks of the prior art should be at least partially avoided or even at least essentially overcome.

Particularly, it is an object of the present invention to provide a method for producing copolymers which are degradable, especially biodegradable, under defined conditions (particularly under mild or moderate conditions, especially under the conditions used during recycling or cleaning processes, e.g. under neutral or basic / alkaline conditions) and which are especially appropriate for a widespread or even universal use (i.e. for a multitude of different usages and applications),

Especially, in view of the prior art described before, another problem underlying the present invention is especially to provide copolymers which are degradable, especially biodegradable, under defined conditions (particularly under mild or moderate conditions, especially under the conditions used during recycling or cleaning processes, e.g. under neutral or basic / alkaline conditions) and which are especially appropriate for a widespread or even universal use (i.e. for a multitude of different usages and applications), wherein such copolymers are to at least partially avoid or even to at least essentially overcome the aforementioned disadvantages and/or drawbacks of the prior art.

Particularly, yet another particular problem addressed by the present invention is that of providing copolymers which are especially appropriate for use as or in an adhesive (e.g. pressure-sensitive adhesive) or coating material but also for other applications, which copolymers, especially for the various uses where they may be applied, are to provide good or even excellent performance properties and are, at the same time, degradable, especially biodegradable, when subjected to a treatment under defined conditions (particularly under mild or moderate conditions, especially under the conditions used during recycling or cleaning processes, e.g. under neutral or basic / alkaline conditions).

Furthermore, it is still another object of the present invention to provide a respective method for producing copolymers which are especially appropriate for a widespread or even universal use (i.e. for a multitude of different usages and applications) and which are degradable, especially biodegradable, under defined conditions (particularly under mild or moderate conditions, especially under the conditions used during recycling or cleaning processes, e.g. under neutral or basic / alkaline conditions), which copolymers and its respective method of production shall be compatible with environmental requirements and constraints, especially avoiding the use of deleterious and/or toxic ingredients or materials (such as e.g. volatile organic compounds VOCs etc.) and not leading to highly polluted wastes.

Moreover, it is yet another object of the present invention to provide a method for producing copolymers which are especially appropriate for a widespread or even universal use (i.e. for a multitude of different usages and applications) and which are degradable, especially biodegradable, under defined conditions (particularly under mild or moderate conditions, especially under the conditions used during recycling or cleaning processes, e.g. under neutral or basic / alkaline conditions), which copolymers shall be economic and cost-efficient in its production and shall be easy and universal to be used and to be applied.

Especially, it is yet another object of the present invention to provide and/or to develop a novel method for producing novel copolymers which are especially appropriate for a widespread or even universal use (i.e. for a multitude of different usages and applications) and which are degradable, especially biodegradable, under defined conditions (particularly under mild or moderate conditions, especially under the conditions used during recycling or cleaning processes, e.g. under neutral or basic / alkaline conditions), which copolymers show, at the same time, good or even performance properties (e.g. especially good or even improved adhesion when used as or in adhesives etc.), while at the same time being environmentally compatible, economic and cost-efficient in its production as well as easy and universal to use and to apply.

Finally, it is also still another object of the present invention to provide a polymeric or polymer-based product (especially a polymeric or polymer-based product selected among adhesives, coating materials, lubricants, agricultural products, household cleaners, inks, personal care products, cosmetics, pharmaceuticals, packagings, drug delivery systems as well as additives and compatibilizing agents (compatibilizers) determined for use in for polymeric systems, which polymeric or polymer-based product is to be especially degradable, particularly biodegradable, or removable under defined conditions (particularly under mild or moderate conditions, especially under the conditions used during recycling or cleaning processes, e.g. under neutral or basic / alkaline conditions), which polymeric or polymer-based product at the same time shows good or even improved performance properties, while simultaneously being environmentally compatible, economic and cost-efficient in its production as well as easy and universal to use and to apply.

## SUMMARY OF THE INVENTION

The present invention, according to a **first** aspect of the present invention, refers to a method for producing a copolymer based on ketene acetals and crotonic a esters [ = a ketene acetal / crotonic copolymer, i.e. a copolymer comprising structural units (moieties) derived from ketene acetals and structural units (moieties) derived from crotonic esters], which copolymer allows for multiple applications and is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, according to Claim 1, respectively; further and especially advantageous embodiments of the inventive method are the subject-matter of the respective dependent method claims.

Furthermore, according to a **second** aspect of the present invention, the present invention also relates to a copolymer, especially to a copolymer based on ketene acetals and crotonic esters ( = a ketene acetal / crotonic copolymer), particularly to a copolymer comprising structural units (moieties) derived from ketene acetals and structural units (moieties) derived from crotonic esters, particularly appropriate for use as a preferably degradable ingredient or component of adhesives, coating materials, lubricants, agricultural products, household cleaners, inks, personal care products, cosmetics, pharmaceuticals, packagings, drug delivery systems or the like, as defined in Claims 8 and 9, respectively, wherein further and especially advantageous embodiments of the inventive copolymer are the subject-matter of the respective dependent claims.

Moreover, according to a **third** aspect of the present invention, the present invention also relates to a polymeric composition, particularly appropriate for use as a preferably degradable ingredient or component of adhesives, coating materials, lubricants, agricultural products, household cleaners, inks, personal care products, cosmetics, pharmaceuticals, packagings, drug delivery systems or the like, as defined in Claim 13.

In addition, according to a **fourth** aspect of the present invention, the present invention also relates to various inventive uses of the copolymers of the present invention and of the polymeric composition of the present invention, respectively, as defined in Claims 14 and 15.

Further, according to a **fifth** aspect of the present invention, the present invention also relates to an adhesive, especially a pressure-sensitive adhesive, especially degradable or removable under defined conditions, particularly under mild or moderate conditions, especially under the conditions used during recycling or cleaning processes, preferably under neutral or basic (alkaline) conditions, as defined in Claim 16.

Moreover, according to a **sixth** aspect of the present invention, the present invention also relates to a coating material, especially degradable or removable under defined conditions, particularly under mild or moderate conditions, especially under the conditions used during recycling or cleaning processes, preferably under neutral or basic (alkaline) conditions, particularly a coating material selected from paints, lacquers, varnishes, colors, impregnations, glazes, enamels, finishes and protective coatings, as defined in Claim 17

Furthermore, according to a **seventh** aspect of the present invention, the present invention also refers to a product as defined in Claim 18, which product is selected from the group consisting of (i) lubricants; (ii) agricultural products, especially selected among seeds and seed-related products, soil treatment agents, soil conditioners and fertilizers, particularly seed coatings or soil conditioners; (iii) household cleaners, especially laundry detergents and handwashings; (iv) inks; (v) personal care products, especially face and body care products; (vi) cosmetics; (vii) pharmaceuticals; (viii) packagings, especially food and other packagings; (ix) drug delivery systems.

Before the present invention will be described more in detail hereinafter, the following general remarks are given: It will be appreciated and it goes without saying that, in the following, features, embodiments, configurations or the like which are described or cited hereinafter for just one aspect of the present invention or for the purpose of avoiding repetitions do, of course, also apply correspondingly and *mutatis mutandis* in relation to all other aspects of the present invention.

Moreover, any values, numbers, figures, ranges, parameters and the like indicated hereinafter may be determined or ascertained, in principle, by standardized or expressly specified determination methods or else by determination methods well known per se to those skilled in the art.

Further, in relation to any hereinbelow recited relative or percentage-based indications, in particular weight-based amounts, it goes without saying that these indications are, in the context of the present invention, to be selected and/or to be combined by a person skilled in the art such that the resulting sum total - including where applicable any further components/ingredients - always results in 100 % or 100 wt.%, respectively.

Above all, in this respect, it goes without saying that combinations of below described features characterizing the present invention and being of same preference level are preferred (e.g. combinations of same preference levels for definitions of different substituents of the same chemical formula, combinations of same preference levels for indication of amounts or ratios for different structural units or moieties etc.).

Having stated this and with these provisions, the present invention will be described more in detail hereinafter.

## DETAILED DESCRIPTION OF THE INVENTION

According to a **first** aspect of the present invention, the present invention refers to a method for producing a copolymer based on ketene acetals and crotonic esters, which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems,

wherein the method comprises producing, via radical polymerization, a copolymer obtainable by copolymerizing monomers (moieties) (i), (ii) and optionally (iii) according to the following definition and each being different from one another:

(i) at least one first ethylenically unsaturated monomer selected from cyclic ketene acetals according to general formula (I)

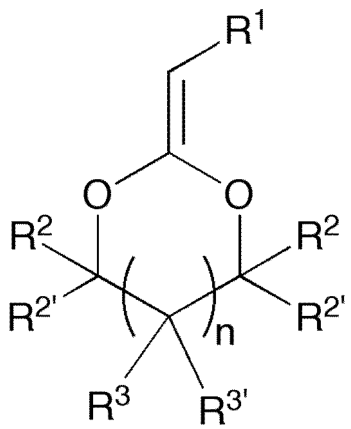

(I)

wherein in general formula (I):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and

$R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;

- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(ii) at least one second ethylenically unsaturated monomer selected from crotonic compounds according to general formula (II)

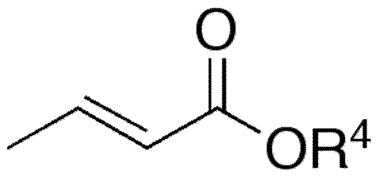
(II)

wherein in general formula (II) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl and even more preferably denotes $C_1$-$C_{20}$-alkyl, especially $C_1$-$C_{20}$-alkyl, preferably $C_2$-$C_{10}$-alkyl, more preferably $C_2$-$C_8$-alkyl;

(iii) optionally, at least one third ethylenically unsaturated monomer being different from (i) and (ii) and comprising at least one ethylenically unsaturated bond;

wherein radical polymerization is performed as an alternating radical ring-opening polymerization with partial ring-opening of (i) the at least one first ethylenically unsaturated monomer selected from cyclic ketene acetals according to general formula (I);
wherein ring-opening is induced and/or takes place for 10 % to 99 % of (i) the at least one first ethylenically unsaturated monomers selected from cyclic ketene acetals according to general formula (I),
wherein radical polymerization is performed as a bulk polymerization or is performed in at least one aprotic water-free organic solvent.

Thus, in the case of the present invention, the inventive method leads to a copolymer comprising, within the copolymer (i.e. within the copolymeric structure), structural units derived from above-defined monomers (i) and (ii) and optionally (iii).

Surprisingly, as applicants have unexpectedly found out, the aforementioned monomeric species (i) and (ii) (i.e. the at least one first ethylenically unsaturated monomer selected from cyclic ketene acetals (i), on the one hand, and the at least one second ethylenically unsaturated monomer selected from crotonic compounds (ii), on the other hand, and optionally the above-defined at least one third ethylenically unsaturated monomer (iii)), on behalf of the inventive method, undergo copolymerization with high conversion rates and in high yields. This is even more surprising since the respective monomers (i) and (ii) each undergo homopolymerization with very low conversion rates and very low yields only. **In** other words, although monomers (i) and (ii), on behalf of homopolymerization, hardly react with themselves, they surprisingly copolymerize according to the inventive method with excellent conversion rates and yields.

Furthermore, which is also surprising is the fact that the aforementioned monomeric species (i) and (ii) and optionally (iii) are copolymerized in an alternating way, thus leading to so-called alternating copolymers where the structural units derived from the above-defined monomers (i) and (ii) and optionally (iii) are arranged in an alternating way in the resulting copolymer. This leads to the specific characteristics of the resulting inventive copolymers which thus possess the required performance properties evenly distributed over the whole copolymeric structure, which is particularly advantageous for the various usages and applications of the inventive copolymers. Due to the alternating radical copolymerization process on behalf of the present method the monomeric units (i) and (ii) and optionally (iii) are evenly distributed over the whole copolymeric structure.

Above all, according to the inventive method, radical polymerization is performed with partial (i.e. only partial, i.e.

not complete) ring-opening of the monomer structure (i) selected from cyclic ketene acetals, which partial ring-opening leads to linear and, above all, degradable, especially biodegradable, ester moieties within the copolymeric structure. Partial ring-opening means that ring-opening does not occur completely, i.e. not for all monomers (i) selected from cyclic ketene acetals and participating in the polymerization reaction; in other words, for this remaining or residual part (fraction) of monomers (i) selected from cyclic ketene acetals polymerization occurs under ring-retention.

This means in other words that, according to the inventive method, radical polymerization is performed with only partial ring-opening of the monomer structure (i) selected from cyclic ketene acetals (i.e. excluding complete ring-opening, i.e. excluding that for all species of monomer species (i) ring-opening occurs during polymerization) whereby for the residual or remaining part (fraction) of the monomers (i) radical polymerization is performed under ring-retention of the cyclic ketene acetals of monomer species (i). In other words, the term "partial" with respect to the ring-opening refers to the total amount of monomers (i), i.e. only a certain part (fraction) of the total amount of monomers (i) undergoes ring-opening of the cyclic acetal structure (i.e. of the acetal ring) during polymerization whereas the residual or remaining part (fraction) of the monomers (i) are polymerized under ring-retention.

Particularly, due to the fact that, on behalf of the inventive method, only partial ring-opening of the cyclic ketene acetal structure of monomer (i) is induced, the resulting inventive copolymers comprise both structural units derived from above-defined monomer (i) having a linear chain as a consequence of ring-opening and, additionally, also structural units derived from above-defined monomer (i) having still a ring-structure since ring-opening is only induced partially. This leads to a very particular and unique profile of characteristics and properties of the resulting copolymers, which are determined by these two different structural units derived from above-defined monomer (i) (i.e. linear moieties comprising degradable or cleavable ester bonds, on the one hand, and moieties comprising the maintained non-cleavable ring-structure, on the other hand).

The fact that, according to the inventive method, radical polymerization is performed with only partial ring-opening of the monomer structure (i) selected from cyclic ketene acetals (i.e. not for all monomers (i) used as starting material but only for a certain part (i.e. fraction) of the overall starting amount of monomers (i)) leads to the fact that degradability of the resulting copolymer is not too excessive since due to partial ring-retention polymerization of monomer species (i) also a non-cleavable and/or non-degradable ring-structure resulting from monomer (i) is obtained in the resulting copolymer. Above all, by controlling the polymerization reaction it is thus possible to control the ring-opening degree or percentage and thus the degradability degree and/or the cleavability degree of the resulting copolymer.

Thus, on behalf of the inventive method, radical polymerization is performed as an alternating radical partial ring-opening copolymerization with partial ring-opening of the cyclic ketene acetal structure of monomer (i).

As will be delineated hereinafter, in more detail, the percentage or degree of ring-opening of monomeric structure (i) can be controlled in a purposeful way. Hereby, the alternating radical polymerization of the cyclic ketene acetal monomers (i) under partial ring-opening allows for an efficient access to tunable or tailorable functional polyester copolymers of the present invention.

Due to the specific structure in the resulting copolymer as created by partial ring-opening of the cyclic ketene acetal structure of monomers (i), the resulting copolymer is degradable, especially biodegradable, under defined conditions since the functional ester groups created by ring-opening reaction can be easily cleaved under defined conditions.

Degradability of the resulting inventive copolymers can be easily controlled, inter alia, by the ring-opening degree or percentage and/or by the molar ratios of the starting monomers (i) and (ii) and optionally (iii) used. For instance, higher degrees of ring-opening and higher molar amounts of monomeric structure (i) lead to an enhanced degradability or cleavability of the resulting copolymer whereas in case of lower degrees of ring-opening and lower molar amounts of monomeric structure (i) cause a reduced tendency of the resulting copolymer as to degradability or cleavability.

In addition, further pairing above-defined monomers (i) and (ii) with a third above-defined monomer (iii) on behalf of the inventive copolymerization process allows for an even wider structural flexibility as to the resulting copolymers. This improves the possibility of tuning or tailoring the copolymers with respect to their respective applications. This also gives the opportunity to produce copolymers having the ability to be degraded easily, which is particularly of interest in many applications where a single use of the polymeric materials is intended.

On the whole, the inventive method provides, for the first time, an efficient and high-performance technique for providing degradable copolymers of the aforementioned type under economic and environmentally compatible conditions.

Moreover, the copolymers of the present invention may be produced with high contents of biobased starting materials, above all with respect to the crotonic monomers (ii). Thus, the resulting copolymers of the present invention are at least partially biobased, particularly comprising a high biobased content, and thus possess a high environmental compatibility and a high biocompatibility (particularly since, in addition, the copolymers are also degradable, especially biodegradable, as already explained hereinabove).

Apart from this, the present invention, especially the inventive method and the copolymers obtainable therefrom as well as their various uses and applications, is linked with a multitude of further advantages and particularities, which are

a clear indication for patentability, particularly inventiveness.

The inventive method produces copolymers which are especially appropriate for a widespread or even universal use (i.e. for a multitude of different usages and applications), wherein the aforementioned disadvantages and/or drawbacks of the prior art should be at least partially avoided or even at least essentially overcome.

Particularly, the inventive method produces copolymers which are degradable, especially biodegradable, under defined conditions (e.g. particularly under mild or moderate conditions, especially under the conditions used during recycling or cleaning processes, e.g. under neutral or basic / alkaline conditions) and which are especially appropriate for a widespread or even universal use (i.e. for a multitude of different usages and applications). In addition, as delineated hereinabove, the copolymers possess a high biobased content.

Especially, the inventive method of production is compatible with environmental requirements and constraints, especially avoiding the use of deleterious and/or toxic ingredients or materials (such as e.g. volatile organic compounds VOCs etc.) and not leading to highly polluted wastes. In case that the inventive method is performed as a bulk polymerization process even any kind of solvent may be avoided. Furthermore, the inventive method is economic and cost-efficient and can be easily implemented and performed even on an industrial or large-scale level.

In addition, the inventive method may be performed under relatively mild or moderate conditions, especially moderate temperatures, so that it is quite moderate as to energy consumption if compared to prior art methods.

The resulting copolymers provide good or even superior performance and application properties while at the same time being environmentally compatible and easy to use and to apply and being producible in an economic way.

Above all, the resulting copolymers are especially appropriate for a widespread or even universal use (i.e. allow a multitude of different usages and applications) and additionally are degradable, especially biodegradable, under defined conditions (particularly under mild or moderate conditions, especially under the conditions used during recycling or cleaning processes, e.g. under neutral or basic / alkaline conditions) and, at the same time, possess good or even superior performance properties.

According to a preferred embodiment of the present invention, above-defined monomer (i) may be 2-methylene-1,3-dioxepane (MDO) and monomer (ii) is a crotonic acid ester.

The monomer 2-methylene-1,3-dioxepane (MDO) belongs to the group of cyclic ketene acetals, i.e. a group of monomers which have the ability to undergo β-scission (i.e. ring-opening polymerization) and radical incorporation into carbon-carbon double bonds (i.e. C=C double bonds) of other vinyl monomers, thus creating ester bonds in the main chain of the copolymer through a radical mechanism. In addition to radical ring opening polymerization, cyclic ketene acetals might also be polymerized by ring-retention polymerization, which does not yield ester groups in the backbone and hence non-degradable polymers are formed. Cycles of six members in the structure of cyclic ketene acetals (CKAs) and higher temperatures favor ring-opening polymerization versus ring-retention, as well as the use of vinylic comonomers. The presence of the poly(caprolactone)-like structure in the backbone gives MDO copolymers the ability to degrade through hydrolysis. However, the reactivity of MDO with common commercial monomers is very unfavorable (see e.g. F. Wenzel et al., Ind. Eng. Chem. Res. 2021, 60 (29), 10479-10488 "Kinetics of Radical Ring Opening Polymerization of the Cyclic Ketene Acetal 2-Methylene-1,3-dioxepane with Vinyl Monomers"; cf. also: https://doi.org/10.1021/acs.iecr.0c04117*)* and thus makes the production of homogeneous copolymers (a quality which is essential for their degradability) very challenging. However, as completely surprisingly discovered by applicants, on behalf of the present invention MDO together with crotonic monomers copolymerizes with excellent conversion rates and yields under partial ring-opening (i.e. thus, in turn, under partial ring-retention) in order to yield alternating MDO/CA copolymers.

On the other hand, crotonic acid (CA) is an unsaturated carboxylic acid. Indeed, it is an isomer of methacrylic acid which is the precursor of acrylate monomers which again are used to produce a large variety of polymeric materials. Interestingly, crotonic acid can be obtained from the thermal degradation of poly-(3-hydroxybutyrate) which is synthesized by bacteria from biomasses and can therefore be easily obtained 100 % from renewable sources (see e.g. A. Parodi et al., Green Chemistry 2021, 23 (9), 3420-3427 "Bio-based crotonic acid from polyhydroxybutyrate: synthesis and photocatalyzed hydroacylation"; cf. also : https://doi.org/10.1039/d1gc00421b*)*. In a similar manner to its oil-sourced counterparts (e.g. methacrylic acid), crotonic acid can be functionalized with low molecular weight (above all biobased) alcohols to produce esters known as crotonic acid esters or synonymously crotonates, which can be used in free radical polymerizations as monomers originating from completely biobased sources. Unfortunately, crotonates are hardly polymerizable and, if at all, then only in the presence of catalysts (see e.g. Y. Takenaka et al., Macromolecules 2019, 52, 11, 4052-4058 "Group-Transfer Polymerization of Various Crotonates Using Organic Acid Catalysts"; cf. also: https://doi.org/10.1021/acs.macromol.9b00272*)*. Furthermore, crotonic acid and crotonate ester based polymers are non-biodegradable. Attempts of copolymerization have been made only with non-biodegradable monomers which have also very unfavorable reactivities.

MDO and CA derivatives hardly react either with themselves or with commercial monomers such as acrylates, methacrylates and vinylacetates. However, unexpectedly, applicants have found that MDO and CA derivatives are able to form an at least essentially perfectly alternating copolymer when copolymerized together (and this even at high conversion levels in short times and with excellent yields). This unexpected finding opens the possibility to the synthesize degradable

copolymers the glass transition temperature of which can be tuned by adjusting the structure of the cyclic ketene acetals or the side chain of the crotonate.

For instance, applicants were able to synthesize various at least 50 % biobased and biodegradable MDO/crotonate copolymers on the basis of which various applications can be exploited.

Moreover, pairing crotonate monomers and MDO allows for an even more efficient copolymerization with a third monomer (if compared to their individual incorporation). This opens the portfolio of copolymers which can be produced with the ability to be degraded which again is of strong interest in many applications that require a single use of polymeric materials.

Having stated this, the present invention and its particular embodiments will be explained in more detail hereinbelow.

Thus, in the following, the present invention, namely first of all the inventive method, will be explained in more detail.

As delineated hereinabove, according to a first aspect of the present invention, the present invention refers to a method for producing a copolymer based on ketene acetals and crotonic esters, which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems,

wherein the method comprises producing, via radical polymerization, a copolymer obtainable by copolymerizing monomers (moieties) (i), (ii) and optionally (iii) according to the following definition and each being different from one another:

(i) at least one first ethylenically unsaturated monomer selected from cyclic ketene acetals according to general formula (I)

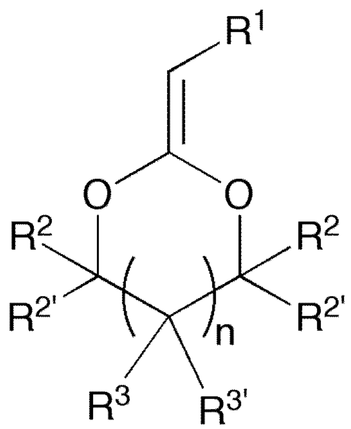

(I)

wherein in general formula (I):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(ii) at least one second ethylenically unsaturated monomer selected from crotonic compounds according to general formula (II)

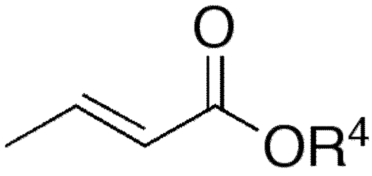

(II)

wherein in general formula (II) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl and even more preferably denotes $C_1$-$C_{20}$-alkyl, especially $C_1$-$C_{20}$-alkyl, preferably $C_2$-$C_{10}$-alkyl, more preferably $C_2$-$C_8$-alkyl;

(iii) optionally, at least one third ethylenically unsaturated monomer being different from (i) and (ii) and comprising at least one ethylenically unsaturated bond;

wherein radical polymerization is performed as an alternating radical ring-opening polymerization with partial ring-opening of (i) the at least one first ethylenically unsaturated monomer selected from cyclic ketene acetals according to general formula (I);

wherein ring-opening is induced and/or takes place for 10 % to 99 % of (i) the at least one first ethylenically unsaturated monomers selected from cyclic ketene acetals according to general formula (I),

wherein radical polymerization is performed as a bulk polymerization or is performed in at least one aprotic water-free organic solvent.

The below described particular and preferred embodiments of the method of the present invention allow for a particularly economic and high-performance implementation of the inventive method, especially leading to high conversion rates and/or high yields while, at the same time, being also energetically efficient and environmentally compatible.

According to a particular embodiment of the present invention, it is preferred for monomer (moiety) (i) when (i) the at least one first ethylenically unsaturated monomer selected from cyclic ketene acetals according to general formula (I) is selected from the following compounds:

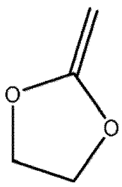
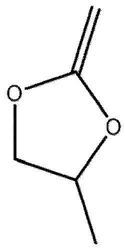
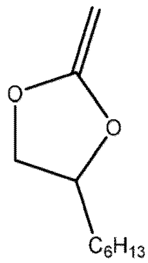
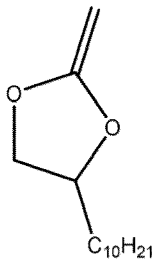
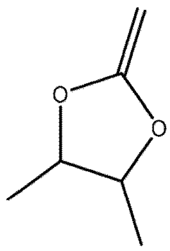
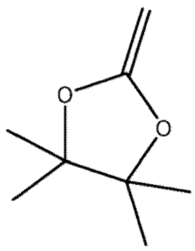

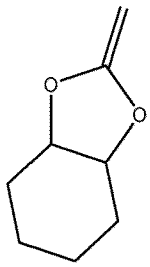
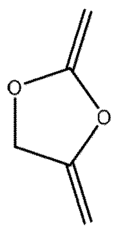
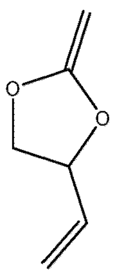
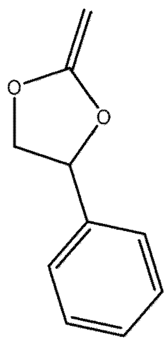
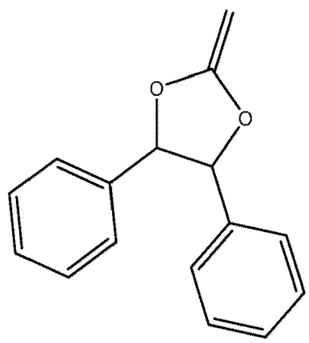

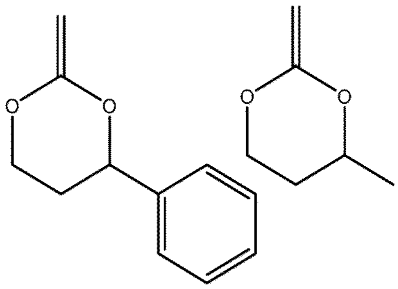
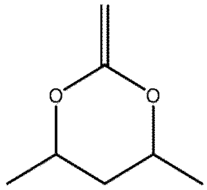
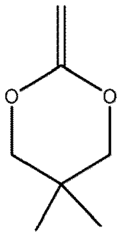
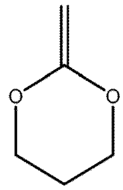

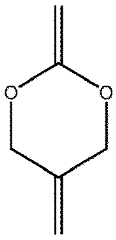
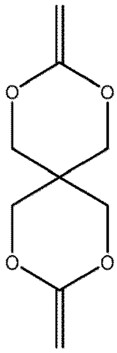
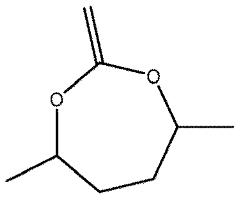
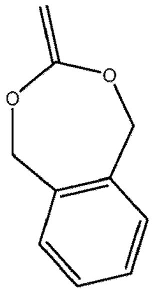
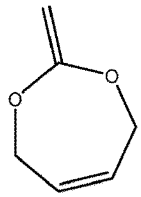

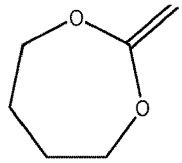

Furthermore, according to another particular embodiment of the present invention, it is also preferred for monomer (moiety) (i) when (i) the at least one first ethylenically unsaturated monomer is selected from cyclic ketene acetals according to general formula (I)

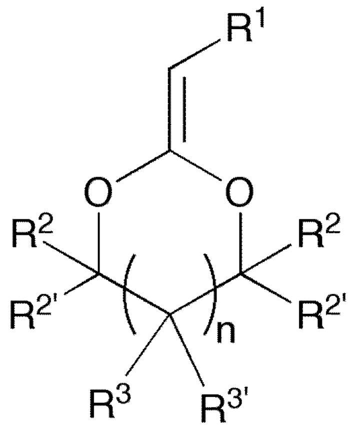

(I)

wherein in general formula (I):

- n is 2;
- $R^1$ denotes hydrogen or $C_1$-$C_{12}$-alkyl, preferably hydrogen;
- $R^2$ and $R^{2'}$, independently from each other, each denote hydrogen, $C_1$-$C_{12}$-alkyl, phenyl or vinyl, preferably hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-

cycloaliphatic ring while $R^{3'}$ is hydrogen.

Moreover, according to yet another particular embodiment of the present invention, it is also preferred for monomer (moiety) (i) when (i) the at least one first ethylenically unsaturated monomer selected from cyclic ketene acetals according to general formula (I) is 2-methylene-1,3-dioxepane (MDO):

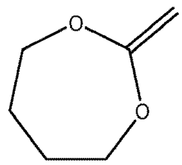

When the above-defined preferred embodiments as to monomer (moiety) (i) are realized, particularly high conversion rates and/or yields are reached. Furthermore, when realizing the above-defined preferred embodiments as to monomer (moiety) (i), high-performance copolymers result, especially with respect to their intended uses and applications as defined hereinabove.

According to the present invention, monomer (moiety) (ii) is

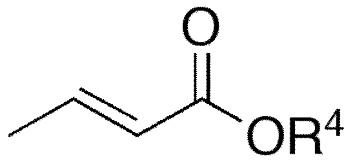

(II)

wherein in general formula (II) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

Furthermore, according to another particular embodiment of the present invention, it is preferred for monomer (moiety) (ii) when (ii) the at least one second ethylenically unsaturated monomer selected from crotonic compounds according to general formula (II) is

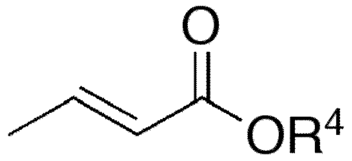

(II)

wherein in general formula (II) $R^4$ denotes ethyl, butyl, especially n-butyl, octyl, especially 2-octyl, (iso)bornyl or stearyl, preferably ethyl, n-butyl or 2-octyl.

Moreover, according to yet another particular embodiment of the present invention, it is preferred for monomer (moiety) (ii) when (ii) the at least one second ethylenically unsaturated monomer selected from crotonic compounds according to general formula (II) is at least partially biobased and/or at least partially non-oil-based, preferably (completely) biobased and/or (completely) non-oil-based. This ensures an excellent environmental compatibility and a high degree of sustainability.

Also, according to a further particular embodiment of the present invention, it is preferred for monomer (moiety) (ii) when (ii) the at least one second ethylenically unsaturated monomer selected from crotonic compounds according to general formula (II) the radical $R^4$ is biobased and/or derived from a biobased alcohol. As stated hereinbefore, this ensures an excellent environmental compatibility and a high degree of sustainability.

When the above-defined preferred embodiments as to monomer (moiety) (ii) are realized, particularly high conversion rates and/or yields are reached. Furthermore, when realizing the above-defined preferred embodiments as to monomer (moiety) (ii), high-performance copolymers result, especially with respect to their intended uses and applications as defined hereinabove. Also an excellent environmental compatibility and a high degree of sustainability are ensured.

According to a particular embodiment of the present invention, it is preferred for optional monomer (moiety) (iii)

when (iii) the optional at least one third ethylenically unsaturated monomer being different from monomers (i) and (ii) and comprising at least one ethylenically unsaturated bond is selected from the group consisting of acrylic, methacrylic, vinylic and styrenic monomers.

According to another particular embodiment of the present invention, it is preferred for optional monomer (moiety) (iii) when (iii) the optional at least one third ethylenically unsaturated monomer being different from (i) and (ii) and comprising at least one ethylenically unsaturated bond is selected from the group consisting of ($C_1$-$C_{10}$-alkyl) (meth) acrylates, vinylacetates and styrenes, preferably ($C_1$-$C_{10}$-alkyl) (meth)acrylates and vinylacetates.

When the above-defined preferred embodiments as to optional monomer (moiety) (iii) are realized, particularly high conversion rates and/or yields are reached. Furthermore, when realizing the above-defined preferred embodiments as to optional monomer (moiety) (iii), high-performance copolymers result, especially with respect to their intended uses and applications as defined hereinabove.

As explained hereinabove, the method of the present invention comprises producing, via radical polymerization a copolymer obtainable by copolymerizing above-defined monomers (moieties) (i) and (ii) and optionally (iii).

In this respect, according to the present invention, radical polymerization is performed with partial (i.e. only partial, i.e. not complete) ring-opening of (i) the at least one first ethylenically unsaturated monomer selected from cyclic ketene acetals according to above general formula (I). In other words, as already explained hereinabove, partial (i.e. only partial) ring-opening of the cyclic structure (i.e. of the acetal ring structure) present in the cyclic ketene acetals of monomers (i) during polymerization means that for the residual or remaining part (fraction) of the monomers (i) (i.e. the part or fraction which does not undergo ring-opening polymerization) polymerization is performed under ring-retention. According to the present invention, only partial ring-opening polymerization is intended and desired since this prevents an excessive degradability and/or cleavability of the resulting copolymers since the copolymeric units present in the obtained copolymer and resulting from ring-retention polymerization of monomer (i) may not be cleaved or degraded (i.e. in contrast to the (poly)ester bonds of the copolymeric units present in the obtained copolymer and resulting from ring-opening polymerization of monomer (i)).

In other words, according to the present invention, during radical polymerization partial (i.e. only partial or not complete) ring-opening of (i) the at least one first ethylenically unsaturated monomer selected from cyclic ketene acetals according to above general formula (I) is induced and/or performed.

This leads to the particular structure of the resulting copolymer and, thus, to the particular characteristics and properties thereof since the resulting copolymer consequently comprises both structural units derived from above-defined monomer (i) having a linear chain as a consequence of ring-opening <u>and,</u> additionally, also structural units derived from above-defined monomer (i) having still a ring-structure since ring-opening is only induced and/or performed partially. This leads to a very particular and unique profile of characteristics and properties of the resulting copolymer, which are determined by both aforementioned structural units derived from above-defined monomer (i).

It should be noted that it is in particular the structural unit derived from above-defined monomer (i) having a linear chain as a consequence of ring-opening which determines the degradability properties of the resulting copolymer since the ester bonds being present in this linear chain allow for a purposeful cleavage under defined conditions, thus leading to a degradability of the copolymer. Consequently, by controlling the degree or percentage of ring-opening during polymerization, the degradability or cleavability of the resulting copolymer may be purposefully controlled and thus purposefully tailored or tuned.

As further explained in more detail hereinafter, ring-opening, especially ring-opening percentage (i.e. the degree of ring-opening during polymerization), may be controlled and/or tailored and/or tuned by defined or specific measures (such as e.g. by polymerization conditions, especially temperature and/or pressure and/or duration of polymerization, presence or absence of a solvent, selection of polymerization initiator and/or selection of kind (i.e. nature, species) and amounts and amount ratios of monomers (i), (ii) and optionally (iii)). Also selection of the ring size of the rings (i.e. cyclic structures) present in the cyclic ketene acetals of monomers (i) may control the degree of ring-opening during polymerization, as already explained hereinabove (e.g. cycles of six members in the structure of cyclic ketene acetals favor ring-opening polymerization versus ring-retention).

According to the present invention, radical polymerization is performed as an alternating radical (partial) ring-opening polymerization with partial (i.e. only partial) ring-opening of (i) the at least one first ethylenically unsaturated monomer selected from cyclic ketene acetals according to general formula (I). As further explained in more detail hereinafter, the term "alternating" in this respect particularly means that the structural unites derived from above-defined monomers (i) and (ii) and optionally (iii) are arranged in an alternating way in the resulting copolymer. Especially, this may be further controlled and/or tailored and/or tuned by specific or purposeful selection of the respective amounts and amount ratios of monomers (i), (ii) and optionally (iii).

As stated hereinabove, according to the present invention, radical polymerization is performed with partial (i.e. only partial) ring-opening of (i) the at least one first ethylenically unsaturated monomer selected from cyclic ketene acetals according to above general formula (I). In other words, according to a typical embodiment of the present invention, during during radical polymerization partial ring-opening of (i) the at least one first ethylenically unsaturated monomer selected

from cyclic ketene acetals according to above general formula (I) is induced and/or performed. As stated hereinabove, the term "partial" with respect to the ring-opening refers to the total amount of monomers (i), i.e. only a certain part (fraction) of the total amount of monomers (i) undergoes ring-opening of the cyclic acetal structure (i.e. of the acetal ring) during polymerization whereas the residual or remaining part (fraction) of the monomers (i) are polymerized under ring-retention.

In this respect, ring-opening is induced and/or takes place for at least 10 %, especially at least 15 %, preferably at least 20 %, more preferably at least 25 %, of (i) the at least one first ethylenically unsaturated monomers selected from cyclic ketene acetals according to above general formula (I) (i.e. based on monomers (i) and/or i.e. based on the total of monomers (i)).

Furthermore, in this respect, ring-opening is induced and/or takes place for at most 99 %, especially at most 98 %, preferably at most 95 %, more preferably at most 90 %, of (i) the at least one first ethylenically unsaturated monomers selected from cyclic ketene acetals according to above general formula (I) (i.e. based on monomers (i) and/or i.e. based on the total of monomers (i)).

According to the method of the present invention, ring-opening is induced and/or takes place for 10 % to 99 %, especially 15 % to 98 %, preferably 20 % to 95 %, more preferably 25 % to 90 %, of (i) the at least one first ethylenically unsaturated monomers selected from cyclic ketene acetals according to above general formula (I) (i.e. based on monomers (i) and/or i.e. based on the total of monomers (i)).

As already stated hereinabove ring-opening, especially ring-opening percentage (i.e. the degree of ring-opening during polymerization, that is which fraction or part of monomers (i) of the total monomer(i) undergoes ring-opening), may be controlled and/or tailored and/or tuned by polymerization conditions, especially temperature and/or pressure and/or duration of polymerization, by presence or absence of a solvent, by selection of polymerization initiator and/or by selection of kind (i.e. nature, species) and amounts and/or amount ratios of monomers (i), (ii) and optionally (iii), and/or by ring-size selection of monomer (i).

According to the present invention, the degree or percentage of ring-opening may be easily determined via nuclear magnetic resonance spectroscopy (NMR) (i.e. by the $^1$H-NMR spectroscopic data of the resulting copolymer). For, as stated hereinbefore, the resulting copolymer comprises both structural units derived from above-defined monomer (i) having a linear chain as a consequence of ring-opening and, additionally, also structural units derived from above-defined monomer (i) having still a ring-structure, which different structural units generate different signals or peaks in the respective $^1$H-NMR spectrum, wherein from the intensity of these signals or peaks their relative occurrence (i.e. percentage) in the copolymer can be calculated, which again correlates directly with the ring-opening percentage. The determination and calculation method as such is a mere routine process for the skilled practitioner so that no further details need to be given.

As it is clear to the skilled practitioner, the above indications as to the degree or percentage of ring-opening refers the total amount of rings being (originally) present in the cyclic ketene acetals of monomer species (i) used as a starting monomer. For instance, a ring-opening percentage of e.g. 35 % means that 35 % of the total starting amount of monomers (i) undergo polymerization under ring-opening whereas the remaining 65 % of the total starting amount of monomers (i) undergo polymerization under ring-opening.

Especially, all above percentage indications as to the ring-opening refer to the (total) number of molecular species of monomer (i) and thus indicate a number fraction which again is identical to the molar amount fraction (i.e. mol-% based percentage indications) since these two indications (number of molecules, on the one hand, and molar amount of molecules, on the other hand) are proportionate.

Thus, as it is clear to the skilled practitioner, the above indications as to the degree or percentage of ring-opening are determined by $^1$H-NMR spectroscopy (i.e. by the $^1$H-NMR spectroscopic data of the resulting copolymer) and are based on the total amounts or numbers of rings being (originally) present in monomer (i) (i.e. i being (originally) present in the cyclic ketene acetals of monomer species (i) used as a starting monomer).

According to a particular embodiment of the present invention, the present invention is directed to a method for producing a copolymer based on ketene acetals and crotonic esters (= a ketene acetal / crotonic copolymer, i.e. a copolymer comprising moieties derived from ketene acetals and from crotonic esters), which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially to the method according to the above description and definition,

wherein the method comprises producing, via radical polymerization a copolymer obtainable by copolymerizing monomers (moieties) (i), (ii) and optionally (iii) according to the following definition and each being different from one another:

(i) at least one first ethylenically unsaturated monomer selected from cyclic ketene acetals according to general formula (I)

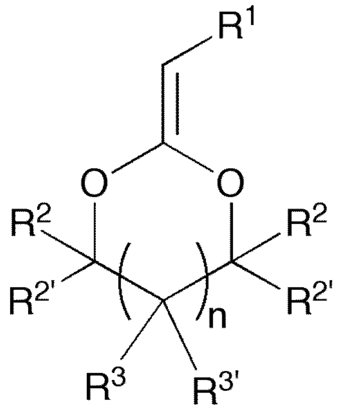

(I)

wherein in general formula (I):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(ii) at least one second ethylenically unsaturated monomer selected from crotonic compounds according to general formula (II)

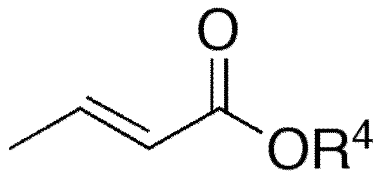

(II)

wherein in general formula (II) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl and even more preferably denotes $C_1$-$C_{20}$-alkyl, especially $C_1$-$C_{20}$-alkyl, preferably $C_2$-$C_{10}$-alkyl, more preferably $C_2$-$C_8$-alkyl;

(iii) optionally, at least one third ethylenically unsaturated monomer being different from (i) and (ii) and comprising at least one ethylenically unsaturated bond (i.e. carbon-carbon double bond);

wherein radical polymerization is performed with partial ring-opening of (i) the at least one first ethylenically unsaturated monomer selected from cyclic ketene acetals according to general formula (I); and/or wherein during radical polymerization partial ring-opening of (i) the at least one first ethylenically unsaturated monomer selected from cyclic ketene acetals according to general formula (I) is induced and/or performed;

wherein ring-opening is induced and/or takes place for 10 % to 99 %, especially 15 % to 98 %, preferably 20 % to 95 %, more preferably 25 % to 90 %, of (i) the at least one first ethylenically unsaturated monomers selected from cyclic ketene acetals according to general formula (I).

Also as to this particular embodiment of the present invention, all above definitions and explanations apply, especially with respect to the definition of monomers (i) and (ii) and optionally (iii) and with respect to polymerization as such.

According to a particular embodiment of the inventive method, radical polymerization may be performed in the (further) presence of (iv) at least one cross-linker (cross-linking agent). This particular embodiment has the advantage that, via the cross-linker (cross-linking agent) the molecular mass of the resulting copolymer may be controlled, especially tailored and/or tuned, particularly increased in a purposeful manner.

Especially, in this respect, the at least one cross-linker (cross-linking agent) may comprise at least two ethylenically unsaturated bonds (carbon-carbon double bonds). Especially, the at least one cross-linker (cross-linking agent) may be a di- or polyfunctional cross-linker comprising at least two ethylenically unsaturated bonds (carbon-carbon double bonds).

Furthermore, the at least one cross-linker (cross-linking agent) may especially be different from monomers (i) and (ii) and from optional monomer (iii).

Moreover, the at least one cross-linker (cross-linking agent) may be selected from the group consisting of (i) di(meth)acrylates; (ii) allyl (meth)acrylates, (iii) diallyl maleates; (iv) dicrotonates; and (v) oligoesters which comprise at least two ethylenically unsaturated bonds (carbon-carbon double bonds) and which further comprise moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and moieties (units) derived from lactide (3,6-dimethyl-1,4-dioxan-2,5-dion), particular as defined in WO 2021/058122 A1 (which latter is hereby incorporated by reference with its full disclosure, especially with respect to the definition of the cross-linker); as well as combinations thereof.

According to a particular embodiment of the inventive method, where radical polymerization is performed in the (further) presence of (iv) at least one cross-linker (cross-linking agent), it is especially preferred that the at least one cross-linker (cross-linking agent) is an oligoester, especially a (macro)monomer or oligomer, which comprises at least two ethylenically unsaturated bonds (carbon-carbon double bonds) and which further comprises moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and moieties (units) derived from lactide (3,6-dimethyl-1,4-dioxan-2,5-dion), particular as defined in WO 2021/058122 A1, wherein the moieties (units) derived from ε-caprolactone are represented by the following formula (1):

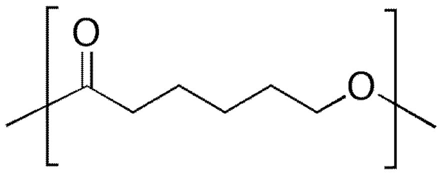

(1)

and that the moieties (units) derived from lactide are represented by the following formula (2):

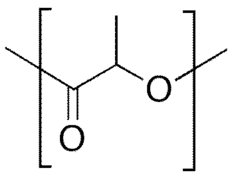

(2).

As delineated hereinabove, the inventive method may comprise producing, via radical polymerization a copolymer obtainable or obtained by copolymerizing monomers (moieties) (i) and (ii) and optionally (iii) each according to the above definition and each being different from one another as well as (iv) at least one cross-linker (cross-linking agent). Especially, in this respect, the at least one cross-linker (cross-linking agent) may comprise at least two ethylenically unsaturated bonds (carbon-carbon double bonds). Especially, the at least one cross-linker (cross-linking agent) may be a di- or polyfunctional cross-linker comprising at least two ethylenically unsaturated bonds (carbon-carbon double bonds). Furthermore, the at least one cross-linker (cross-linking agent) may especially be different from monomers (i) and (ii) and from optional monomer (iii). Moreover, the at least one cross-linker (cross-linking agent) may be selected from the group consisting of (i) di(meth)acrylates; (ii) allyl (meth)acrylates, (iii) diallyl maleates; (iv) dicrotonates; and (v) oligoesters which comprise at least two ethylenically unsaturated bonds (carbon-carbon double bonds) and which further comprise moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and

moieties (units) derived from lactide (3,6-dimethyl-1,4-dioxan-2,5-dion), particular as defined in WO 2021/058122 A1; as well as combinations thereof.

According to a particular embodiment of the inventive method, where radical polymerization is performed in the (further) presence of (iv) at least one cross-linker (cross-linking agent), it is especially preferred that the at least one cross-linker (cross-linking agent) is an oligoester, especially a (macro)monomer or oligomer, which comprises at least two ethylenically unsaturated bonds (carbon-carbon double bonds) and which further comprises moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and moieties (units) derived from lactide (3,6-dimethyl-1,4-dioxan-2,5-dion), particular as defined in WO 2021/058122 A1, wherein the moieties (units) derived from ε-caprolactone are represented by the following formula (1):

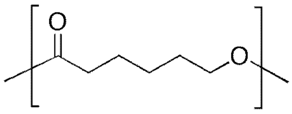

(1)

and that the moieties (units) derived from lactide are represented by the following formula (2):

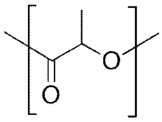

(2).

According to the present invention, on behalf of the inventive method, radical polymerization is performed as a free radical polymerization (FRP) or as a controlled radical polymerization (CRP), especially as a controlled radical polymerization (CRP) in the presence of a chain transfer agent (CTA), especially selected among RAFT agents, nitroxides and ATRP agents. Preferably, polymerization is performed as a free radical polymerization (FRP).

Usually, radical polymerization may be performed in the presence of at least one polymerization initiator, especially in the presence of at least one radical polymerization initiator.

Especially, in this respect, the at least one polymerization initiator, preferably the at least one radical polymerization initiator, may be selected from the group consisting of azo initiators, peroxides, photoinitiators and combinations thereof.

Especially, in this respect, the at least one polymerization initiator, preferably the at least one radical polymerization initiator, may be selected from the group consisting of (i) azo initiators, especially 2,2'-azobis(2-methylpropionitrile) (AIBN), 1,1'-azobis-(cyclohexanecarbonitrile), 2,2'-azobis(2-(2-imidazolin-2-yl)propane)dihydrochloride, 2,2-azobis(2-methylpropionamidine)dihydrochloride, 2,2'-azobis(2-amidin-propane)dihydrochloride, 2,2'-azobis(2-methyl-N-2-hydroxyethyl)propionamide, 2,2'-azobis(2-methylbutyronitrile), 2,2'-azobis(N-(2-carboxyethyl)-2-methylpropion-amidine)-n-hydrate, 2,2'-azobis(N-butyl-2-methyl-propionamide) (VAm-110), 2,2'-azobis(2-methylpropionamidine)dihydrochloride, 4,4'-azobis(4-cyanovaleric acid), 2,2'-azobis(2-(2-imidazolin-2-yl))propane dihydrochloride; (ii) peroxides, especially benzoyl peroxide (BPO), Bis(tert.-butylcyclohexyl)peroxidicarbonate, cumyl hydroperoxide, dimethyl-2,2'-azobis(isobutyrate), hydrogen peroxide (solution), tert.-butyl peroxide, tert.-butyl peroxybenzoate, tert.-butyl hydroperoxide, tert.-butyl perbenzoate, 3-chloroperbenzoic acid; (iii) photoinitiators, especially 2,2-dimethoxy-1,2-diphenylethan-1-one, 2-hydroxy-2-methyl-1-phenylpropanone, 1-hydroxycyclohexylphenylketone, benzophenone, isopropyl thioxanthone, 2-ethylhexyl-(4-N,N-dimethylamino)benzoate, ethyl-4-(dimethylamino)benzoate; (iv) redox oil-soluble initiator systems, especially above-defined peroxide such as benzoyl peroxide and N,N-dimethyl aniline or N,N-dimethyl-p-toluidine; and combinations thereof.

Especially, according to the inventive method, the at least one polymerization initiator, preferably the at least one radical polymerization initiator, may be selected from the group consisting of thermal polymerization initiators, redox polymerization initiators and combinations thereof, particularly organic persulfates, peroxides, hydroperoxides, perbenzoates, peralkanoates, azoinitiators and combinations thereof, more preferably selected from the group consisting of inorganic and/or organic persulfates and azobisisobutyronitrile (AIBN), particularly selected from the group consisting of inorganic persulfates of alkali or earth alkaline metals and azobisisobutyronitrile (AIBN), more particularly potassium persulfate (KPS) or azobisisobutyronitrile (AIBN).

According to a particular embodiment of the present invention, radical polymerization may be performed as a bulk polymerization and/or as a polymerization in a bulk. This embodiment is linked to the advantage that no solvent is used during polymerization, so that no solvent has to be removed at the end of the polymerization process.

However, according to an alternative embodiment of the inventive method, radical polymerization may also be

performed in at least one aprotic water-free organic solvent, preferably selected from the group consisting of 2,2,5,5-tertramethyloxolane (TMO), acetone, acetonitrile, benzene, chloroform, cyclohexane, dichloromethane, dimethylformamide, dimethylsulfoxide, dioxane, ethyl acetate, methyl ethyl ketone, tetrahydrofurane, toluene and xylene. Performing radical polymerization in at least one solvent, is linked to the advantage that polymerization may be controlled in a more purposeful manner and/or allows for a control of molecular mass distribution, especially polydispersity.

Usually, radical polymerization may be performed at elevated temperatures. Particularly, radical polymerization may be performed at temperatures of at least 40 °C, especially of at least 45 °C, preferably of at least 50 °C. Especially, radical polymerization may be performed at temperatures in the range of from 40 °C to 200 °C, especially in the range of from 45 °C to 175 °C, preferably in the range of from 50 °C to 150 °C, more preferably in the range of from 55 °C to 100 °C, more preferably in the range of from 60 °C to 95 °C.

In this respect, radical polymerization may be performed at ambient pressure (1 bar or 101.325 kPa), at reduced pressure or at elevated pressure, preferably at ambient pressure (1 bar or 101.325 kPa).

Furthermore, in this respect, radical polymerization may be performed for a duration in the range of from 0.01 to 48 hours, especially in the range of from 0.1 to 36 hours, preferably in the range of from 0.5 to 30 hours, more preferably in the range of from 0.75 to 24 hours, even more preferably in the range of from 1 to 24 hours, most preferably in the range of from 1 to 20 hours.

According to a usual embodiment of the present invention, monomers (i) and (ii) may be used in a molar ratio of [monomer (i)] : [monomer (ii)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

Moreover, according to a further usual embodiment of the present invention, monomers (i), (ii) and (iii) may be used in a molar ratio of [monomers (i) and (ii)] : [monomer (iii)] in the range of from 10 : 80 to 99 : 1, especially in the range of from 20 : 70 to 95 : 5, preferably in the range of from 30 : 60 to 90 : 10, more preferably in the range of from 40 : 60 to 80 : 30; particularly, however, with the proviso that monomers (i) and (ii) are used in a molar ratio of [monomer (i)] : [monomer (ii)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

As already delineated hereinabove, the method of the present invention results in producing a copolymer based on ketene acetals and crotonic esters, which copolymer comprises (i) structural units (moieties) derived from (cyclic) ketene acetals and (ii) structural units (moieties) derived from crotonic esters.

**In** this respect, the copolymer especially comprises (i) the structural units (moieties) derived from (cyclic) ketene acetals, on the one hand, and (ii) the structural units (moieties) derived from crotonic esters, on the other hand, at least partially in an alternating way and/or at least partially in the form of an alternating copolymer; in other words, especially, (i) the structural units (moieties) derived from (cyclic) ketene acetals, on the one hand, and (ii) the structural units (moieties) derived from crotonic esters, on the other hand, are at least partially arranged in an alternating way within the copolymer.

Especially, the copolymer may comprise (i) the structural units (moieties) derived from (cyclic) ketene acetals and (ii) the structural units (moieties) derived from crotonic esters in a molar ratio of [structural units derived from (cyclic) ketene acetals (i)] : [structural units (moieties) derived from crotonic esters (ii)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

Especially, the copolymer may comprise, as (i) the structural units (moieties) derived from cyclic ketene acetals, open-chained structural units and structural units comprising a spirocyclic substituent; preferably wherein, based on the copolymer, the open-chained structural units and the structural units comprising a spirocyclic substituent are present in a molar ratio of [structural unit comprising a spirocyclic substituent] : [open-chained structural unit] in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

Especially, the copolymer may further comprise, as optional structural units (moieties), (iii) structural units (moieties) derived from acrylic, methacrylic, vinylic or styrenic monomers, especially derived from ($C_1$-$C_{10}$-alkyl) (meth) acrylates, vinylacetates or styrenes, preferably ($C_1$-$C_{10}$-alkyl) (meth)acrylates and vinylacetates.

According to a particular embodiment of the inventive method, the inventive method results in producing a copolymer based on ketene acetals and crotonic esters, which copolymer comprises the following structural units:

(I) structural units of general formula (I A) and structural units of general formula (I B)

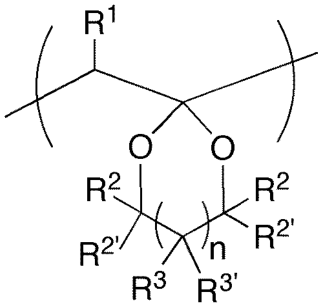

(I A)

and

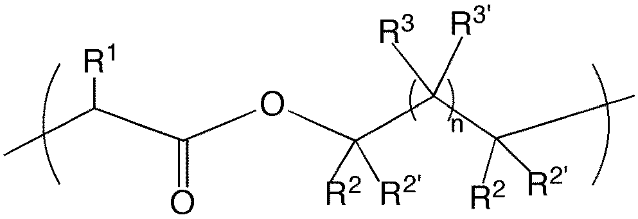

(I B)

wherein in general formulae (I A) and (I B):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(II) structural units of general formula (II A)

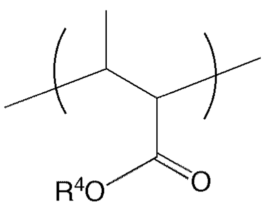

(II A)

wherein in general formula (II A) $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $- CH_2 - (O - CH_2 - CH_2)_{n'} - X$ or $- CH_2 - [O - CH(CH_3) - CH_2]_{n'} - X$ where X denotes hydroxyl, hydrogen or $C_1$-$C_8$-alkyl and where n' is an integer in the range of from 2 to 100,
- a radical $- (CH_2)_{m'} - Y$, where Y denotes hydroxyl or halogen and where m' is an integer in the range of from 2 to 8,
- a radical $- (CH_2)_{m''} - N R''_2$ where R", independently of one another, each denotes hydrogen or a linear or branched, saturated or unsaturated $C_1$-$C_{20}$-alkyl and where m" is an integer in the range of from 2 to 8,
- a radical $- CH_2 - C(O) - O - (C_1$-$C_{20}$-alkyl),

- a radical - $CH_2$ - C(O) - N $R'''_2$ where R''', independently of one another, each denotes hydrogen or a linear or branched, saturated or unsaturated $C_1$-$C_{20}$-alkyl,
- an (N-imidazolyl)-substituted $C_1$-$C_{20}$-alkyl.

According to a further particular embodiment of the inventive method, the inventive method results in producing a copolymer based on ketene acetals and crotonic esters, which copolymer comprises the following structural units:

(I) structural units of general formula (I A) and structural units of general formula (I B)

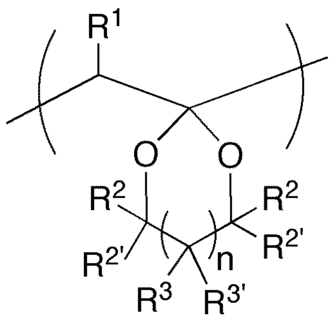

(I A)

and

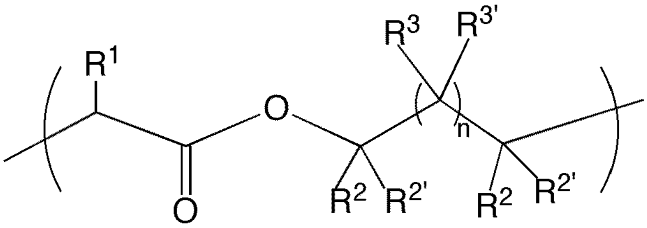

(I B)

wherein in general formulae (I A) and (I B):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(II) structural units of general formula (II A)

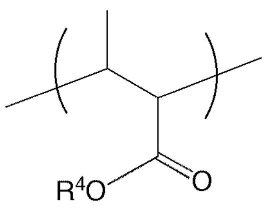

(II A)

wherein in general formula (II A) $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $- CH_2 - (O - CH_2 - CH_2)_{n'} - X$ or $- CH_2 - [O - CH(CH_3) - CH_2]_{n'} - X$ where X denotes hydroxyl, hydrogen or $C_1$-$C_8$-alkyl and where n' is an integer in the range of from 2 to 100,
- a radical $- (CH_2)_{m'} - Y$, where Y denotes hydroxyl or halogen and where m' is an integer in the range of from 2 to 8,
- a radical $- (CH_2)_{m''} - N R''_2$ where R", independently of one another, each denotes hydrogen or a linear or branched, saturated or unsaturated $C_1$-$C_{20}$-alkyl and where m" is an integer in the range of from 2 to 8,
- a radical $- CH_2 - C(O) - O - (C_1$-$C_{20}$-alkyl),
- a radical $- CH_2 - C(O) - N R'''_2$ where R‴, independently of one another, each denotes hydrogen or a linear or branched, saturated or unsaturated $C_1$-$C_{20}$-alkyl,
- an (N-imidazolyl)-substituted $C_1$-$C_{20}$-alkyl;

(III) optionally, structural units of general formula (III A)

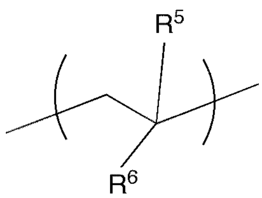

(III A)

wherein in general formula (III A):

- $R^5$ denotes hydrogen or methyl;
- $R^6$ denotes a radical $- C(O)OR^7$ with $R^7$ = hydrogen or $C_1$-$C_{10}$-alkyl, a radical $- O - C(O) - (C_1$-$C_{12}$-alkyl), especially $- O - C(O) - CH_3$, or a phenyl.

In this respect, according to a particular embodiment of the inventive method, in general formulae (I A) and (I B):

- n is 2;
- $R^1$ denotes hydrogen or $C_1$-$C_{12}$-alkyl, preferably hydrogen;
- $R^2$ and $R^{2'}$, independently from each other, each denote hydrogen, $C_1$-$C_{12}$-alkyl, phenyl or vinyl, preferably hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen.

Furthermore, in this respect, according to another particular embodiment of the inventive method, in general formulae (I A) and (I B):

- n is 2;
- $R^1$, $R^2$, $R^{2'}$, $R^3$ and $R^{3'}$ each denote hydrogen.

Furthermore, according to the particular embodiment, in general formula (II A) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

Moreover, according to yet another particular embodiment, in general formula (II A) $R^4$ denotes ethyl, butyl, especially n-butyl, octyl, especially 2-octyl, (iso)bornyl or stearyl, preferably ethyl, n-butyl or 2-octyl.

With respect to the resulting copolymer obtained or obtainable according to the inventive method, in the resulting copolymer, based on the copolymer, structural units (I A), (I B) and (II A) are particularly present in a molar ratio of [structural units (I A) and (I B)] : [structural unit (II A)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in

the range of about 50 : 50.

Furthermore, in the resulting copolymer, based on the copolymer, structural units (I A), (I B), (II A) and (III A) are particularly present in a molar ratio of [structural units (I A) and (I B) and (II A)] : [structural unit (III A)] in the range of from 10 : 80 to 99 : 1, especially in the range of from 20 : 70 to 95 : 5, preferably in the range of from 30 : 60 to 90 : 10, more preferably in the range of from 40 : 60 to 80 : 30; particularly, however, with the proviso that, based on the copolymer, structural units (I A), (I B) and (II A) are present in a molar ratio of [structural units (I A) and (I B)] : [structural unit (II A)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

According to another particular embodiment of the present invention, with respect to the resulting copolymer obtained or obtainable according to the inventive method, the resulting copolymer, based on the copolymer, structural units (I A) and (I B) are particularly present in a molar ratio of [structural unit (I B)] : [structural unit (I A)] of at least 10 : 90, especially at least 15 : 85, preferably at least 20 : 80, more preferably at least 25 : 75.

Furthermore, based on the copolymer, structural units (I A) and (I B) are particularly present in a molar ratio of [structural unit (I B)] : [structural unit (I A)] of at most 99 : 1, especially at most 98 : 2, preferably at most 95 : 5, more preferably at most 90 : 10.

Moreover, based on the copolymer, structural units (I A) and (I B) are particularly present in a molar ratio of [structural unit (I B)] : [structural unit (I A)] in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

According to particular embodiment, the resulting copolymer comprises the structural unit (I A) or (I B), on the one hand, and the structural unit (II A), on the other hand, at least partially in an alternating way and/or at least partially in the form of an alternating copolymer; in other words, the structural unit (I A) or (I B), on the one hand, and the structural unit (II A), on the other hand, are at least partially arranged in an alternating way within the copolymer. Especially, the resulting copolymer comprises structural unit combinations both of the type - [(I A) - (II A)] - and of the type - [(I B) - (II A)] - .

Particularly, the resulting copolymer, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

of at least 10 : 90, especially at least 15 : 85, preferably at least 20 : 80, more preferably at least 25 : 75.

Furthermore, according to another embodiment, the resulting copolymer, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

of at most 99 : 1, especially at most 98 : 2, preferably at most 95 : 5, more preferably at most 90 : 10.

Further, according to yet another embodiment, the resulting copolymer, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

**in the range** of from 10 : 90 to 99 : 1, especially in the range of from 15 : 85 to 98 : 2, preferably in the range of from 20 : 80 to 95 : 5, more preferably in the range of from 25 : 75 to 90 : 10.

According to a particular embodiment, the resulting copolymer may comprise the structural unit (I A) or (I B) and the structural unit (II A) and the structural unit (III A) at least partially in an alternating way and/or at least partially in the form of an alternating copolymer;
especially wherein the copolymer comprises structural unit combinations of the following types:

[(I A) - (II A) - (III A)] - and/or - [(III A) - (I A) - (II A)] - and/or
- [(I A) - (III A) - (II A)] - ;
and
[(I B) = (II A) - (III A)] - and/or - [(III A) - (I B) - (II A)] - and/or

- [(I B) - (III A) - (II A)] - .

According to the inventive method, it may be envisaged that the inventive method results in producing a copolymer based on ketene acetals and crotonic esters, which copolymer comprises the following structural units (A 1) and (A 2) of the following general formulae (A 1) and (A 2)

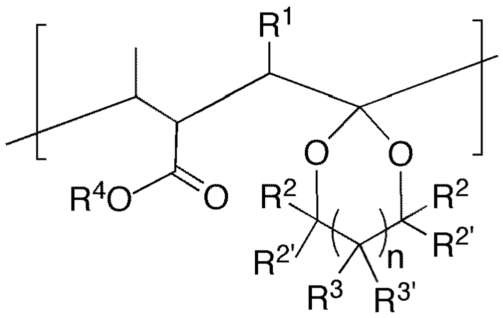

(A 1)

and

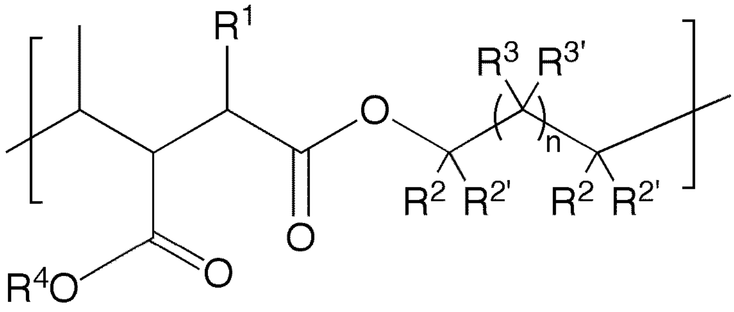

(A 2)

wherein in general formulae (A 1) and (A 2):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;
- $R^4$ denotes:

  - a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
  - a cyclic aromatic or non-aromatic radical,
  - a radical - $CH_2$ - (O - $CH_2$ - $CH_2)_{n'}$ - X or $CH_2$ - [O - $CH(CH_3)$ - $CH_2]_{n'}$ - X where X denotes hydroxyl, hydrogen or $C_1$-$C_8$-alkyl and where n' is an integer in the range of from 2 to 100,
  - a radical - $(CH_2)_{m'}$ - Y, where Y denotes hydroxyl or halogen and where m' is an integer in the range of from 2 to 8,
  - a radical - $(CH_2)_{m''}$ - N $R''_2$ where R'', independently of one another, each denotes hydrogen or a linear or branched, saturated or unsaturated $C_1$-$C_{20}$-alkyl and where m'' is an integer in the range of from 2 to 8,
  - a radical - $CH_2$ - C(O) - O - ($C_1$-$C_{20}$-alkyl),
  - a radical - $CH_2$ - C(O) - N $R'''_2$ where R''', independently of one another, each denotes hydrogen or a linear or branched, saturated or unsaturated $C_1$-$C_{20}$-alkyl,

- an (N-imidazolyl)-substituted $C_1$-$C_{20}$-alkyl.

According to a particular embodiment, in general formulae (A 1) and (A 2):

- n is 2;
- $R^1$ denotes hydrogen or $C_1$-$C_{12}$-alkyl, preferably hydrogen;
- $R^2$ and $R^{2'}$, independently from each other, each denote hydrogen, $C_1$-$C_{12}$-alkyl, phenyl or vinyl, preferably hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;
- $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

Furthermore, according to yet another particular embodiment, in general formulae (A 1) and (A 2):

- n is 2;
- $R^1$, $R^2$, $R^{2'}$, $R^3$ and $R^{3'}$ each denote hydrogen;
- $R^4$ denotes ethyl, butyl, especially n-butyl, octyl, especially 2-octyl, (iso)bornyl or stearyl, preferably ethyl, n-butyl or 2-octyl.

According to a particular embodiment, in the resulting copolymer, based on the copolymer, structural units (A 1) and (A 2) may be present in a molar ratio of [structural unit (A 2)] : [structural unit (A 1)] of at least 10 : 90, especially at least 15 : 85, preferably at least 20 : 80, more preferably at least 25 : 75.

Furthermore, according to another particular embodiment, in the resulting copolymer, based on the copolymer, structural units (A 1) and (A 2) may be present in a molar ratio of [structural unit (A 2)] : [structural unit (A 1)] of at most 99 : 1, especially at most 98 : 2, preferably at most 95 : 5, more preferably at most 90 : 10.

Moreover, according to yet a further particular embodiment, in the resulting copolymer, based on the copolymer, structural units (A 1) and (A 2) may be present in a molar ratio of [structural unit (A 2)] : [structural unit (A 1)] in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

According to a preferred embodiment of the present invention, the inventive method results in producing a copolymer based on ketene acetals and crotonic esters, which copolymer has a glass transition temperature Tg ranging from -60 °C to 100 °C, especially from -55 °C to 75 °C, preferably from -50 °C to 50 °C, more preferably from -45 °C to -0 °C, especially as determined by differential scanning calorimetry, preferably in accordance with DIN EN ISO 11357-2:2014. Inventive copolymers having such glass transition temperatures Tg have particular good performance properties.

Especially, in this respect, the glass transition temperature Tg of the copolymer may be controlled and/or tailored (tuned) by selection of the polymerization conditions and/or by selection of the monomers (i) and (ii) and optionally (iii) each as defined hereinabove.

Especially, in this respect, the glass transition temperature Tg of the copolymer may be controlled and/or tailored (tuned) by selection of the monomers (i) and (ii) and optionally (iii) each as defined hereinabove, especially by selection and/or variation of the substituents comprised by the monomers (i) and (ii) and optionally (iii), preferably by selection and/or variation of at least one of the above-defined radicals $R^1$, $R^2$, $R^{2'}$, $R^3$, $R^{3'}$ and/or $R^4$, more preferably at least of the above-defined radical $R^4$; preferably wherein the glass transition temperature Tg of the copolymer decreases with increasing chain-length of the substituents, especially with increasing chain-length of the above-defined radicals $R^1$, $R^2$, $R^{2'}$, $R^3$, $R^{3'}$ and/or $R^4$, and/or preferably wherein the glass transition temperature Tg of the copolymer increases with decreasing chain-length of the substituents, especially with decreasing chain-length of the above-defined radicals $R^1$, $R^2$, $R^{2'}$, $R^3$, $R^{3'}$ and/or $R^4$.

Especially, in this respect, the glass transition temperature Tg of the copolymer may be controlled and/or tailored (tuned) by selection and/or variation of the substituents comprised by monomer (ii) and/or by selection and/or variation of the ester group of the crotonic acid esters, preferably of the above-defined radical $R^4$ of the above-defined crotonic compounds according to general formula (II); preferably wherein the glass transition temperature Tg of the copolymer decreases with increasing chain-length of the substituents, especially with increasing chain-length of the above-defined radical $R^4$, and/or preferably wherein the glass transition temperature Tg of the copolymer increases with decreasing

chain-length of the substituents, especially with decreasing chain-length of the above-defined radical $R^4$.

According to another particular embodiment, the inventive method results in producing a copolymer based on ketene acetals and crotonic esters, which copolymer has a polydispersity, especially as determined by size exclusion chromatography (SEC), in the range of from 1.05 to 4, especially in the range of from 1.1 to 3.5, preferably in the range of from 1.15 to 3.5, more preferably in the range of from 1.2 to 3. Copolymers having such polydispersity values possess particularly good performance properties.

Furthermore, according to a **second** aspect of the present invention, the present invention also relates to a copolymer, especially to a copolymer based on ketene acetals and crotonic esters ( = a ketene acetal / crotonic copolymer), particularly to a copolymer comprising structural units (moieties) derived from ketene acetals and structural units (moieties) derived from crotonic esters, which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, as defined in Claims 8 and 9, respectively, wherein further and especially advantageous embodiments of the inventive copolymer are the subject-matter of the respective dependent claims.

According to this inventive aspect, the present invention refers to a copolymer, especially a copolymer based on ketene acetals and crotonic esters [ = a ketene acetal / crotonic copolymer, i.e. a copolymer comprising structural units (moieties) derived from ketene acetals and structural units (moieties) derived from crotonic esters], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like,
wherein the copolymer is obtainable by a method as defined and described hereinabove and/or wherein the copolymer is obtained by a method as defined and described hereinabove.

Particularly, according to this inventive aspect, the present invention also refers to a copolymer, especially a copolymer based on ketene acetals and crotonic esters [ = a ketene acetal / crotonic copolymer, i.e. a copolymer comprising structural units (moieties) derived from ketene acetals and structural units (moieties) derived from crotonic esters], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, wherein the copolymer comprises (i) structural units (moieties) derived from (cyclic) ketene acetals and (ii) structural units (moieties) derived from crotonic esters.

Especially, the copolymer comprises (i) the structural units (moieties) derived from (cyclic) ketene acetals, on the one hand, and (ii) the structural units (moieties) derived from crotonic esters, on the other hand, at least partially in an alternating way and/or at least partially in the form of an alternating copolymer; particularly, in other words, (i) the structural units (moieties) derived from (cyclic) ketene acetals, on the one hand, and (ii) the structural units (moieties) derived from crotonic esters, on the other hand, are at least partially arranged in an alternating way within the copolymer.

Especially, in this respect, the copolymer may comprise (i) the structural units (moieties) derived from (cyclic) ketene acetals and (ii) the structural units (moieties) derived from crotonic esters in a molar ratio of [structural units derived from (cyclic) ketene acetals (i)] : [structural units (moieties) derived from crotonic esters (ii)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

Especially, the copolymer may comprise, as (i) the structural units (moieties) derived from cyclic ketene acetals, open-chained structural units and structural units comprising a spirocyclic substituent; preferably wherein, based on the copolymer, the open-chained structural units and the structural units comprising a spirocyclic substituent are present in a molar ratio of [structural unit comprising a spirocyclic substituent] : [open-chained structural unit] in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

Especially, in this respect, the copolymer may further comprise, as optional structural units (moieties), (iii) structural units (moieties) derived from acrylic, methacrylic, vinylic or styrenic monomers, especially derived from ($C_1$-$C_{10}$-alkyl) (meth)acrylates, vinylacetates or styrenes, preferably ($C_1$-$C_{10}$-alkyl) (meth)acrylates and vinylacetates.

Particularly, according to this inventive aspect, the present invention also refers to a copolymer, especially a copolymer based on ketene acetals and crotonic esters [ = a ketene acetal / crotonic copolymer, i.e. a copolymer comprising structural units (moieties) derived from ketene acetals and structural units (moieties) derived from crotonic esters], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially the copolymer as defined hereinbefore,
wherein the copolymer comprises the following structural units:

(I) structural units of general formula (I A) and structural units of general formula (I B)

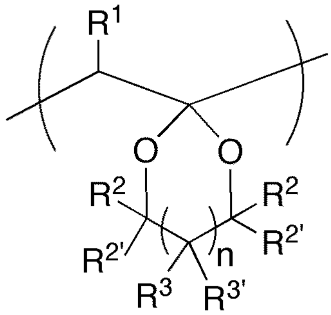

(I A)

and

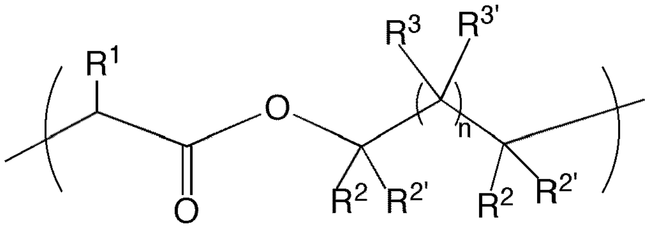

(I B)

wherein in general formulae (I A) and (I B):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(II) structural units of general formula (II A)

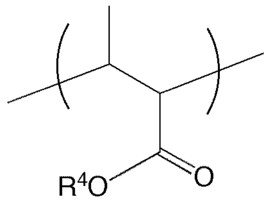

(II A)

wherein in general formula (II A) $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $-CH_2-(O-CH_2-CH_2)_{n'}-X$ or $-CH_2-[O-CH(CH_3)-CH_2]_{n'}-X$ where X denotes hydroxyl, hydrogen or $C_1$-$C_8$-alkyl and where n' is an integer in the range of from 2 to 100,
- a radical $-(CH_2)_{m'}-Y$, where Y denotes hydroxyl or halogen and where m' is an integer in the range of from 2 to 8,
- a radical $-(CH_2)_{m''}-N\,R''_2$ where R'', independently of one another, each denotes hydrogen or a linear or branched, saturated or unsaturated $C_1$-$C_{20}$-alkyl and where m'' is an integer in the range of from 2 to 8,

- a radical - $CH_2$ - C(O) - O - ($C_1$-$C_{20}$-alkyl),
- a radical - $CH_2$ - C(O) - N $R'''_2$ where R‴, independently of one another, each denotes hydrogen or a linear or branched, saturated or unsaturated $C_1$-$C_{20}$-alkyl,
- an (N-imidazolyl)-substituted $C_1$-$C_{20}$-alkyl.

Particularly, according to this inventive aspect, the present invention also refers to a copolymer, especially a copolymer based on ketene acetals and crotonic esters [ = a ketene acetal / crotonic copolymer, i.e. a copolymer comprising structural units (moieties) derived from ketene acetals and structural units (moieties) derived from crotonic esters], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially the copolymer as defined hereinbefore,
wherein the copolymer comprises the following structural units:

(I) structural units of general formula (I A) and structural units of general formula (I B)

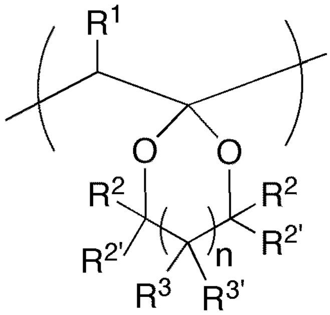

(I A)

and

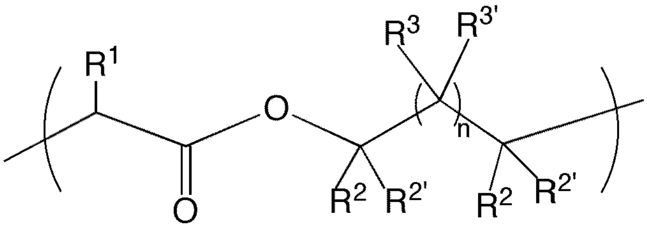

(I B)

wherein in general formulae (I A) and (I B):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(II) structural units of general formula (II A)

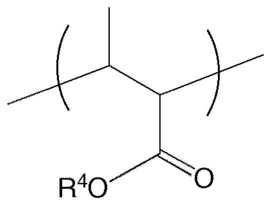

(II A)

wherein in general formula (II A) $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $- CH_2 - (O - CH_2 - CH_2)_{n'} - X$ or $- CH_2 - [O - CH(CH_3) - CH_2]_{n'} - X$ where X denotes hydroxyl, hydrogen or $C_1$-$C_8$-alkyl and where n' is an integer in the range of from 2 to 100,
- a radical $- (CH_2)_{m'} - Y$, where Y denotes hydroxyl or halogen and where m' is an integer in the range of from 2 to 8,
- a radical $- (CH_2)_{m''} - N R''_2$ where R", independently of one another, each denotes hydrogen or a linear or branched, saturated or unsaturated $C_1$-$C_{20}$-alkyl and where m" is an integer in the range of from 2 to 8,
- a radical $- CH_2 - C(O) - O - (C_1$-$C_{20}$-alkyl),
- a radical $- CH_2 - C(O) - N R'''_2$ where R‴, independently of one another, each denotes hydrogen or a linear or branched, saturated or unsaturated $C_1$-$C_{20}$-alkyl,
- an (N-imidazolyl)-substituted $C_1$-$C_{20}$-alkyl;

(III) optionally, structural units of general formula (III A)

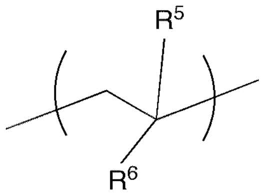

(III A)

wherein in general formula (III A):

- $R^5$ denotes hydrogen or methyl;
- $R^6$ denotes a radical - C(O)OR$^7$ with $R^7$ = hydrogen or $C_1$-$C_{10}$-alkyl, a radical - O - C(O) - ($C_1$-$C_{12}$-alkyl), especially - O - C(O) - $CH_3$, or a phenyl.

According to a particular embodiment of the present invention, in above general formulae (I A) and (I B):

- n is 2;
- $R^1$ denotes hydrogen or $C_1$-$C_{12}$-alkyl, preferably hydrogen;
- $R^2$ and $R^{2'}$, independently from each other, each denote hydrogen, $C_1$-$C_{12}$-alkyl, phenyl or vinyl, preferably hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen.

According to another particular embodiment of the present invention, in above general formulae (I A) and (I B):

- n is 2;
- $R^1$, $R^2$, $R^{2'}$, $R^3$ and $R^{3'}$ each denote hydrogen.

Furthermore, according to yet another particular embodiment of the present invention, in above general formula (II A) $R^4$ denotes a linear or branched, saturated or unsaturated $C_1$-$C_{20}$-alkyl, especially $C_1$-$C_{20}$-alkyl, preferably $C_2$-$C_{10}$-

alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

Further, according to another particular embodiment of the present invention, in above general formula (II A) $R^4$ denotes ethyl, butyl, especially n-butyl, octyl, especially 2-octyl, (iso)bornyl or stearyl, preferably ethyl, n-butyl or 2-octyl.

With respect to the inventive copolymer, in the inventive copolymer, based on the copolymer, structural units (I A), (I B) and (II A) may be present in a molar ratio of [structural units (I A) and (I B)] : [structural unit (II A)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50. This ensures high performance properties of the inventive copolymer and good degradability.

Furthermore, with respect to the inventive copolymer, in the inventive copolymer, based on the copolymer, structural units (I A), (I B), (II A) and (III A) may be present in a molar ratio of [structural units (I A) and (I B) and (II A)] : [structural unit (III A)] in the range of from 10 : 80 to 99 : 1, especially in the range of from 20 : 70 to 95 : 5, preferably in the range of from 30 : 60 to 90 : 10, more preferably in the range of from 40 : 60 to 80 : 30; particularly, however, with the proviso that, based on the copolymer, structural units (I A), (I B) and (II A) are present in a molar ratio of [structural units (I A) and (I B)] : [structural unit (II A)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50.

Particularly, inventive copolymers with good degradability and performance properties are obtained when, based on the copolymer, structural units (I A) and (I B) are present in a molar ratio of [structural unit (I B)] : [structural unit (I A)] of at least 10 : 90, especially at least 15 : 85, preferably at least 20 : 80, more preferably at least 25 : 75.

Especially, according to another particular embodiment, it is envisaged that, based on the copolymer, structural units (I A) and (I B) may be present in a molar ratio of [structural unit (I B)] : [structural unit (I A)] of at most 99 : 1, especially at most 98 : 2, preferably at most 95 : 5, more preferably at most 90 : 10.

Furthermore, according to yet another particular embodiment, it is envisaged that, based on the copolymer, structural units (I A) and (I B) may be present in a molar ratio of [structural unit (I B)] : [structural unit (I A)] in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

In particular, the inventive copolymer may comprise the structural unit (I A) or (I B), on the one hand, and the structural unit (II A), on the other hand, at least partially in an alternating way and/or at least partially in the form of an alternating copolymer; and/or wherein the structural unit (I A) or (I B), on the one hand, and the structural unit (II A), on the other hand, are at least partially arranged in an alternating way within the copolymer; especially wherein the copolymer comprises structural unit combinations both of the type - [(I A) - (II A)] - and of the type - [(I B) - (II A)] - .

Especially, according to a particular embodiment of the inventive copolymer, it is envisaged that, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

of at least 10 : 90, especially at least 15 : 85, preferably at least 20 : 80, more preferably at least 25 : 75.

Furthermore, according to another particular embodiment of the inventive copolymer, it is envisaged that, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

of at most 99 : 1, especially at most 98 : 2, preferably at most 95 : 5, more preferably at most 90 : 10.

Moreover, according to yet another particular embodiment of the inventive copolymer, it is envisaged that, based on the copolymer, the structural unit combinations of the type - [(I A) - (II A)] - and of the type - [(I B) - (II A)] - may be present in a molar ratio of

$$\frac{\text{structural unit combination of the type} - [(\text{I B}) - (\text{II A})] -}{\text{structural unit combination of the type} - [(\text{I A}) - (\text{II A})] -}$$

in the range of from 10 : 90 to 99 : 1, especially in the range of from 15 : 85 to 98 : 2, preferably in the range of from 20 : 80 to 95 : 5, more preferably in the range of from 25 : 75 to 90 : 10.

Especially, the inventive copolymer may comprise the structural unit (I A) or (I B) and the structural unit (II A) and the structural unit (III A) at least partially in an alternating way and/or at least partially in the form of an alternating copolymer;
especially wherein the copolymer comprises structural unit combinations of the following types:

- [(I A) - (II A) - (III A)] - and/or - [(III A) - (I A) - (II A)] - and/or
- [(I A) - (III A) - (II A)] - ;
and
- [(I B) - (II A) - (III A)] - and/or - [(III A) - (I B) - (II A)] - and/or
- [(I B) - (III A) - (II A)] - .

Particularly, according to this inventive aspect, the present invention also refers to a copolymer, especially a copolymer based on ketene acetals and crotonic esters [ = a ketene acetal / crotonic copolymer, i.e. a copolymer comprising structural units (moieties) derived from ketene acetals and structural units (moieties) derived from crotonic esters], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially the copolymer as defined hereinabove,

wherein the copolymer comprises the following structural units (A 1) and (A 2) of the following general formulae (A 1) and (A 2)

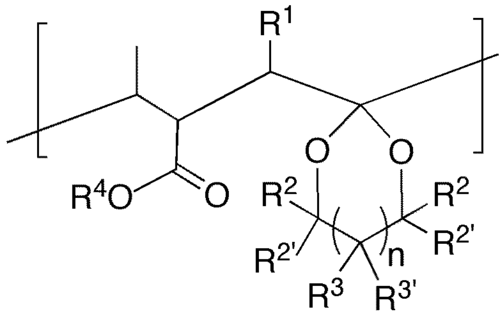

(A 1)

and

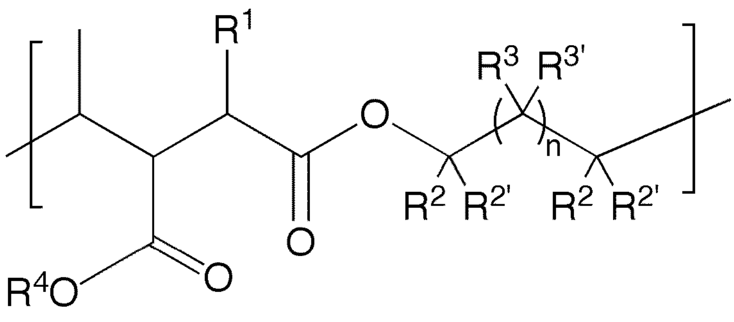

(A 2)

wherein in general formulae (A 1) and (A 2):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$

form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;

• $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

• $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $-CH_2-(O-CH_2-CH_2)_{n'}-X$ or $CH_2-[O-CH(CH_3)-CH_2]_{n'}-X$ where X denotes hydroxyl, hydrogen or $C_1$-$C_8$-alkyl and where n' is an integer in the range of from 2 to 100,
- a radical $-(CH_2)_{m'}-Y$, where Y denotes hydroxyl or halogen and where m' is an integer in the range of from 2 to 8,
- a radical $-(CH_2)_{m''}-N R''_2$ where R'', independently of one another, each denotes hydrogen or a linear or branched, saturated or unsaturated $C_1$-$C_{20}$-alkyl and where m'' is an integer in the range of from 2 to 8,
- a radical $-CH_2-C(O)-O-(C_1$-$C_{20}$-alkyl),
- a radical $-CH_2-C(O)-N R'''_2$ where R''', independently of one another, each denotes hydrogen or a linear or branched, saturated or unsaturated $C_1$-$C_{20}$-alkyl,
- an (N-imidazolyl)-substituted $C_1$-$C_{20}$-alkyl.

Especially, according to a particular embodiment, in general formulae (A 1) and (A 2):

• n is 2;
• $R^1$ denotes hydrogen or $C_1$-$C_{12}$-alkyl, preferably hydrogen;
• $R^2$ and $R^{2'}$, independently from each other, each denote hydrogen, $C_1$-$C_{12}$-alkyl, phenyl or vinyl, preferably hydrogen;
• $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;
• $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

Especially, according to another particular embodiment, in general formulae (A 1) and (A 2):

• n is 2;
• $R^1$, $R^2$, $R^{2'}$, $R^3$ and $R^{3'}$ each denote hydrogen;
• $R^4$ denotes ethyl, butyl, especially n-butyl, octyl, especially 2-octyl, (iso)bornyl or stearyl, preferably ethyl, n-butyl or 2-octyl.

Especially, in this respect, according to a particular embodiment, it is preferred when, based on the copolymer, structural units (A 1) and (A 2) are present in a molar ratio of [structural unit (A 2)] : [structural unit (A 1)] of at least 10 : 90, especially at least 15 : 85, preferably at least 20 : 80, more preferably at least 25 : 75.

Furthermore, according to another particular embodiment, it may also be envisaged when, based on the copolymer, structural units (A 1) and (A 2) are present in a molar ratio of [structural unit (A 2)] : [structural unit (A 1)] of at most 99 : 1, especially at most 98 : 2, preferably at most 95 : 5, more preferably at most 90 : 10.

Moreover, according to yet another particular embodiment, it may also be envisaged when, based on the copolymer, structural units (A 1) and (A 2) are present in a molar ratio of [structural unit (A 2)] : [structural unit (A 1)] in the range of from 10 : 90 to 99 : 1, especially in the range of from 15 : 85 to 98 : 2, preferably in the range of from 20 : 80 to 95 : 5,

more preferably in the range of from 25 : 75 to 90 : 10.

As already explained hereinabove in context with the inventive method, according to a preferred embodiment of the present invention, the inventive copolymer has a glass transition temperature Tg ranging from -60 °C to 100 °C, especially from -55 °C to 75 °C, preferably from -50 °C to 50 °C, more preferably from -45 °C to -0 °C, especially as determined by differential scanning calorimetry, preferably in accordance with DIN EN ISO 11357-2:2014. Inventive copolymers having such glass transition temperatures Tg have particular good performance properties.

Especially, in this respect, as already explained hereinabove in context with the inventive method, the glass transition temperature Tg of the copolymer may be controlled and/or tailored (tuned) by selection of the polymerization conditions and/or by selection of the monomers (i) and (ii) and optionally (iii) each as defined hereinabove.

Especially, in this respect, as already explained hereinabove in context with the inventive method, the glass transition temperature Tg of the copolymer may be controlled and/or tailored (tuned) by selection of the monomers (i) and (ii) and optionally (iii) each as defined hereinabove, especially by selection and/or variation of the substituents comprised by the monomers (i) and (ii) and optionally (iii), preferably by selection and/or variation of at least one of the above-defined radicals $R^1$, $R^2$, $R^{2'}$, $R^3$, $R^{3'}$ and/or $R^4$, more preferably at least of the above-defined radical $R^4$; preferably wherein the glass transition temperature Tg of the copolymer decreases with increasing chain-length of the substituents, especially with increasing chain-length of the above-defined radicals $R^1$, $R^2$, $R^{2'}$, $R^3$, $R^{3'}$ and/or $R^4$, and/or preferably wherein the glass transition temperature Tg of the copolymer increases with decreasing chain-length of the substituents, especially with decreasing chain-length of the above-defined radicals $R^1$, $R^2$, $R^{2'}$, $R^3$, $R^{3'}$ and/or $R^4$ .

Especially, in this respect, as already explained hereinabove in context with the inventive method, the glass transition temperature Tg of the copolymer may be controlled and/or tailored (tuned) by selection and/or variation of the substituents comprised by monomer (ii) and/or by selection and/or variation of the ester group of the crotonic acid esters, preferably of the above-defined radical $R^4$ of the above-defined crotonic compounds according to general formula (II); preferably wherein the glass transition temperature Tg of the copolymer decreases with increasing chain-length of the substituents, especially with increasing chain-length of the above-defined radical $R^4$ , and/or preferably wherein the glass transition temperature Tg of the copolymer increases with decreasing chain-length of the substituents, especially with decreasing chain-length of the above-defined radical $R^4$ .

According to another particular embodiment, the inventive copolymer has a polydispersity, especially as determined by size exclusion chromatography (SEC), in the range of from 1.05 to 4, especially in the range of from 1.1 to 3.5, preferably in the range of from 1.15 to 3.5, more preferably in the range of from 1.2 to 3. Copolymers having such polydispersity values possess particularly good performance properties.

As already explained hereinabove in context with the inventive method, the copolymer is degradable, especially biodegradable, when exposed to neutral or basic (alkaline) conditions, especially neutral or basic (alkaline) pH conditions, particularly pH conditions in the range of from 7 to 14, more particularly in the range of from 7.5 to 12.

Especially, the inventive copolymer leads, when being incorporated into a polymeric composition, to degradability and/or removability thereof under neutral or basic (alkaline) conditions at ambient or at elevated temperatures, especially at elevated temperatures, preferably at temperatures in the range of from 20 to 120 °C, more preferably in the range of from 23 to 100 °C, even more preferably in the range of from 25 to 90 °C.

With respect to further details as to the copolymer according to the present invention, reference may be made to the above description and explanations of the inventive method, which description and explanations apply accordingly also to this aspect of the present invention.

Moreover, according to a **third** aspect of the present invention, the present invention also relates to a polymeric composition, particularly appropriate for use as a preferably degradable ingredient or component of adhesives, coating materials, lubricants, agricultural products, household cleaners, inks, personal care products, cosmetics, pharmaceuticals, packagings, drug delivery systems or the like, as defined in Claim 13.

Thus, according to the third aspect of the present invention, the present invention is also directed to a polymeric composition, which is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, wherein the polymeric composition comprises at least one inventive copolymer as defined hereinbefore.

According to a particular embodiment, the polymeric composition may further comprise at least one further ingredient, especially selected from the group consisting of solvents, dispersants, tackifiers, resins, viscosifying agents, rheology modifiers, thickeners, UV-stabilizing agents, heat protection agents, plasticizers, waxes, stabilizers, dispersants, preservatives, pigments, oils, fillers, colorants, flavorants and their combinations.

Especially the polymeric composition of the present invention, especially the inventive copolymer comprised by the polymeric composition, is degradable, especially biodegradable, when exposed to neutral or basic (alkaline) conditions, especially neutral or basic (alkaline) pH conditions, particularly pH conditions in the range of from 7 to 14, more particularly in the range of from 7.5 to 12.

Particularly, the polymeric composition of the present invention, especially the inventive copolymer comprised by

the polymeric composition, provides degradability or removability under defined conditions, particularly under mild or moderate conditions, especially under the conditions used during recycling or cleaning processes, preferably under neutral or basic (alkaline) conditions, at ambient or at elevated temperatures, especially at elevated temperatures, preferably at temperatures in the range of from 20 to 120 °C, more preferably in the range of from 23 to 100 °C, even more preferably in the range of from 25 to 90 °C.

With respect to further details as to the polymeric composition according to the present invention, reference may be made to the above description and explanations of the inventive method and of the inventive copolymer, which description and explanations apply accordingly also to this aspect of the present invention.

In addition, according to a **fourth** aspect of the present invention, the present invention also relates to various inventive uses of the copolymers of the present invention and of the polymeric composition of the present invention, respectively, as defined hereinbefore.

Thus, according to the fourth aspect of the present invention, the present invention is also directed to the use of an inventive copolymer as defined hereinabove or of a polymeric composition as defined hereinabove as or in an adhesive, especially a pressure-sensitive adhesive (PSA).

Furthermore, according to another embodiment referring to the fourth aspect of the present invention, the present invention also refers to the use of an inventive copolymer as defined hereinabove or of a polymeric composition as defined hereinabove as or in a coating material, especially a coating material selected from paints, lacquers, varnishes, colors, impregnations, glazes, enamels, finishes and protective coatings.

Moreover, according to yet another embodiment referring to the fourth aspect of the present invention, the present invention also refers to the use of an inventive copolymer as defined hereinabove or of a polymeric composition as defined hereinabove as additives or compatibilizing agents (compatibilizers), particularly for polymeric systems.

Further, according to even yet another embodiment referring to the fourth aspect of the present invention, the present invention is also directed to the use of an inventive copolymer as defined hereinabove or of a polymeric composition as defined hereinabove for forming films, especially adhesive films or coating films, on material surfaces.

Also, according to again another embodiment referring to the fourth aspect of the present invention, the present invention is also directed to the use of an inventive copolymer as defined hereinabove or of a polymeric composition as defined hereinabove as a preferably degradable ingredient or component of (i) adhesives, especially pressure-sensitive adhesives (PSAs); (ii) coating materials, especially coating materials selected from paints, lacquers, varnishes, colors, impregnations, glazes, enamels, finishes and protective coatings; (iii) lubricants; (iv) agricultural products, especially selected among seeds and seed-related products, soil treatment agents, soil conditioners and fertilizers, particularly seed coatings or soil conditioners; (v) household cleaners, especially laundry detergents and handwashings; (vi) inks; (vii) personal care products, especially face and body care products; (viii) cosmetics; (ix) pharmaceuticals; (x) packagings, especially food and other packagings; (xi) drug delivery systems, especially for pharmaceutical or nutritive applications; (xii) additives or compatibilizing agents (compatibilizers) determined for use in for polymeric systems.

Moreover, according to a further embodiment referring to the fourth aspect of the present invention, the present invention is also directed to the use of an inventive copolymer as defined hereinabove or of a polymeric composition as defined hereinabove for or in (i) adhesives, especially pressure-sensitive adhesives (PSAs); (ii) coating materials, especially coating materials selected from paints, lacquers, varnishes, colors, impregnations, glazes, enamels, finishes and protective coatings; (iii) lubricants; (iv) agricultural products, especially selected among seeds and seed-related products, soil treatment agents, soil conditioners and fertilizers, particularly seed coatings or soil conditioners; (v) household cleaners, especially laundry detergents and handwashings; (vi) inks; (vii) personal care products, especially face and body care products; (viii) cosmetics; (ix) pharmaceuticals; (x) packagings, especially food and other packagings; (xi) drug delivery systems, especially for pharmaceutical or nutritive applications; (xii) additives or compatibilizing agents (compatibilizers) determined for use in polymeric systems.

Finally, according to another further embodiment referring to the fourth aspect of the present invention, the present invention also relates to the use of an inventive copolymer as defined hereinabove or of a polymeric composition as defined hereinabove for providing degradability, especially biodegradability, or removability under defined conditions, particularly under mild or moderate conditions, especially under the conditions used during recycling or cleaning processes, preferably under neutral or basic (alkaline) conditions, to polymeric systems comprising the copolymer or the polymeric composition.

With respect to further details as to the various uses according to the present invention, reference may be made to the above description and explanations of the inventive method, of the inventive copolymer and of the inventive polymeric composition, which description and explanations apply accordingly also to this aspect of the present invention.

Further, according to a **fifth** aspect of the present invention, the present invention also relates to an adhesive, especially a pressure-sensitive adhesive, especially degradable or removable under defined conditions, particularly under mild or moderate conditions, especially under the conditions used during recycling or cleaning processes, preferably under neutral or basic (alkaline) conditions, as defined in Claim 16.

Thus, according to the fifth aspect of the present invention, the present invention is directed to an adhesive,

especially a pressure-sensitive adhesive, especially degradable or removable under defined conditions, particularly under mild or moderate conditions, especially under the conditions used during recycling or cleaning processes, preferably under neutral or basic (alkaline) conditions, wherein the adhesive comprises an inventive copolymer as defined hereinabove or a polymeric composition as defined hereinabove.

With respect to further details as to the adhesive according to the present invention, reference may be made to the above description and explanations of the inventive method, of the inventive copolymer, of the inventive polymeric composition and of the various inventive uses, which description and explanations apply accordingly also to this aspect of the present invention.

Moreover, according to a **sixth** aspect of the present invention, the present invention also relates to a coating material, especially degradable or removable under defined conditions, particularly under mild or moderate conditions, especially under the conditions used during recycling or cleaning processes, preferably under neutral or basic (alkaline) conditions, particularly a coating material selected from paints, lacquers, varnishes, colors, impregnations, glazes, enamels, finishes and protective coatings, as defined in Claim 17

Thus, according to the sixth aspect of the present invention, the present invention is directed to a coating material, especially degradable or removable under defined conditions, particularly under mild or moderate conditions, especially under the conditions used during recycling or cleaning processes, preferably under neutral or basic (alkaline) conditions, particularly a coating material selected from paints, lacquers, varnishes, colors, impregnations, glazes, enamels, finishes and protective coatings, wherein the coating material comprises an inventive copolymer as defined hereinabove or a polymeric composition as defined hereinabove.

With respect to further details as to the coating material according to the present invention, reference may be made to the above description and explanations of the inventive method, of the inventive copolymer, of the inventive polymeric composition, of the various inventive uses and of the inventive adhesive, which description and explanations apply accordingly also to this aspect of the present invention.

Furthermore, according to a **seventh** aspect of the present invention, the present invention also refers to a product as defined in Claim 18, which product is selected from the group consisting of (i) lubricants; (ii) agricultural products, especially selected among seeds and seed-related products, soil treatment agents, soil conditioners and fertilizers, particularly seed coatings or soil conditioners; (iii) household cleaners, especially laundry detergents and handwashings; (iv) inks; (v) personal care products, especially face and body care products; (vi) cosmetics; (vii) pharmaceuticals; (viii) packagings, especially food and other packagings; (ix) drug delivery systems.

Thus, according to the seventh aspect of the present invention, the present invention is directed to a product selected from the group consisting of (i) lubricants; (ii) agricultural products, especially selected among seeds and seed-related products, soil treatment agents, soil conditioners and fertilizers, particularly seed coatings or soil conditioners; (iii) household cleaners, especially laundry detergents and handwashings; (iv) inks; (v) personal care products, especially face and body care products; (vi) cosmetics; (vii) pharmaceuticals; (viii) packagings, especially food and other packagings; (ix) drug delivery systems, especially for pharmaceutical or nutritive applications; (x) additives or compatibilizing agents (compatibilizers) determined for use in for polymeric systems, especially wherein the product is degradable or removable under defined conditions, particularly under mild or moderate conditions, especially under the conditions used during recycling or cleaning processes, preferably under neutral or basic (alkaline) conditions, wherein the product comprises an inventive copolymer as defined hereinabove or a polymeric composition as defined hereinabove.

With respect to further details as to the product according to the present invention, reference may be made to the above description and explanations of the inventive method, of the inventive copolymer, of the inventive polymeric composition, of the various inventive uses, of the inventive adhesive and of the inventive coating material, which description and explanations apply accordingly also to this aspect of the present invention.

Finally, it is described, within a more general concept, also a method as follows.

Described is a method for producing a copolymer based on ketene acetals and crotonic acid or its esters or salts [ = a ketene acetal / crotonic copolymer, i.e. a copolymer comprising structural units (moieties) derived from ketene acetals and structural units (moieties) derived from crotonic acid or its esters or salts], which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially the method as defined and described hereinabove,

wherein the method comprises producing, via polymerization, preferably via radical polymerization, a copolymer obtainable by copolymerizing monomers (moieties) (i) and (ii) and optionally (iii) and/or (iv) according to the following definition and each being different from one another:

(i) at least one first ethylenically unsaturated monomer selected from cyclic ketene acetals, especially as defined hereinabove;

(ii) at least one second ethylenically unsaturated monomer selected from crotonic compounds selected among crotonic acid or its esters and salts, especially as defined hereinabove;

(iii) optionally, at least one third ethylenically unsaturated monomer being different from monomers (i) and (ii) and from optional monomer (iv) and comprising at least one ethylenically unsaturated bond (i.e. carbon-carbon double bond), especially as defined hereinabove;

(iv) optionally, at least one fourth ethylenically unsaturated monomer being different from monomers (i) and (ii) and from optional monomer (iii), wherein the at least one fourth ethylenically unsaturated monomer is a cross-linker (cross-linking agent) comprising at least two ethylenically unsaturated bonds (carbon-carbon double bonds, especially as defined hereinabove;

especially wherein polymerization, preferably radical polymerization, is performed with partial ring-opening of (i) the at least one first ethylenically unsaturated monomer selected from cyclic ketene acetals and/or wherein during polymerization, preferably during radical polymerization, partial ring-opening of (i) the at least one first ethylenically unsaturated monomer selected from cyclic ketene acetals is induced and/or performed; especially wherein ring-opening is induced and/or takes place for 10 % to 99 %, especially 15 % to 98 %, preferably 20 % to 95 %, more preferably 25 % to 90 %, of (i) the at least one first ethylenically unsaturated monomers selected from cyclic ketene acetals.

Accordingly, described is also a copolymer, especially a copolymer based on ketene acetals and crotonic acid or its esters or salts [ = a ketene acetal / crotonic copolymer, i.e. a copolymer comprising structural units (moieties) derived from ketene acetals and structural units (moieties) derived from crotonic acid or its esters or salts], particularly appropriate for use as a preferably degradable ingredient or component of adhesives, coating materials, lubricants, agricultural products, household cleaners, inks, personal care products, cosmetics, pharmaceuticals, packagings, drug delivery systems or the like, wherein the copolymer is obtainable by a method as described hereinbefore and/or wherein the copolymer is obtained by a method as described hereinbefore.

Particularly, in this respect, described is also a copolymer, especially a copolymer based on ketene acetals and crotonic acid or its esters or salts [ = a ketene acetal / crotonic copolymer, i.e. a copolymer comprising structural units (moieties) derived from ketene acetals and structural units (moieties) derived from crotonic acid or its esters or salts], particularly appropriate for use as a preferably degradable ingredient or component of adhesives, coating materials, lubricants, agricultural products, household cleaners, inks, personal care products, cosmetics, pharmaceuticals, packagings, drug delivery systems or the like, especially the copolymer as defined hereinbefore,

wherein the copolymer comprises (i) structural units (moieties) derived from (cyclic) ketene acetals and (ii) structural units (moieties) derived from crotonic acid or its esters or salts;

especially wherein the copolymer comprises (i) the structural units (moieties) derived from (cyclic) ketene acetals, on the one hand, and (ii) the structural units (moieties) derived from crotonic acid or its esters or salts, on the other hand, at least partially in an alternating way and/or at least partially in the form of an alternating copolymer and/or wherein (i) the structural units (moieties) derived from (cyclic) ketene acetals, on the one hand, and (ii) the structural units (moieties) derived from crotonic acid or its esters or salts, on the other hand, are at least partially arranged in an alternating way within the copolymer; and/or

especially wherein the copolymer comprises (i) the structural units (moieties) derived from (cyclic) ketene acetals and (ii) the structural units (moieties) derived from crotonic acid or its esters or salts in a molar ratio of [structural units derived from (cyclic) ketene acetals (i)] : [structural units (moieties) derived from crotonic acid or its esters or salts (ii)] in the range of from 25 : 75 to 75 : 25, especially in the range of from 30 : 70 to 70 : 30, preferably in the range of from 40 : 60 to 60 : 40, more preferably in the range of from 45 : 55 to 55 : 45, most preferably in the range of about 50 : 50; and/or

especially wherein the copolymer comprises, as (i) the structural units (moieties) derived from cyclic ketene acetals, open-chained structural units and structural units comprising a spirocyclic substituent; preferably wherein, based on the copolymer, the open-chained structural units and the structural units comprising a spirocyclic substituent are present in a molar ratio of [structural unit comprising a spirocyclic substituent] : [open-chained structural unit] in the range of from 10 : 90 to 99 : 1, especially in the range of from 15 : 85 to 98 : 2, preferably in the range of from 20 : 80 to 95 : 5, more preferably in the range of from 25 : 75 to 90 : 10; and/or

especially wherein the copolymer further comprises, as optional structural units (moieties), (iii) structural units

(moieties) derived from acrylic, methacrylic, vinylic or styrenic monomers, especially derived from ($C_1$-$C_{10}$-alkyl) (meth)acrylates, vinylacetates or styrenes, preferably ($C_1$-$C_{10}$-alkyl) (meth)acrylates and vinylacetates.

With respect to further details as to this described method, reference may be made to the above description and explanations as to the first to seventh aspects of the present invention, which description and explanations apply accordingly also to this described method.

DESCRIPTION OF THE FIGURES

Hereinafter, the present invention will be elucidated in more detail using preferred embodiments and figures. In connection with the elucidation of these preferred embodiments, which are, however, in no way restrictive as to the present invention, further advantages, particularities, properties, aspects and features of the present invention are also shown.

In the figures:

Fig. 1 shows the conversion (indicated in %) for an inventive radical copolymerization of 2-methylene-1,3-dioxepane (= "MDO", symbol of empty square) and ethyl crotonate (= "EC", symbol of filled rhombus) as a function of time (indicated in hours) and performed as a bulk polymerization of a molar 50 : 50 MDO/EC starting mixture at 75 °C in the presence of AIBN;

Fig. 2 shows the MDO ring-opening degree (indicated in %) for the inventive radical copolymerization of Fig. 1 as a function of time (indicated in hours);

Fig. 3 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 50 : 50 MDO/BC starting mixture at 75 °C in the presence of AIBN;

Fig. 4 shows the MDO ring-opening degree (indicated in %) for the inventive radical copolymerization of Fig. 3 as a function of time (indicated in hours) for two different experimental runs;

Fig. 5 shows the conversion (indicated in %) for an inventive radical copolymerization of 2-methylene-1,3-dioxepane (= "MDO", symbol of empty square) and 2-octyl crotonate (= "2OC", symbol of filled rhombus) as a function of time (indicated in hours) and performed as a bulk polymerization of a molar 50 : 50 MDO/2OC starting mixture at 75 °C in the presence of AIBN;

Fig. 6 shows the MDO ring-opening degree (indicated in %) for the inventive radical copolymerization of Fig. 5 as a function of time (indicated in hours);

Fig. 7 shows a DSC diagram of the inventive MDO/EC copolymer obtained from the inventive radical copolymerization of Fig. 1 (heat flow indicated in W/g as a function of temperature indicated in °C), wherein a glass transition temperature Tg of -29 °C is determined therefrom for the inventive MDO/EC copolymer;

Fig. 8 shows a DSC diagram of the inventive MDO/BC copolymer obtained from the inventive radical copolymerization of Fig. 3 (heat flow indicated in W/g as a function of temperature indicated in °C), wherein a glass transition temperature Tg of -37 °C is determined therefrom for the inventive MDO/BC copolymer;

Fig. 9 shows a DSC diagram of the inventive MDO/2OC copolymer obtained from the inventive radical copolymerization of Fig. 5 (heat flow indicated in W/g as a function of temperature indicated in °C), wherein a glass transition temperature Tg of -41 °C is determined therefrom for the inventive MDO/2OC copolymer;

Fig. 10 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 25 : 75 MDO/BC starting mixture at 75 °C in the presence of AIBN;

Fig. 11 shows a MALDI-TOF spectrum of the inventive MDO/BC copolymer obtained from the inventive radical copolymerization of Fig. 10, indicating an alternating copolymer structure (i.e. the structural units derived from MDO, on the one hand, and the structural units derived from BC, on the other hand, are arranged in an alternating way within the copolymer);

Fig. 12 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 50 : 50 MDO/BC starting mixture at 75 °C in the presence of AIBN;

Fig. 13 shows a MALDI-TOF spectrum of the inventive MDO/BC copolymer obtained from the inventive radical copolymerization of Fig. 12, indicating an alternating copolymer structure (i.e. the structural units derived from MDO, on the one hand, and the structural units derived from BC, on the other hand, are arranged in an alternating way within the copolymer);

Fig. 14 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 75 : 25 MDO/BC starting mixture at 75 °C in the presence of AIBN;

Fig. 15 shows a MALDI-TOF spectrum of the inventive MDO/BC copolymer obtained from the inventive radical copolymerization of Fig. 14, indicating an alternating copolymer structure (i.e. the structural units derived from MDO, on the one hand, and the structural units derived from BC, on the other hand, are arranged in an alternating way within the copolymer);

Fig. 16 shows a MALDI-TOF spectrum of an inventive MDO/BC copolymer obtained from an inventive radical copolymerization performed as a bulk polymerization of a molar 50 : 50 MDO/BC starting mixture at 75 °C in the presence of AIBN, wherein the MALDI-TOF spectrum indicates an alternating copolymer structure (i.e. the structural units derived from MDO, on the one hand, and the structural units derived from BC, on the other hand, are arranged in an alternating way within the copolymer);

Fig. 17 shows the degradation of an inventive MDO/BC copolymer (obtained from an inventive radical copolymerization performed as a bulk polymerization of a molar 50 : 50 MDO/BC starting mixture at 75 °C in the presence of AIBN) for different observation periods after treatment of the MDO/BC copolymer with alkaline water at pH = 10 (GPC-analysis data from a THF solution of the respective samples);

Fig. 18 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and butyl acrylate (= "BA", symbol of filled rhombus) as a function of time (indicated in hours) and performed as a bulk polymerization of a molar 20 : 20 : 60 MDO/BC/BA starting mixture at 75 °C in the presence of AIBN;

Fig. 19 shows a MALDI-TOF spectrum of the inventive MDO/BC/BA copolymer obtained from the inventive radical copolymerization of Fig. 18, indicating an at least partially alternating copolymer structure;

Fig. 20 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and butyl methacrylate (= "BMA", symbol of filled rhombus) as a function of time (indicated in hours) and performed as a bulk polymerization of a molar 20 : 20 : 60 MDO/BC/BMA starting mixture at 75 °C in the presence of AIBN;

Fig. 21 shows a MALDI-TOF spectrum of the inventive MDO/BC/BMA copolymer obtained from the inventive radical copolymerization of Fig. 20, indicating an at least partially alternating copolymer structure;

Fig. 22 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and styrene (= "S", symbol of filled rhombus) as a function of time (indicated in hours) and performed as a bulk polymerization of a molar 20 : 20 : 60 MDO/BC/S starting mixture at 75 °C in the presence of AIBN;

Fig. 23 shows a MALDI-TOF spectrum of the inventive MDO/BC/S copolymer obtained from the inventive radical

copolymerization of Fig. 22, indicating an at least partially alternating copolymer structure (apart from polystyrene homopolymeric moieties);

Fig. 24 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and vinylacetate (= "VA", symbol of filled rhombus) as a function of time (indicated in hours) and performed as a bulk polymerization of a molar 20 : 20 : 60 MDO/BC/VA starting mixture at 75 °C in the presence of AIBN;

Fig. 25 shows a MALDI-TOF spectrum of the inventive MDO/BC/VA copolymer obtained from the inventive radical copolymerization of Fig. 24, indicating an at least partially alternating copolymer structure;

Fig. 26 shows a DSC diagram of the inventive MDO/BC/VA copolymer obtained from the inventive radical copolymerization of Fig. 24 (heat flow indicated in W/g as a function of temperature indicated in °C), wherein a glass transition temperature Tg of -7.8 °C is determined therefrom for the inventive MDO/BC/VA copolymer.

Thus, on the whole, the present invention provides an efficient method for producing copolymer based on ketene acetals and crotonic esters, which copolymers allow for a multitude of different usages and applications and are thus universally applicable (e.g. use as a preferably degradable ingredient or component of adhesives, coating materials, lubricants, agricultural products, household cleaners, inks, personal care products, cosmetics, pharmaceuticals, packagings, drug delivery systems, compatibilizers etc.) and which copolymers are at least partially biobased and are furthermore degradable, especially biodegradable, under defined conditions (e.g. particularly under mild or moderate conditions, especially under the conditions used during recycling or cleaning processes, e.g. under neutral or basic / alkaline conditions) while at the same time being environmentally compatible and possessing good or even superior performance and application properties.

As delineated hereinbefore, the present invention (namely both the inventive method as well as the inventive copolymers and polymeric compositions comprising them as well as the various uses and applications thereof) is linked to a multitude of particularities and advantages, which clearly distinguish the present invention from the disadvantageous prior art techniques.

The present invention is illustrated, in the following, with reference to Examples, which, however, shall not restrict or limit the present invention in any way.

## EXAMPLES

### Abbreviation of used materials

- MDO: 2-methylene-1,3-dioxepane
- EC: ethyl crotonate (= ethyl ester of crotonic acid)
- BC: butyl crotonate (= butyl ester of crotonic acid)
- 2OC: 2-octyl crotonate (= 2-octyl ester of crotonic acid)
- BA: butyl acrylate
- BMA: butyl methacrylate
- S: styrene
- VA: vinylacetate
- AIBN: azobisisobutyronitrile

### Synthesis of the crotonate ester / MDO copolymers by bulk polymerization

Various crotonic esters (i.e. ethyl crotonate, butyl crotonate and 2-octyl crotonate) are each polymerized with 2-methylen-1,3-dioxepane (MDO) in a bulk polymerization process at different molar ratios of crotonate / MDO (i.e. 25 / 75, 50 / 50 and 75 / 25). The polymerizations are each carried out in a 5-ml-vial with a magnetic stirrer. The reactions are carried out under controlled temperature using a heating plate and a disk to place the vials. About one gram of the monomer mixture is charged in the vial with 2 wt.% of AIBN as initiator. The reaction is purged with nitrogen and then maintained at 75 °C for 6 hours while stirring. Every hour a small aliquot is extracted in order to calculate the conversion of each monomer by

$^1$H-NMR and in order to determine the MDO ring-opening percentage also by $^1$H-NMR. Polymerization is performed with high conversion rates and yields.

Table 1 presents as a mere representative recipe for the copolymerization of butyl crotonate and MDO in a 50 / 50 molar ratio.

**Table 1:** Formulation for the bulk copolymerization between butyl crotonate and MDO (50 / 50 mol)

| **Ingredient** | **Amount (g)** |
|---|---|
| butyl crotonate (BC) | 0,690 |
| 2-methylen-1,3-dioxepane (MDO) | 0,554 |
| AIBN | 0,040 |
| **Total** | 1,284 |

The synthesis processes are each repeated as polymerization in solution in an aprotic water-free organic solvent (2,2,5,5-tertramethyloxolane (TMO)) and deliver comparable results.

For illustrative purposes only and in a non-limiting, the synthesis reaction is visualized by the following two Reaction Schemes 1 and 2 where the radical R indicates ethyl, butyl or 2-octyl and n and m indicate the number of the repeating units (moieties), however, with the simplification that only the copolymeric structure comprising the MDO-derived unit generated under MDO ring-opening is shown whereas the MDO-derived unit generated with MDO ring-retention although it is also present in the copolymeric structure (but not shown in Reaction Schemes 1 and 2):

**<u>Reaction Scheme 1</u>**

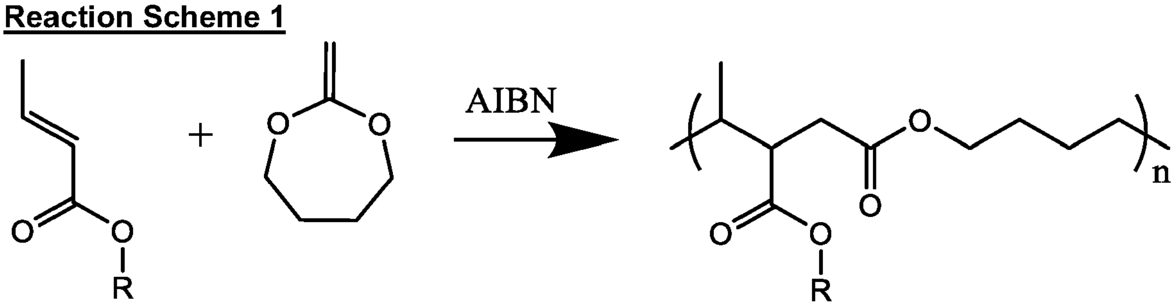


**<u>Reaction Scheme 2</u>**

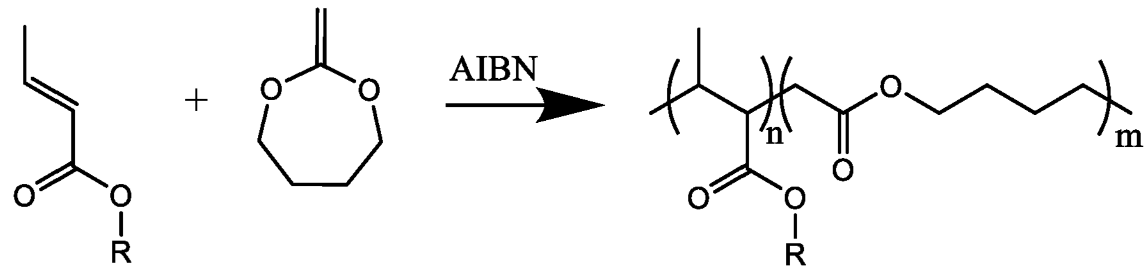


Note: The copolymer structure shown in Reaction Scheme 1 corresponds to a pure alternating copolymer (the name of which in the IUPAC nomenclature is thus "poly(MDO-alt-BC)") whereas the copolymer structure shown in Reaction Scheme 2 is a generic copolymer structure (the name of which in the IUPAC nomenclature is thus "poly(MDO-co-BC)").

The two different MDO-derived repeating units (moieties) in the copolymeric structure comprising the MDO-derived unit generated under MDO ring-opening and the MDO-derived unit generated with MDO ring-retention are visualized in the following scheme (however, with the simplification that only homopolymerization is shown), wherein the abbreviations "FRP" and "T" denote "free radical polymerization" and "temperature", respectively:

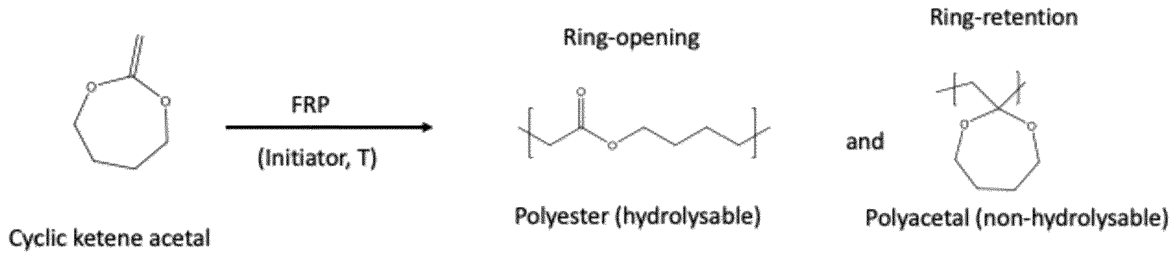


The two different MDO-derived repeating units (moieties) in the copolymeric structure comprising the MDO-derived unit generated under MDO ring-opening and the MDO-derived unit generated with MDO ring-retention within a crotonate / MDO copolymer are visualized in the following schemes wherein R indicates ethyl, butyl or 2-octyl (wherein, in the inventive copolymers, both MDO-derived units are statistically present and arranged as confirmed by experimental data such as $^{1}$H-NMR and others):

Exemplary structure generated under MDO ring-opening during polymerization:

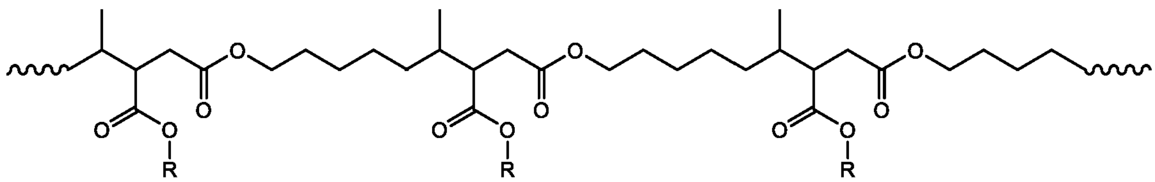

Exemplary structure generated under MDO ring-retention during polymerization for propyl and butyl crotonates as comonomers:

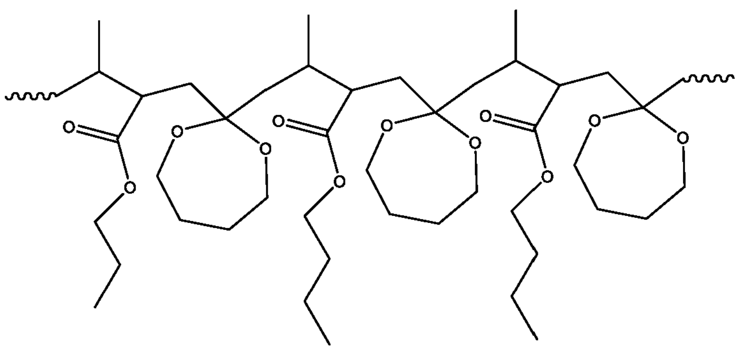

In contrast to the inventive copolymerizations, comparative copolymerizations are performed with a comparative polymerization binary systems, namely with butyl crotonate (BC) / vinylacetate (VA) (i.e. without MDO), where conversion rates of BC and VA only reach 17 % and 41 %, respectively. Surprisingly, in the inventive copolymerizations, however, where MDO and crotonates are used as comonomers conversion rates for the various comonomers mostly surpass 90 % and can reach up to 99 % and even more.

## Ethyl crotonate ester / MDO copolymer

Fig. 1 shows the conversion (indicated in %) for an inventive radical copolymerization of 2-methylene-1,3-dioxepane (= "MDO", symbol of empty square) and ethyl crotonate (= "EC", symbol of filled rhombus) as a function of time (indicated in hours) and performed as a bulk polymerization of a molar 50 : 50 MDO/EC starting mixture at 75°C in the presence of AIBN. Fig. 2 shows the MDO ring-opening degree (indicated in %) for the inventive radical copolymerization of Fig. 1 as a function of time (indicated in hours). Fig. 7 shows a DSC diagram of the inventive MDO/EC copolymer obtained from the inventive radical copolymerization of Fig. 1 (heat flow indicated in W/g as a function of temperature indicated in °C), wherein a glass transition temperature Tg of -29 °C is determined therefrom for the inventive MDO/EC copolymer.

## Butyl crotonate ester / MDO copolymer

Fig. 3 shows the conversion (indicated in %) for an inventive radical copolymerization of 2-methylene-1,3-dioxepane (= "MDO", symbol of empty square) and butyl crotonate (= "BC", symbol of filled rhombus) as a function of time

(indicated in hours) and performed as a bulk polymerization of a molar 50 : 50 MDO/BC starting mixture at 75°C in the presence of AIBN. Fig. 4 shows the MDO ring-opening degree (indicated in %) for the inventive radical copolymerization of Fig. 3 as a function of time (indicated in hours) for two different experimental runs. Fig. 8 shows a DSC diagram of the inventive MDO/BC copolymer obtained from the inventive radical copolymerization of Fig. 3 (heat flow indicated in W/g as a function of temperature indicated in °C), wherein a glass transition temperature Tg of -37 °C is determined therefrom for the inventive MDO/BC copolymer.

Fig. 10 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 25 : 75 MDO/BC starting mixture at 75 °C in the presence of AIBN. Fig. 11 shows a MALDI-TOF spectrum of the inventive MDO/BC copolymer obtained from the inventive radical copolymerization of Fig. 10, indicating an alternating copolymer structure (i.e. the structural units derived from MDO, on the one hand, and the structural units derived from BC, on the other hand, are arranged in an alternating way within the copolymer).

Fig. 12 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 50 : 50 MDO/BC starting mixture at 75 °C in the presence of AIBN. Fig. 13 shows a MALDI-TOF spectrum of the inventive MDO/BC copolymer obtained from the inventive radical copolymerization of Fig. 12, indicating an alternating copolymer structure (i.e. the structural units derived from MDO, on the one hand, and the structural units derived from BC, on the other hand, are arranged in an alternating way within the copolymer).

Fig. 14 shows the conversion (indicated in %) for an inventive radical copolymerization of 2-methylene-1,3-dioxepane (= "MDO", symbol of empty square) and butyl crotonate (= "BC", symbol of filled rhombus) as a function of time (indicated in hours) and performed as a bulk polymerization of a molar 75 : 25 MDO/BC starting mixture at 75 °C in the presence of AIBN. Fig. 15 shows a MALDI-TOF spectrum of the inventive MDO/BC copolymer obtained from the inventive radical copolymerization of Fig. 14, indicating an alternating copolymer structure (i.e. the structural units derived from MDO, on the one hand, and the structural units derived from BC, on the other hand, are arranged in an alternating way within the copolymer).

Fig. 16 shows a MALDI-TOF spectrum of an inventive MDO/BC copolymer obtained from an inventive radical copolymerization performed as a bulk polymerization of a molar 50 : 50 MDO/BC starting mixture at 75 °C in the presence of AIBN, wherein the MALDI-TOF spectrum indicates an alternating copolymer structure (i.e. the structural units derived from MDO, on the one hand, and the structural units derived from BC, on the other hand, are arranged in an alternating way within the copolymer). The molar mass between the respective peaks is the sum of one unit BC and one unit MDO (i.e. 256 g/mol), which is the proof an alternating copolymer structure (i.e. alternating BC / MDO units).

## 2-octyl crotonate ester / MDO copolymer

Fig. 5 shows the conversion (indicated in %) for an inventive radical copolymerization of 2-methylene-1,3-dioxepane (= "MDO", symbol of empty square) and 2-octyl crotonate (= "2OC", symbol of filled rhombus) as a function of time (indicated in hours) and performed as a bulk polymerization of a molar 50 : 50 MDO/2OC starting mixture at 75 °C in the presence of AIBN. Fig. 6 shows the MDO ring-opening degree (indicated in %) for the inventive radical copolymerization of Fig. 5 as a function of time (indicated in hours). Fig. 9 shows a DSC diagram of the inventive MDO/2OC copolymer obtained from the inventive radical copolymerization of Fig. 5 (heat flow indicated in W/g as a function of temperature indicated in °C), wherein a glass transition temperature Tg of -41 °C is determined therefrom for the inventive MDO/2OC copolymer.

## Terpolymerization of crotonate esters, MDO and third comonomer by radical polymerization

In an analogous way, the terpolymerization between various crotonate esters (i.e. ethyl crotonate, butyl crotonate and 2-octyl crotonate), MDO and a third comonomer on the basis of common commercial monomers (i.e. styrene, acrylates, methacrylates, vinylacetate) is carried out following the same process as for the crotonate / MDO copolymers according to the above description (bulk polymerization, 6 hours run at 75 °C, 2 wt.% of AIBN as initiator). The comonomer mol ratio selected is 20 : 20 : 60 (crotonate / MDO / other comonomer). Polymerization is performed with high conversion rates and yields.

Table 2 shows a mere representative recipe for the terpolymer with vinylacetate (i.e. 20 : 20 : 60 crotonate / MDO / vinylacetate).

**Table 2:** Formulation for the bulk terpolymerization between butyl crotonate, MDO and vinylacetate (20 / 20 / 60 mol ratio).

| Ingredient | Amount (g) |
|---|---|
| butyl crotonate (BC) | 0.55 |
| 2-methylen-1,3-dioxepane (MDO) | 0.44 |
| vinylacetate (VA) | 1.00 |
| AIBN | 0.040 |
| **Total** | 1.284 |

The synthesis processes are each repeated as polymerization in solution in an aprotic water-free organic solvent (2,2,5,5-tertramethyloxolane (TMO)) and deliver comparable results.

For illustrative purposes only and in a non-limiting, the synthesis reaction, merely on an exemplary basis with vinylacetate as third comonomer, is visualized by the following Reaction Scheme e where the radical R indicates ethyl, butyl or 2-octyl and n, m and o indicate the number of the repeating units (moieties), however, with the simplification that only the copolymeric structure comprising the MDO-derived unit generated under MDO ring-opening is shown whereas the MDO-derived unit generated with MDO ring-retention although it is also present in the copolymeric structure (but not shown in Reaction Scheme 3):

**Reaction Scheme 3**

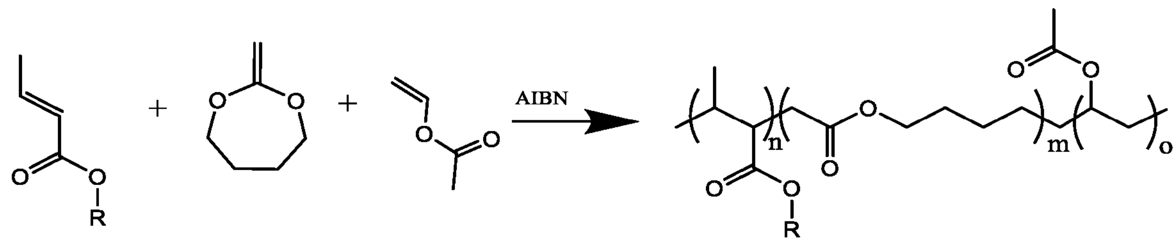


**Further experimental data from the terpolymerization of crotonate esters, MDO and third comonomer by radical polymerization**

Fig. 18 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and butyl acrylate (= "BA", symbol of filled rhombus) as a function of time (indicated in hours) and performed as a bulk polymerization of a molar 20 : 20 : &0 MDO/BC/BA starting mixture at 75 °C in the presence of AIBN. Fig. 19 shows a MALDI-TOF spectrum of the inventive MDO/BC/BA copolymer obtained from the inventive radical copolymerization of Fig. 18, indicating an at least partially alternating copolymer structure.

Fig. 20 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and butyl methacrylate (= "BMA", symbol of filled rhombus) as a function of time (indicated in hours) and performed as a bulk polymerization of a molar 20 : 20 : 60 MDO/BC/BMA starting mixture at 75 °C in the presence of AIBN. Fig. 21 shows a MALDI-TOF spectrum of the inventive MDO/BC/BMA copolymer obtained from the inventive radical copolymerization of Fig. 20, indicating an at least partially alternating copolymer structure.

Fig. 22 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and styrene (= "S", symbol of filled rhombus) as a function of time (indicated in hours) and performed as a bulk polymerization of a molar 20 : 20 : 60 MDO/BC/S starting mixture at 75 °C in the presence of AIBN. Fig. 23 shows a MALDI-TOF spectrum of the inventive MDO/BC/S copolymer obtained from the inventive radical copolymerization of Fig. 22, indicating an at least partially alternating copolymer structure (apart from polystyrene homopolymeric moieties).

Fig. 24 shows the conversion (indicated in %) for an inventive radical copolymerization (terpolymerization) of 2-methylene-1,3-dioxepane (= "MDO", symbol of filled triangle), butyl crotonate (= "BC", symbol of empty square) and vinylacetate (= "VA", symbol of filled rhombus) as a function of time (indicated in hours) and performed as a bulk polymerization of a molar 20 : 20 : 60 MDO/BC/VA starting mixture at 75 °C in the presence of AIBN. Fig. 25 shows a MALDI-TOF spectrum of the inventive MDO/BC/VA copolymer obtained from the inventive radical copolymerization of Fig.

24, indicating an at least partially alternating copolymer structure. Fig. 26 shows a DSC diagram of the inventive MDO/BC/VA copolymer obtained from the inventive radical copolymerization of Fig. 24 (heat flow indicated in W/g as a function of temperature indicated in °C), wherein a glass transition temperature Tg of -7.8 °C is determined therefrom for the inventive MDO/BC/VA copolymer.

## Degradation tests

Degradation tests are run with the inventive copolymers as synthesized hereinbefore. The inventive copolymers degrade quickly under alkaline conditions. For test purposes the respective inventive copolymer is dissolved in THF and then 240 mg KOH dissolved in 2.5 mL of MeOH are added. After mixing for a defined time 3 drops of HCl (6 M) solution are added to neutralize the base. The sample is filtered and dried at room temperature. Afterwards, the samples are dissolved again in THF at the necessary concentration to inject them for GPC analysis.

Fig. 17 shows the degradation of an inventive MDO/BC copolymer (obtained from an inventive radical copolymerization performed as a bulk polymerization of a molar 50 : 50 MDO/BC starting mixture at 75 °C in the presence of AIBN) for different observation periods after treatment of the MDO/BC copolymer with alkaline water at pH = 10 (GPC-analysis data from a THF solution of the respective samples).

## Claims

1. A method for producing a copolymer based on ketene acetals and crotonic esters, which copolymer is particularly appropriate for use as a preferably degradable ingredient or component of adhesives, coating materials, lubricants, agricultural products, household cleaners, inks, personal care products, cosmetics, pharmaceuticals, packagings, drug delivery systems,

   wherein the method comprises producing, via radical polymerization, a copolymer obtainable by copolymerizing monomers (moieties) (i), (ii) and optionally (iii) according to the following definition and each being different from one another:

   (i) at least one first ethylenically unsaturated monomer selected from cyclic ketene acetals according to general formula (I)

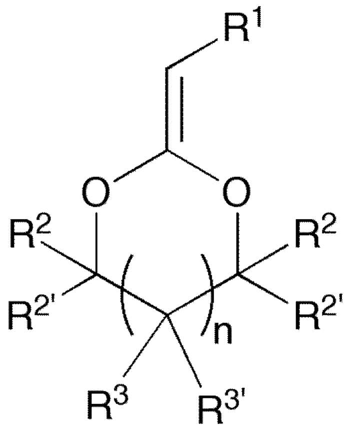

(I)

   wherein in general formula (I):

   - n denotes an integer 0, 1 or 2;
   - $R^1$ denotes hydrogen or $C_1$-$C_{12}$-alkyl;
   - $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
   - $R^3$ and $R^{3'}$, independently from each other, each denote hydrogen, $C_1$-$C_{12}$-alkyl, phenyl or vinyl; or $R^3$

and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(ii) at least one second ethylenically unsaturated monomer selected from crotonic compounds according to general formula (II)

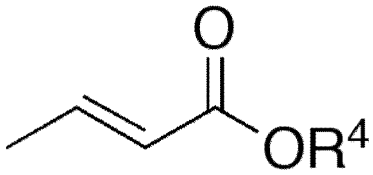

(II)

wherein in general formula (II) $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl and even more preferably denotes $C_1$-$C_{20}$-alkyl, especially $C_1$-$C_{20}$-alkyl, preferably $C_2$-$C_{10}$-alkyl, more preferably $C_2$-$C_8$-alkyl;

(iii) optionally, at least one third ethylenically unsaturated monomer being different from (i) and (ii) and comprising at least one ethylenically unsaturated bond;

wherein radical polymerization is performed as an alternating radical ring-opening polymerization with partial ring-opening of (i) the at least one first ethylenically unsaturated monomer selected from cyclic ketene acetals according to general formula (I);
wherein ring-opening is induced and/or takes place for 10 % to 99 % of (i) the at least one first ethylenically unsaturated monomers selected from cyclic ketene acetals according to general formula (I),
wherein radical polymerization is performed as a bulk polymerization or is performed in at least one aprotic water-free organic solvent.

**2.** The method according to Claim 1,
wherein (i) the at least one first ethylenically unsaturated monomer selected from cyclic ketene acetals according to general formula (I) is selected from the following compounds:

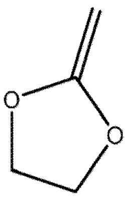
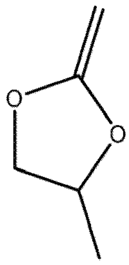
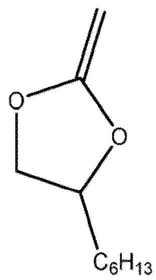
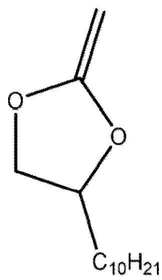
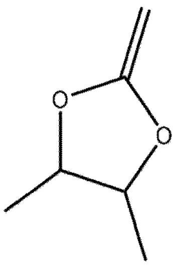
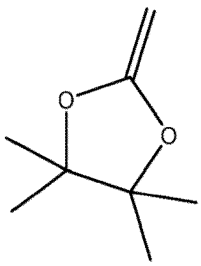

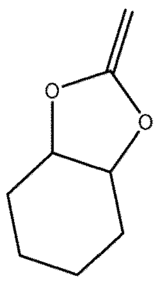
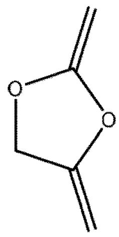
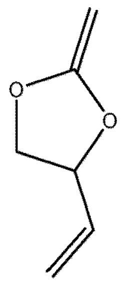
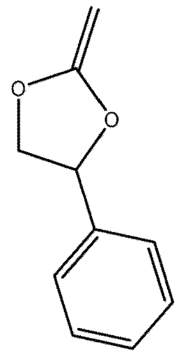
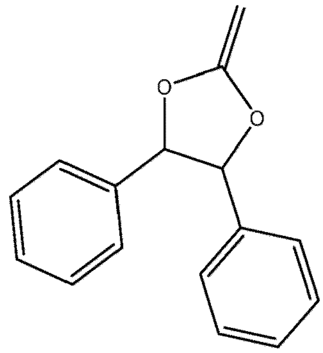

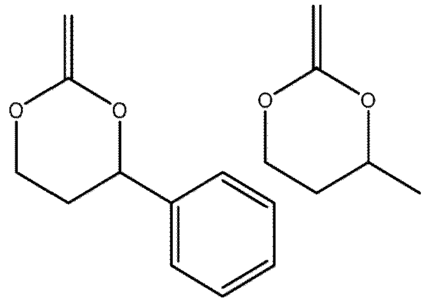
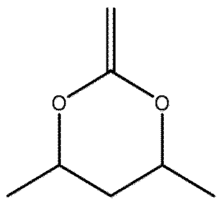
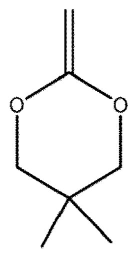
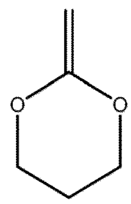

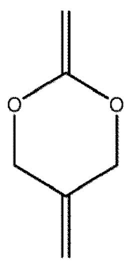
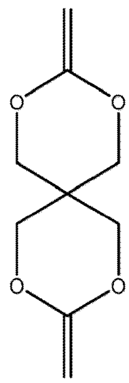
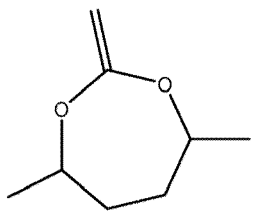
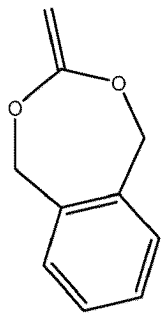
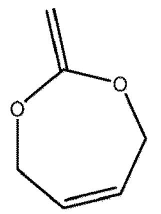

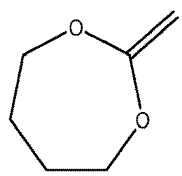

**3.** The method according to Claim 1 or Claim 2,
wherein (i) the at least one first ethylenically unsaturated monomer selected from cyclic ketene acetals according to general formula (I) is 2-methylene-1,3-dioxepane (MDO):

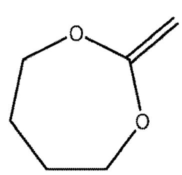

**4.** The method according to any of the preceding claims,

wherein (ii) the at least one second ethylenically unsaturated monomer selected from crotonic compounds according to general formula (II) is

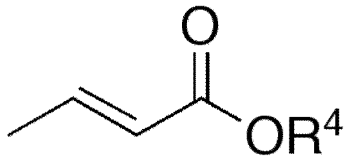
(II)

wherein in general formula (II) $R^4$ denotes ethyl, butyl, especially n-butyl, octyl, especially 2-octyl, (iso)bornyl or stearyl, preferably ethyl, n-butyl or 2-octyl.

**5.** The method according to any of the preceding claims,

wherein radical polymerization is performed in the (further) presence of (iv) at least one cross-linker (cross-linking agent);
especially wherein the at least one cross-linker (cross-linking agent) comprises at least two ethylenically unsaturated bonds (carbon-carbon double bonds); and/or
especially wherein the at least one cross-linker (cross-linking agent) is a di- or polyfunctional cross-linker comprising at least two ethylenically unsaturated bonds (carbon-carbon double bonds); and/or
especially wherein the at least one cross-linker (cross-linking agent) is different from monomers (i) and (ii) and from optional monomer (iii); and/or
especially wherein the at least one cross-linker (cross-linking agent) is selected from the group consisting of (i) di(meth)acrylates; (ii) allyl (meth)acrylates, (iii) diallyl maleates; (iv) dicrotonates; and (v) oligoesters which comprise at least two ethylenically unsaturated bonds (carbon-carbon double bonds) and which further comprise moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and moieties (units) derived from lactide (3,6-dimethyl-1,4-dioxan-2,5-dion); as well as combinations thereof; and/or
especially wherein the at least one cross-linker (cross-linking agent) is an oligoester, especially a (macro) monomer or oligomer, which comprises at least two ethylenically unsaturated bonds (carbon-carbon double bonds) and which further comprises moieties (units) derived from ε-caprolactone (1-oxa-2-oxocylcoheptane) and/or moieties (units) derived from lactide (3,6-dimethyl-1,4-dioxan-2,5-dion), especially moieties (units) derived from ε-caprolactone (1-oxa-2-oxocylcoheptane) and moieties (units) derived from lactide (3,6-dimethyl-1,4-dioxan-2,5-dion), wherein the moieties (units) derived from ε-caprolactone are represented by the following formula (1):

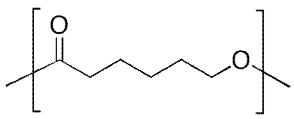
(1)

and wherein the moieties (units) derived from lactide are represented by the following formula (2):

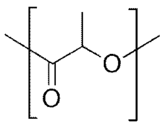
(2).

**6.** The method according to any of the preceding claims,
wherein radical polymerization is performed in at least one aprotic water-free organic solvent selected from the group consisting of 2,2,5,5-tertramethyloxolane (TMO), acetone, acetonitrile, benzene, chloroform, cyclohexan, dichloromethane, dimethylformamide, dimethylsulfoxide, dioxane, ethyl acetate, methyl ethyl ketone, tetrahydrofurane, toluene and xylene.

**7.** The method according to any of the preceding claims,

wherein the method results in producing a copolymer based on ketene acetals and crotonic esters, which copolymer comprises the following structural units:

(I) structural units of general formula (I A) and structural units of general formula (I B)

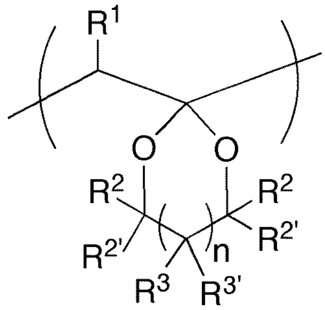

(I A)

and

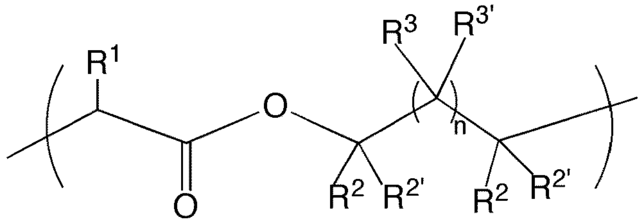

(I B)

wherein in general formulae (I A) and (I B):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$ is hydrogen;
- $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

(II) structural units of general formula (II A)

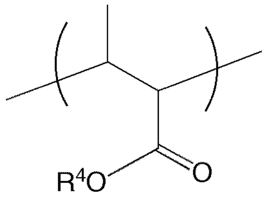

(II A)

wherein in general formula (II A) $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,

- a cyclic aromatic or non-aromatic radical,
- a radical $-CH_2-(O-CH_2-CH_2)_{n'}-X$ or $-CH_2-[O-CH(CH_3)-CH_2]_{n'}-X$ where X denotes hydroxyl, hydrogen or $C_1$-$C_8$-alkyl and where n' is an integer in the range of from 2 to 100,
- a radical $-(CH_2)_{m'}-Y$, where Y denotes hydroxyl or halogen and where m' is an integer in the range of from 2 to 8,
- a radical $-(CH_2)_{m''}-N R''_2$ where R", independently of one another, each denotes hydrogen or a linear or branched, saturated or unsaturated $C_1$-$C_{20}$-alkyl and where m" is an integer in the range of from 2 to 8,
- a radical $-CH_2-C(O)-O-(C_1$-$C_{20}$-alkyl),
- a radical $-CH_2-C(O)-N R'''_2$ where R''', independently of one another, each denotes hydrogen or a linear or branched, saturated or unsaturated $C_1$-$C_{20}$-alkyl,
- an (N-imidazolyl)-substituted $C_1$-$C_{20}$-alkyl.

**8.** A copolymer based on ketene acetals and crotonic esters particularly appropriate for use as a preferably degradable ingredient or component of adhesives, coating materials, lubricants, agricultural products, household cleaners, inks, personal care products, cosmetics, pharmaceuticals, packagings, drug delivery systems, wherein the copolymer is obtainable by a method as defined in any of the preceding claims and/or wherein the copolymer is obtained by a method as defined in any of the preceding claims.

**9.** A copolymer based on ketene acetals and crotonic esters particularly appropriate for use as a preferably degradable ingredient or component of adhesives, coating materials, lubricants, agricultural products, household cleaners, inks, personal care products, cosmetics, pharmaceuticals, packagings, drug delivery systems,

wherein the copolymer comprises the following structural units (A 1) and (A 2) of the following general formulae (A 1) and (A 2)

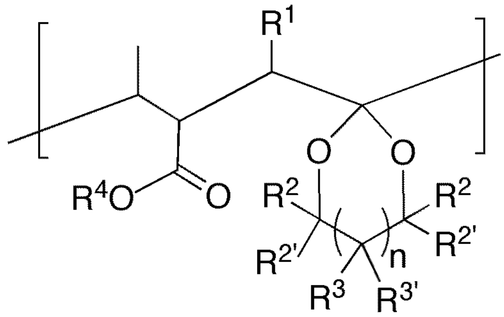

(A 1)

and

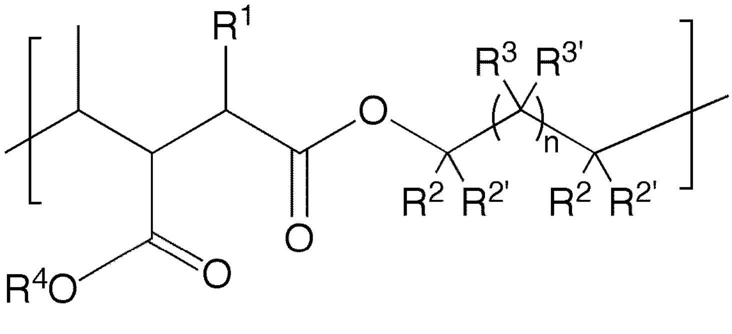

(A 2)

wherein in general formulae (A 1) and (A 2):

- n denotes an integer 0, 1 or 2;
- $R^1$ denotes hydrogen or $C_1$-$C_{12}$-alkyl;
- $R^2$ and $R^{2'}$, independently from each other, each denote hydrogen, $C_1$-$C_{12}$-alkyl, phenyl or vinyl; or $R^2$ and $R^{2'}$ form an exocyclic double bond; or when n is 0 both radicals $R^2$ together with the carbon atoms to which they are attached form a fused benzene ring while both radicals $R^{2'}$ form part of a double bond or both radicals $R^2$ together with the carbon atoms to which they are attached form a fused $C_3$-$C_7$-cycloaliphatic ring while $R^{2'}$

is hydrogen;

• $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or when n is 2 both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;

• $R^4$ denotes:

- a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical,
- a cyclic aromatic or non-aromatic radical,
- a radical $- CH_2 - (O - CH_2 - CH_2)_{n'} - X$ or $CH_2 - [O - CH(CH_3) - CH_2]_{n'} - X$ where X denotes hydroxyl, hydrogen or $C_1$-$C_8$-alkyl and where n' is an integer in the range of from 2 to 100,
- a radical $- (CH_2)_{m'} - Y$, where Y denotes hydroxyl or halogen and where m' is an integer in the range of from 2 to 8,
- a radical $- (CH_2)_{m''} - N R''_2$ where R", independently of one another, each denotes hydrogen or a linear or branched, saturated or unsaturated $C_1$-$C_{20}$-alkyl and where m" is an integer in the range of from 2 to 8,
- a radical $- CH_2 - C(O) - O - (C_1$-$C_{20}$-alkyl),
- a radical $- CH_2 - C(O) - N R'''_2$ where R‴, independently of one another, each denotes hydrogen or a linear or branched, saturated or unsaturated $C_1$-$C_{20}$-alkyl,
- an (N-imidazolyl)-substituted $C_1$-$C_{20}$-alkyl.

**10.** The copolymer according to Claim 9, wherein in general formulae (A 1) and (A 2):

• n is 2;
• $R^1$ denotes hydrogen or $C_1$-$C_{12}$-alkyl, preferably hydrogen;
• $R^2$ and $R^{2'}$, independently from each other, each denote hydrogen, $C_1$-$C_{12}$-alkyl, phenyl or vinyl, preferably hydrogen;
• $R^3$ and $R^{3'}$, independently from each other, each denote hydrogen, $C_1$-$C_{12}$-alkyl, phenyl or vinyl; or $R^3$ and $R^{3'}$ form an exocyclic double bond or a spirocycloaliphatic group or a spiro-2-methylene-1,3-dioxepane group; or both radicals $R^3$ together with the carbon atoms to which they are attached form a fused benzene ring while both radicals $R^{3'}$ form part of a double bond or both radicals $R^3$ together with the carbon atoms to which they are attached form a fused $C_3$-$C_7$-cycloaliphatic ring while $R^{3'}$ is hydrogen;
• $R^4$ denotes a linear or branched, saturated or unsaturated $C_1$-$C_{20}$-alkyl, especially $C_1$-$C_{20}$-alkyl, preferably $C_2$-$C_{10}$-alkyl, more preferably $C_2$-$C_8$-alkyl, which may optionally comprise at least one heteroatom selected among oxygen, nitrogen and halogen and/or at least one cyclic aromatic or non-aromatic radical, and preferably denotes a linear or branched, saturated or unsaturated aliphatic $C_1$-$C_{20}$-alkyl, especially $C_1$-$C_{20}$-alkyl, preferably $C_2$-$C_{10}$-alkyl, more preferably $C_2$-$C_8$-alkyl.

**11.** The copolymer according to Claim 9 or Claim 10, wherein in general formulae (A 1) and (A 2):

• n is 2;
• $R^1$, $R^2$, $R^{2'}$, $R^3$ and $R^{3'}$ each denote hydrogen;
• $R^4$ denotes ethyl, butyl, especially n-butyl, octyl, especially 2-octyl, (iso)bornyl or stearyl, preferably ethyl, n-butyl or 2-octyl.

**12.** The copolymer according to any of Claims 9 to 11,

wherein, based on the copolymer, structural units (A 1) and (A 2) are present in a molar ratio of [structural unit (A 2)] : [structural unit (A 1)] in the range of from 10 : 90 to 99 : 1, especially in the range of from 15 : 85 to 98 : 2, preferably in the range of from 20 : 80 to 95 : 5, more preferably in the range of from 25 : 75 to 90 : 10
wherein the copolymer has a glass transition temperature Tg ranging from -60 °C to 100 °C, especially from -55 °C to 75 °C, preferably from -50 °C to 50 °C, more preferably from -45°C to -0 °C, especially as determined by differential scanning calorimetry, preferably in accordance with DIN EN ISO 11357-2:2014; and/or
wherein the copolymer has a polydispersity, especially as determined by size exclusion chromatography (SEC),

in the range of from 1.05 to 4, especially in the range of from 1.1 to 3.5, preferably in the range of from 1.15 to 3.5, more preferably in the range of from 1.2 to 3; and/or
wherein the copolymer is degradable, especially biodegradable, when exposed to pH conditions in the range of from 7 to 14, more particularly in the range of from 7.5 to 12; and/or
wherein the copolymer leads, when being incorporated into a polymeric composition, to degradability and/or removability thereof under neutral or basic (alkaline) conditions at ambient or at temperatures in the range of from 20 to 120 °C, more preferably in the range of from 23 to 100 °C, even more preferably in the range of from 25 to 90 °C.

**13.** A polymeric composition, particularly appropriate for use as a preferably degradable ingredient or component of adhesives, coating materials, lubricants, agricultural products, household cleaners, inks, personal care products, cosmetics, pharmaceuticals, packagings, drug delivery systems,
wherein the polymeric composition comprises at least one copolymer as defined in any of the preceding claims.

**14.** Use of a copolymer as defined in any of the preceding claims or of a polymeric composition as defined in any of the preceding claims as or in an adhesive, especially a pressure-sensitive adhesive.

**15.** Use of a copolymer as defined in any of the preceding claims or of a polymeric composition as defined in any of the preceding claims

as or in a coating material, especially a coating material selected from paints, lacquers, varnishes, colors, impregnations, glazes, enamels, finishes and protective coatings; and/or
as additives or compatibilizing agents, particularly for polymeric systems; and/or
for forming films, especially adhesive films or coating films, on material surfaces; and/or
as a preferably degradable ingredient or component of (i) adhesives, especially pressure-sensitive adhesives (PSAs); (ii) coating materials, especially coating materials selected from paints, lacquers, varnishes, colors, impregnations, glazes, enamels, finishes and protective coatings; (iii) lubricants; (iv) agricultural products, especially selected among seeds and seed-related products, soil treatment agents, soil conditioners and fertilizers, particularly seed coatings or soil conditioners; (v) household cleaners, especially laundry detergents and handwashings; (vi) inks; (vii) personal care products, especially face and body care products; (viii) cosmetics; (ix) pharmaceuticals; (x) packagings, especially food and other packagings; (xi) drug delivery systems, especially for pharmaceutical or nutritive applications; (xii) additives or compatibilizing agents (compatibilizers) determined for use in for polymeric systems; and/or
for or in (i) adhesives, especially pressure-sensitive adhesives (PSAs); (ii) coating materials, especially coating materials selected from paints, lacquers, varnishes, colors, impregnations, glazes, enamels, finishes and protective coatings; (iii) lubricants; (iv) agricultural products, especially selected among seeds and seed-related products, soil treatment agents, soil conditioners and fertilizers, particularly seed coatings or soil conditioners; (v) household cleaners, especially laundry detergents and handwashings; (vi) inks; (vii) personal care products, especially face and body care products; (viii) cosmetics; (ix) pharmaceuticals; (x) packagings, especially food and other packagings; (xi) drug delivery systems, especially for pharmaceutical or nutritive applications; (xii) additives or compatibilizing agents (compatibilizers) determined for use in polymeric systems; and/or
for providing degradability, especially biodegradability, or removability under defined conditions, particularly under mild or moderate conditions, especially under the conditions used during recycling or cleaning processes, preferably under neutral or basic (alkaline) conditions, to polymeric systems comprising the copolymer or the polymeric composition.

**16.** An adhesive, especially a pressure-sensitive adhesive, especially degradable or removable under defined conditions, particularly under mild or moderate conditions, especially under the conditions used during recycling or cleaning processes, preferably under neutral or basic (alkaline) conditions,
wherein the adhesive comprises a copolymer as defined in any of the preceding claims or a polymeric composition as defined in any of the preceding claims.

**17.** A coating material, especially degradable or removable under defined conditions, particularly under mild or moderate conditions, especially under the conditions used during recycling or cleaning processes, preferably under neutral or basic (alkaline) conditions, particularly a coating material selected from paints, lacquers, varnishes, colors, impregnations, glazes, enamels, finishes and protective coatings,
wherein the coating material comprises a copolymer as defined in any of the preceding claims or a polymeric composition as defined in any of the preceding claims.

**18.** A product selected from the group consisting of (i) lubricants; (ii) agricultural products, especially selected among seeds and seed-related products, soil treatment agents, soil conditioners and fertilizers, particularly seed coatings or soil conditioners; (iii) household cleaners, especially laundry detergents and handwashings; (iv) inks; (v) personal care products, especially face and body care products; (vi) cosmetics; (vii) pharmaceuticals; (viii) packagings, especially food and other packagings; (ix) drug delivery systems, especially for pharmaceutical or nutritive applications; (x) additives or compatibilizing agents (compatibilizers) determined for use in for polymeric systems, especially wherein the product is degradable or removable under defined conditions, particularly under mild or moderate conditions, especially under the conditions used during recycling or cleaning processes, preferably under neutral or basic (alkaline) conditions,
wherein the product comprises a copolymer as defined in any of the preceding claims or a polymeric composition as defined in any of the preceding claims.

**Patentansprüche**

**1.** Verfahren zur Herstellung eines Copolymers auf Basis von Ketenacetalen und Crotonsäureestern, wobei das Copolymer insbesondere geeignet ist zur Verwendung als vorzugsweise abbaubarer Bestandteil oder Komponente von Klebstoffen, Beschichtungsmaterialien, Schmiermitteln, landwirtschaftlichen Produkten, Haushaltsreinigern, Tinten, Körperpflegeprodukten, Kosmetika, Pharmazeutika, Verpackungen und Arzneimittelabgabesystemen (*drug delivery systems*),

wobei das Verfahren die Herstellung eines Copolymers durch radikalische Polymerisation umfasst, wobei das Copolymer durch Copolymerisation von Monomeren (Einheiten) (i), (ii) und gegebenenfalls (iii) gemäß der folgenden Definition erhältlich ist, wobei jede Einheit voneinander verschieden ist:

(i) mindestens ein erstes ethylenisch ungesättigtes Monomer, ausgewählt aus cyclischen Ketenacetalen gemäß der allgemeinen Formel (I)

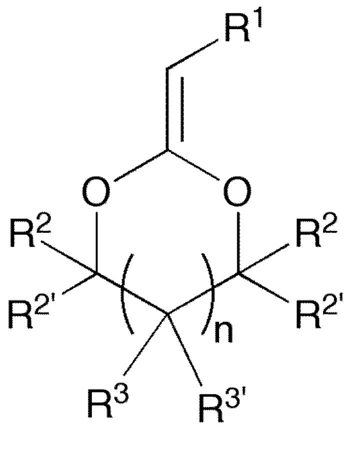

(I)

wobei in der allgemeinen Formel (I):

- n eine ganze Zahl 0, 1 oder 2 bedeutet;
- $R^1$ Wasserstoff oder $C_1$-$C_{12}$ -Alkyl bedeutet;
- $R^2$ und $R^{2'}$, unabhängig voneinander, jeweils Wasserstoff, $C_1$-$C_{12}$-Alkyl, Phenyl oder Vinyl bezeichnen; oder $R^2$ und $R^{2'}$ eine exocyclische Doppelbindung bilden; oder wenn n gleich 0 ist, beide Reste $R^2$ zusammen mit den Kohlenstoffatomen, an die sie gebunden sind, einen kondensierten Benzolring bilden, während beide Reste $R^{2'}$ Teil einer Doppelbindung sind oder beide Reste $R^2$ zusammen mit den Kohlenstoffatomen, an die sie gebunden sind, einen kondensierten $C_3$-$C_7$-cycloaliphatischen Ring bilden, während $R^{2'}$ Wasserstoff ist;
- $R^3$ und $R^{3'}$, unabhängig voneinander, jeweils Wasserstoff, $C_1$-$C_{12}$-Alkyl, Phenyl oder Vinyl bezeichnen; oder $R^3$ und $R^{3'}$ eine exocyclische Doppelbindung oder eine spirocycloaliphatische Gruppe oder eine Spiro-2-methylen-1,3-dioxepan-Gruppe bilden; oder wenn n gleich 2 ist, beide Reste $R^3$ zusammen mit den Kohlenstoffatomen, an die sie gebunden sind, einen kondensierten Benzolring bilden,

während beide Reste $R^{3'}$ Teil einer Doppelbindung sind oder beide Reste $R^3$ zusammen mit den Kohlenstoffatomen, an die sie gebunden sind, einen kondensierten $C_3$-$C_7$-cycloaliphatischen Ring bilden, während $R^{3'}$ Wasserstoff ist;

(ii) mindestens ein zweites ethylenisch ungesättigtes Monomer, ausgewählt aus Crotonsäureverbindungen der allgemeinen Formel (II)

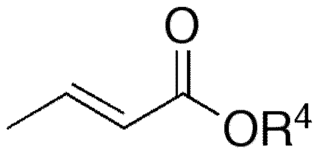

(II)

wobei in der allgemeinen Formel (II) $R^4$ ein linearer oder verzweigter, gesättigter oder ungesättigter $C_1$-$C_{20}$-Alkylrest, insbesondere $C_1$-$C_{20}$-Alkyl, vorzugsweise $C_2$-$C_{10}$-Alkyl, insbesondere $C_2$-$C_8$-Alkyl, ist, das gegebenenfalls mindestens ein Heteroatom, ausgewählt aus Sauerstoff, Stickstoff und Halogen, und/oder mindestens einen cyclischen aromatischen oder nichtaromatischen Rest enthält, und vorzugsweise einen linearen oder verzweigten, gesättigten oder ungesättigten aliphatischen $C_1$-$C_{20}$-Alkylrest, insbesondere $C_1$-$C_{20}$-Alkyl, vorzugsweise $C_2$-$C_{10}$-Alkyl, noch bevorzugter $C_2$-$C_8$-Alkyl und noch mehr bevorzugt $C_1$-$C_{20}$-Alkyl, insbesondere $C_1$-$C_{20}$-Alkyl, vorzugsweise $C_2$-$C_{10}$-Alkyl, noch bevorzugter $C_2$-$C_8$-Alkyl, bezeichnet;
(iii) gegebenenfalls mindestens ein drittes ethylenisch ungesättigtes Monomer, das sich von (i) und (ii) unterscheidet und mindestens eine ethylenisch ungesättigte Bindung umfasst;

wobei die radikalische Polymerisation als alternierende radikalische Ringöffnungspolymerisation mit teilweiser Ringöffnung von (i) dem mindestens einen ersten ethylenisch ungesättigten Monomer, ausgewählt aus cyclischen Ketenacetalen gemäß der allgemeinen Formel (I), durchgeführt wird;
wobei die Ringöffnung für 10 % bis 99 % von (i) dem mindestens einen ersten ethylenisch ungesättigten Monomer, ausgewählt aus cyclischen Ketenacetalen gemäß der allgemeinen Formel (I), induziert wird und/oder stattfindet,
wobei die radikalische Polymerisation als Bulk-Polymerisation durchgeführt wird oder in mindestens einem aprotischen wasserfreien organischen Lösungsmittel durchgeführt wird.

**2.** Verfahren nach Anspruch 1,
wobei (i) das mindestens eine erste ethylenisch ungesättigte Monomer, ausgewählt aus cyclischen Ketenacetalen gemäß der allgemeinen Formel (I), aus den folgenden Verbindungen ausgewählt ist:

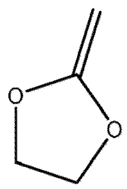 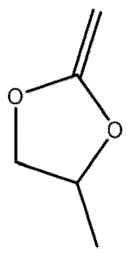 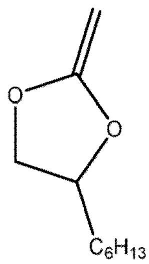 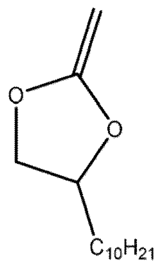 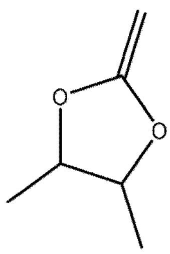 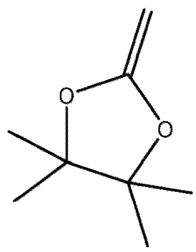

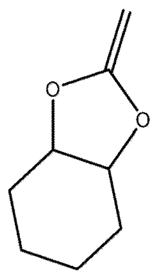
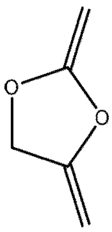
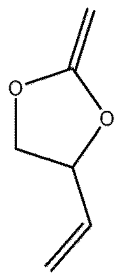
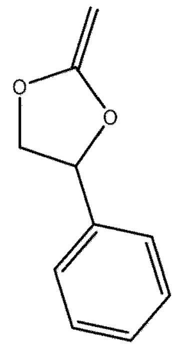
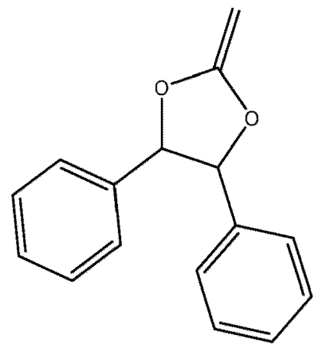

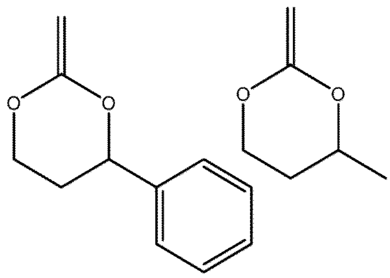
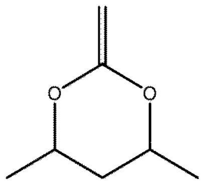
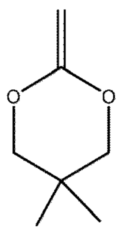
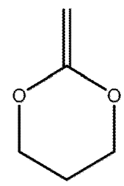

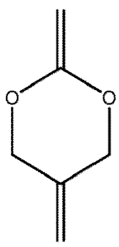
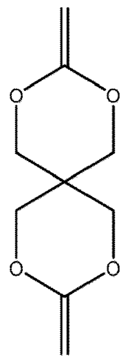
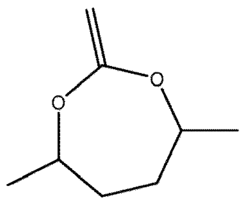
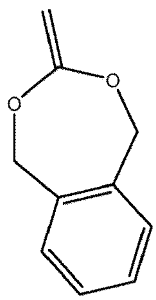
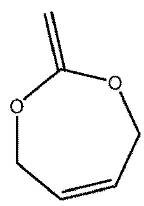

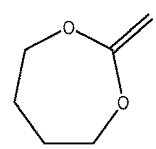

**3.** Verfahren nach Anspruch 1 oder Anspruch 2,
wobei (i) das mindestens eine erste ethylenisch ungesättigte Monomer, ausgewählt aus cyclischen Ketenacetalen gemäß der allgemeinen Formel (I), 2-Methylen-1,3-dioxepan (MDO) ist:

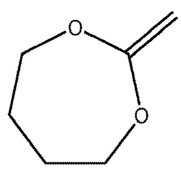

**4.** Verfahren nach einem der vorstehenden Ansprüche,

wobei (ii) das mindestens eine zweite ethylenisch ungesättigte Monomer, ausgewählt aus Crotonsäureverbindungen gemäß der allgemeinen Formel (II), ist:

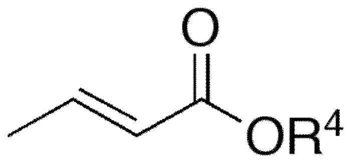 (II)

wobei in der allgemeinen Formel (II) $R^4$ Ethyl, Butyl, insbesondere n-Butyl, Octyl, insbesondere 2-Octyl, (Iso) bornyl oder Stearyl, vorzugsweise Ethyl, n-Butyl oder 2-Octyl, bedeutet.

**5.** Verfahren nach einem der vorstehenden Ansprüche,

wobei die radikalische Polymerisation in (weiterer) Gegenwart von (iv) mindestens einem Vernetzer (Vernetzungsmittel) durchgeführt wird;
insbesondere wobei der mindestens eine Vernetzer (Vernetzungsmittel) mindestens zwei ethylenisch ungesättigte Bindungen (Kohlenstoff-Kohlenstoff-Doppelbindungen) umfasst; und/oder
insbesondere wobei der mindestens eine Vernetzer (Vernetzungsmittel) ein di- oder polyfunktioneller Vernetzer ist, der mindestens zwei ethylenisch ungesättigte Bindungen (Kohlenstoff-Kohlenstoff-Doppelbindungen) umfasst; und/oder
insbesondere wobei der mindestens eine Vernetzer (Vernetzungsmittel) sich von den Monomeren (i) und (ii) und vom gegebenenfalls vorhandenen Monomer (iii) unterscheidet; und/oder
insbesondere wobei der mindestens eine Vernetzer (Vernetzungsmittel) ausgewählt ist aus der Gruppe von (i) Di(meth)acrylaten; (ii) Allyl(meth)acrylaten, (iii) Diallylmaleaten; (iv) Dicrotonaten; und (v) Oligoestern, die mindestens zwei ethylenisch ungesättigte Bindungen (Kohlenstoff-Kohlenstoff-Doppelbindungen) umfassen und die ferner von ε-Caprolacton (1-Oxa-2-oxocycloheptan) abgeleitete Molekülteile (Einheiten) und/oder von Lactid (3,6-Dimethyl-1,4-dioxan-2,5-dion), insbesondere von ε-Caprolacton (1-Oxa-2-oxocycloheptan) abgeleitete Molekülteile (Einheiten) und von Lactid (3,6-Dimethyl-1,4-dioxan-2,5-dion) abgeleitete Molekülteile (Einheiten) umfassen; sowie Kombinationen davon; und/oder
insbesondere wobei der mindestens eine Vernetzer (Vernetzungsmittel) ein Oligoester, insbesondere ein (Makro-)Monomer oder Oligomer ist, das mindestens zwei ethylenisch ungesättigte Bindungen (Kohlenstoff-Kohlenstoff-Doppelbindungen) umfasst und der ferner von ε-Caprolacton abgeleitete Molekülteile (Einheiten) umfasst (1-Oxa-2-oxocycloheptan) und/oder von Lactid (3,6-Dimethyl-1,4-dioxan-2,5-dion) abgeleitete Molekülteile (Einheiten) umfasst, insbesondere von ε-Caprolacton (1-Oxa-2-oxocycloheptan) abgeleitete Molekülteile (Einheiten) und von Lactid (3,6-Dimethyl-1,4-dioxan-2,5-dion) abgeleitete Molekülteile (Einheiten), wobei die von ε-Caprolacton abgeleiteten Molekülteile (Einheiten) durch die folgende Formel dargestellt werden (1)

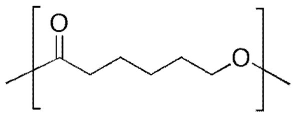 (1)

und wobei die von Lactid abgeleiteten Molekülteile (Einheiten) durch die folgende Formel (2) dargestellt werden:

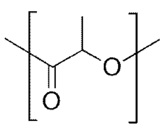 (2).

**6.** Verfahren nach einem der vorstehenden Ansprüche,
wobei die radikalische Polymerisation in mindestens einem aprotischen, wasserfreien organischen Lösungsmittel durchgeführt wird, das ausgewählt ist aus der Gruppe von 2,2,5,5-Tetramethyl-oxolan (TMO), Aceton, Acetonitril, Benzol, Chloroform, Cyclohexan, Dichlormethan, Dimethylformamid, Dimethylsulfoxid, Dioxan, Ethylacetat, Methylethylketon, Tetrahydrofuran, Toluol und Xylol.

**7.** Verfahren nach einem der vorstehenden Ansprüche,
wobei das Verfahren zur Herstellung eines Copolymers auf Basis von Ketenacetalen und Crotonsäureestern führt, wobei das Copolymer die folgenden Strukturheinheiten umfasst:

(I) Struktureinheiten der allgemeinen Formel (I A) und Struktureinheiten der allgemeinen Formel (I B)

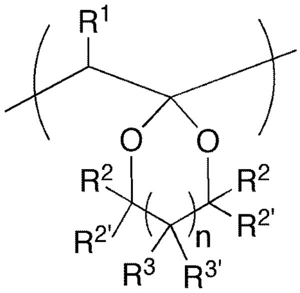

(I A)

und

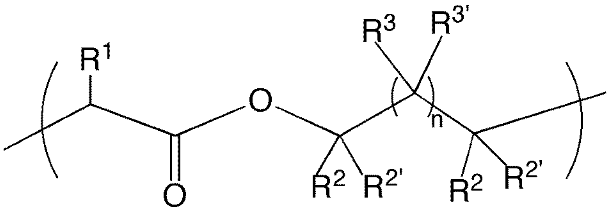

(I B)

wobei in den allgemeinen Formeln (I A) und (I B):

- n eine ganze Zahl 0, 1 oder 2 bedeutet;
- $R^1$ Wasserstoff oder $C_1$-$C_{12}$-Alkyl bedeutet;
- $R^2$ und $R^{2'}$, unabhängig voneinander, jeweils Wasserstoff, $C_1$-$C_{12}$-Alkyl, Phenyl oder Vinyl; oder $R^2$ und $R^{2'}$ eine exocyclische Doppelbindung bilden; oder wenn n 0 ist, beide Reste $R^2$ zusammen mit den Kohlenstoffatomen, an die sie gebunden sind, einen kondensierten Benzolring bilden, während beide Reste $R^{2'}$ Teil einer Doppelbindung sind oder beide Reste $R^2$ zusammen mit den Kohlenstoffatomen, an die sie gebunden sind, einen kondensierten $C_3$-$C_7$-cycloaliphatischen Ring bilden, während $R^{2'}$ Wasserstoff ist;
- $R^3$ und $R^{3'}$, unabhängig voneinander, Wasserstoff, $C_1$-$C_{12}$-Alkyl, Phenyl oder Vinyl; oder $R^3$ und $R^{3'}$ bilden eine exocyclische Doppelbindung oder eine spirocycloaliphatische Gruppe oder eine Spiro-2-methylen-1,3-dioxepan-Gruppe; oder wenn n 2 ist, bilden beide Reste $R^3$ zusammen mit den Kohlenstoffatomen, an die sie gebunden sind, einen kondensierten Benzolring, während beide Reste $R^{3'}$ Teil einer Doppelbindung sind oder beide Reste $R^3$ zusammen mit den Kohlenstoffatomen, an die sie gebunden sind, einen kondensierten $C_3$-$C_7$-cycloaliphatischen Ring bilden, während $R^{3'}$ Wasserstoff ist;

(II) Struktureinheiten der allgemeinen Formel (II A)

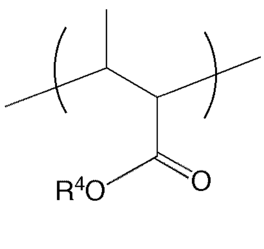

(II A)

wobei in der allgemeinen Formel (II A) $R^4$ Folgendes bedeutet:

- ein lineares oder verzweigtes, gesättigtes oder ungesättigtes $C_1$-$C_{20}$-Alkyl, insbesondere $C_1$-$C_{20}$-Alkyl, vorzugsweise $C_2$-$C_{10}$-Alkyl, noch bevorzugter $C_2$-$C_8$-Alkyl, das gegebenenfalls mindestens ein Heteroatom, ausgewählt aus Sauerstoff, Stickstoff und Halogen, und/oder mindestens einen cyclischen aromatischen oder nichtaromatischen Rest enthält,
- ein cyclischer aromatischer oder nicht-aromatischer Rest,
- ein Rest $-CH_2-(O-CH_2-CH_2)_{n'}-X$ oder $-CH_2-[O-CH(CH_3)-CH_2]_{n'}-X$, wobei X Hydroxyl, Wasserstoff

oder $C_1$-$C_8$-Alkyl bedeutet und n' eine ganze Zahl im Bereich von 2 bis 100 ist,

- ein Rest - $(CH_2)_{m'}$ - Y, wobei Y Hydroxyl oder Halogen bedeutet und m' eine ganze Zahl im Bereich von 2 bis 8 ist,
- ein Rest - $(CH_2)_{m''}$ - N $R''_2$ wobei R", unabhängig voneinander, jeweils Wasserstoff oder ein geradkettiges oder verzweigtes, gesättigtes oder ungesättigtes $C_1$-$C_{20}$-Alkyl bedeuten und wobei m" eine ganze Zahl im Bereich von 2 bis 8 ist,
- ein Rest - $CH_2$ - C(O) - O - ($C_1$-$C_{20}$-alkyl),
- ein Rest - $CH_2$ - C(O) - N $R'''_2$ wobei R''', unabhängig voneinander, jeweils Wasserstoff oder einen linearen oder verzweigten, gesättigten oder ungesättigten $C_1$-$C_{20}$-Alkylrest,
- ein (N-Imidazolyl)-substituiertes $C_1$-$C_{20}$-Alkyl.

**8.** Copolymer auf Basis von Ketenacetalen und Crotonsäureestern, das sich insbesondere zur Verwendung als vorzugsweise abbaubarer Bestandteil oder Komponente von Klebstoffen, Beschichtungsmaterialien, Schmiermitteln, landwirtschaftlichen Produkten, Haushaltsreinigern, Tinten, Körperpflegeprodukten, Kosmetika, Pharmazeutika, Verpackungen, Arzneimittelabgabesystemen eignet,
wobei das Copolymer durch ein Verfahren gemäß einem der vorstehenden Ansprüche erhältlich ist und/oder wobei das Copolymer durch ein Verfahren gemäß einem der vorstehenden Ansprüche erhalten wird.

**9.** Copolymer auf Basis von Ketenacetalen und Crotonsäureestern, insbesondere geeignet zur Verwendung als vorzugsweise abbaubarer Bestandteil oder Komponente von Klebstoffen, Beschichtungsmaterialien, Schmiermitteln, landwirtschaftlichen Produkten, Haushaltsreinigern, Tinten, Körperpflegeprodukten, Kosmetika, Pharmazeutika, Verpackungen, Arzneimittelabgabesystemen,

wobei das Copolymer die folgenden Struktureinheiten (A 1) und (A 2) der folgenden allgemeinen Formeln (A 1) und (A 2) umfasst:

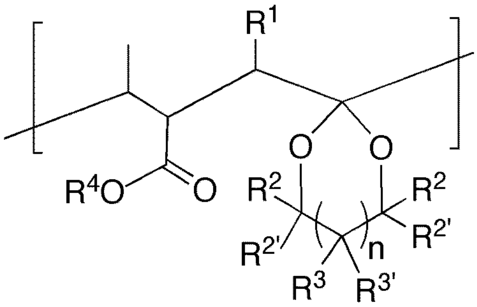

(A 1)

und

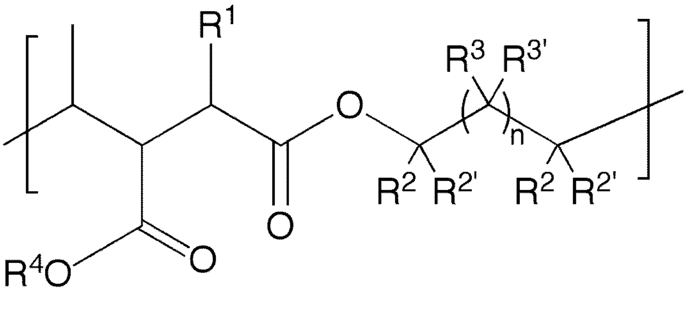

(A 2)

wobei in den allgemeinen Formeln (A 1) und (A 2):

- n eine ganze Zahl 0, 1 oder 2 bedeutet;
- $R^1$ Wasserstoff oder $C_1$-$C_{12}$-Alkyl bedeutet;
- $R^2$ und $R^{2'}$, unabhängig voneinander, jeweils Wasserstoff, $C_1$-$C_{12}$-Alkyl, Phenyl oder Vinyl; oder $R^2$ und $R^{2'}$ eine exocyclische Doppelbindung bilden; oder wenn n 0 ist, beide Reste $R^2$ zusammen mit den Kohlenstoffatomen, an die sie gebunden sind, einen kondensierten Benzolring bilden, während beide Reste $R^{2'}$ Teil

einer Doppelbindung sind oder beide Reste $R^2$ zusammen mit den Kohlenstoffatomen, an die sie gebunden sind, einen kondensierten $C_3$-$C_7$-cycloaliphatischen Ring bilden, während $R^{2'}$ Wasserstoff ist;
• $R^3$ und $R^{3'}$, unabhängig voneinander, jeweils Wasserstoff, $C_1$-$C_{12}$-Alkyl, Phenyl oder Vinyl; oder $R^3$ und $R^{3'}$ bilden eine exocyclische Doppelbindung oder eine spirocycloaliphatische Gruppe oder eine Spiro-2-methylen-1,3-dioxepan-Gruppe; oder wenn n 2 ist, bilden beide Reste $R^3$ zusammen mit den Kohlenstoffatomen, an die sie gebunden sind, einen kondensierten Benzolring, während beide Reste $R^{3'}$ Teil einer Doppelbindung sind oder beide Reste $R^3$ zusammen mit den Kohlenstoffatomen, an die sie gebunden sind, einen kondensierten $C_3$-$C_7$-cycloaliphatischen Ring bilden, während $R^{3'}$ Wasserstoff ist;
• $R^4$ bedeutet:

- ein lineares oder verzweigtes, gesättigtes oder ungesättigtes $C_1$-$C_{20}$-Alkyl, insbesondere $C_1$-$C_{20}$-Alkyl, vorzugsweise $C_2$-$C_{10}$-Alkyl, noch bevorzugter $C_2$-$C_8$-Alkyl, das gegebenenfalls mindestens ein Heteroatom, ausgewählt aus Sauerstoff, Stickstoff und Halogen, und/oder mindestens einen cyclischen aromatischen oder nicht-aromatischen Rest enthalten kann,
- ein cyclischer aromatischer oder nicht-aromatischer Rest,
- ein Rest $-CH_2-(O-CH_2-CH_2)_{n'}-X$ oder $CH_2-[O-CH(CH_3)-CH_2]_{n'}-X$, wobei X Hydroxyl, Wasserstoff oder $C_1$-$C_8$-Alkyl bedeutet und n' eine ganze Zahl im Bereich von 2 bis 100 ist,
- ein Rest $-(CH_2)_{m'}-Y$, wobei Y Hydroxyl oder Halogen bedeutet und m' eine ganze Zahl im Bereich von 2 bis 8 ist,
- ein Rest $-(CH_2)_{m''}-N R''_2$, wobei R", unabhängig voneinander, jeweils Wasserstoff oder ein geradkettiges oder verzweigtes, gesättigtes oder ungesättigtes $C_1$-$C_{20}$-Alkyl bedeuten und wobei m" eine ganze Zahl im Bereich von 2 bis 8 ist,
- ein Rest $-CH_2-C(O)-O-(C_1$-$C_{20}$-alkyl),
- ein Rest $-CH_2-C(O)-N R'''_2$ wobei R‴, unabhängig voneinander, jeweils Wasserstoff oder ein geradkettiges oder verzweigtes, gesättigtes oder ungesättigtes $C_1$-$C_{20}$ -Alkyl bedeuten,
- ein (N-Imidazolyl)-substituiertes $C_1$-$C_{20}$-Alkyl.

**10.** Copolymer nach Anspruch 9,
wobei in den allgemeinen Formeln (A 1) und (A 2):

• n Gleich 2 ist;
• $R^1$ Wasserstoff oder $C_1$-$C_{12}$-Alkyl, vorzugsweise Wasserstoff, bezeichnet;
• $R^2$ und $R^{2'}$, unabhängig voneinander, jeweils Wasserstoff, $C_1$-$C_{12}$-Alkyl, Phenyl oder Vinyl, vorzugsweise Wasserstoff, bedeuten;
• $R^3$ und $R^{3'}$, unabhängig voneinander, jeweils Wasserstoff, $C_1$-$C_{12}$-Alkyl, Phenyl oder Vinyl; oder $R^3$ und $R^{3'}$ bilden eine exocyclische Doppelbindung oder eine spirocycloaliphatische Gruppe oder eine Spiro-2-methylen-1,3-dioxepan-Gruppe; oder beide Reste $R^3$ bilden zusammen mit den Kohlenstoffatomen, an die sie gebunden sind, einen kondensierten Benzolring, während beide Reste $R^{3'}$ Teil einer Doppelbindung sind oder beide Reste $R^3$ zusammen mit den Kohlenstoffatomen, an die sie gebunden sind, einen kondensierten $C_3$-$C_7$-cycloaliphatischen Ring bilden, während $R^{3'}$ Wasserstoff ist;
• $R^4$ ein geradkettiges oder verzweigtes, gesättigtes oder ungesättigtes $C_1$-$C_{20}$-Alkyl, insbesondere $C_1$-$C_{20}$-Alkyl, vorzugsweise $C_2$-$C_{10}$-Alkyl, vorzugsweise $C_2$-$C_8$-Alkyl, das gegebenenfalls mindestens ein aus Sauerstoff, Stickstoff und Halogen ausgewähltes Heteroatom und/oder mindestens einen cyclischen aromatischen oder nichtaromatischen Rest enthalten kann, und vorzugsweise einen linearen oder verzweigten, gesättigten oder ungesättigten aliphatischen $C_1$-$C_{20}$-Alkylrest, insbesondere $C_1$-$C_{20}$-Alkyl, vorzugsweise $C_2$-$C_{10}$-Alkyl, noch bevorzugter $C_2$-$C_8$-Alkyl.

**11.** Copolymer gemäß Anspruch 9 oder Anspruch 10,
wobei in den allgemeinen Formeln (A 1) und (A 2):

• n 2 ist;
• $R^1$, $R^2$, $R^{2'}$, $R^3$ und $R^{3'}$ jeweils Wasserstoff bedeuten;
• $R^4$ Ethyl, Butyl, insbesondere n-Butyl, Octyl, insbesondere 2-Octyl, (Iso)bornyl oder Stearyl, vorzugsweise Ethyl, n-Butyl oder 2-Octyl, bedeuten.

**12.** Das Copolymer gemäß einem der Ansprüche 9 bis 11,

wobei, bezogen auf das Copolymer, die Struktureinheiten (A 1) und (A 2) in einem Molverhältnis von [Struktureinheit (A 2)] : [Struktureinheit (A 1)] im Bereich von 10 : 90 bis 99 : 1, insbesondere im Bereich von 15 : 85 bis 98 : 2, vorzugsweise im Bereich von 20 : 80 bis 95 : 5, noch bevorzugter im Bereich von 25 : 75 bis 90 : 10, vorhanden sind; und/oder

wobei das Copolymer eine Glasübergangstemperatur Tg im Bereich von -60 °C bis 100 °C, insbesondere von -55 °C bis 75 °C, vorzugsweise von -50 °C bis 50 °C, vorzugsweise von -45 °C bis -0 °C, insbesondere bestimmt durch Differential-Scanning-Kalorimetrie, vorzugsweise gemäß DIN EN ISO 11357-2:2014, aufweist; und/oder

wobei das Copolymer eine Polydispersität, insbesondere bestimmt durch Größenausschlusschromatographie (SEC), im Bereich von 1,05 bis 4, insbesondere im Bereich von 1,1 bis 3,5, vorzugsweise im Bereich von 1,15 bis 3,5, noch bevorzugter im Bereich von 1,2 bis 3, aufweist; und/oder

wobei das Copolymer abbaubar, insbesondere biologisch abbaubar, ist, wenn es pH-Bedingungen im Bereich von 7 bis 14, insbesondere im Bereich von 7,5 bis 12, ausgesetzt wird; und/oder

wobei das Copolymer, wenn es in eine Polymerzusammensetzung eingebracht wird, unter neutralen oder basischen (alkalischen) Bedingungen bei Umgebungstemperatur oder bei Temperaturen im Bereich von 20 bis 120 °C, vorzugsweise im Bereich von 23 bis 100 °C, noch bevorzugter im Bereich von 25 bis 90 °C, zu einer Abbaubarkeit und/oder Entfernbarkeit derselben führt.

**13.** Polymerzusammensetzung, insbesondere geeignet zur Verwendung als vorzugsweise abbaubarer Bestandteil oder Komponente von Klebstoffen, Beschichtungsmaterialien, Schmiermitteln, landwirtschaftlichen Produkten, Haushaltsreinigern, Tinten, Körperpflegeprodukten, Kosmetika, Pharmazeutika, Verpackungen, Arzneimittelabgabesystemen,
wobei die Polymerzusammensetzung mindestens ein Copolymer gemäß einem der vorstehenden Ansprüche umfasst.

**14.** Verwendung eines Copolymers gemäß einem der vorstehenden Ansprüche oder einer polymeren Zusammensetzung gemäß einem der vorstehenden Ansprüche als oder in einem Klebstoff, insbesondere einem Haftklebstoff.

**15.** Verwendung eines Copolymers gemäß einem der vorstehenden Ansprüche oder einer polymeren Zusammensetzung gemäß einem der vorstehenden Ansprüche

als oder in einem Beschichtungsmaterial, insbesondere einem Beschichtungsmaterial, ausgewählt aus Farben, Lacken, Lasuren, Imprägnierungen, Glasuren, Emaille, Veredelungen und Schutzbeschichtungen; und/oder

als Additive oder Kompatibilisierungsmittel, insbesondere für polymere Systeme; und/oder

zur Bildung von Filmen, insbesondere Klebefilmen oder Beschichtungsfilmen, auf Materialoberflächen; und/oder

als vorzugsweise abbaubarer Bestandteil oder Komponente von (i) Klebstoffen, insbesondere Haftklebstoffen (PSAs); (ii) Beschichtungsstoffen, insbesondere Beschichtungsstoffen aus der Gruppe der Farben, Lacke, Lasuren, Imprägnierungen, Glasuren, Emaille, Veredelungen und Schutzbeschichtungen; (iii) Schmierstoffen; (iv) landwirtschaftlichen Erzeugnissen, insbesondere ausgewählt aus Saatgut und Saatgutverwandten Erzeugnissen, Bodenbehandlungsmitteln, Bodenverbesserungsmitteln und Düngemitteln, insbesondere Saatgutbeschichtungen oder Bodenverbesserungsmitteln; (v) Haushaltsreinigern, insbesondere Waschmitteln und Handwaschmitteln; (vi) Druckfarben; (vii) Körperpflegeprodukte, insbesondere Gesichts- und Körperpflegeprodukte; (viii) Kosmetika; (ix) Arzneimittel; (x) Verpackungen, insbesondere Lebensmittelverpackungen und andere Verpackungen; (xi) Arzneimittelabgabesysteme, insbesondere für pharmazeutische oder ernährungsphysiologische Anwendungen; (xii) Additive oder Kompatibilisierungsmittel (Kompatibilisatoren), die zur Verwendung in polymeren Systemen bestimmt sind; und/oder

für oder in (i) Klebstoffen, insbesondere Haftklebstoffen (PSAs); (ii) Beschichtungsmaterialien, insbesondere Beschichtungsmaterialien, ausgewählt aus Farben, Lacken, Lasuren, Imprägnierungen, Glasuren, Emaille, Veredelungen und Schutzbeschichtungen; (iii) Schmiermitteln; (iv) landwirtschaftlichen Produkten, insbesondere ausgewählt aus Saatgut und Saatgutprodukten, Bodenbehandlungsmitteln, Bodenverbesserungsmitteln und Düngemitteln, insbesondere Saatgutbeschichtungen oder Bodenverbesserungsmitteln; (v) Haushaltsreinigern, insbesondere Waschmitteln und Handwaschmitteln; (vi) Druckfarben; (vii) Körperpflegeprodukten, insbesondere Gesichts- und Körperpflegeprodukten; (viii) Kosmetika; (ix) Arzneimitteln; (x) Verpackungen, insbesondere Lebensmittelverpackungen und andere Verpackungen; (xi) Arzneimittelabgabesystemen, insbesondere für pharmazeutische oder ernährungsphysiologische Anwendungen; (xii) Additiven oder Kompatibilisierungsmitteln (Kompatibilisatoren), die zur Verwendung in Polymersystemen bestimmt sind; und/oder

zur Verleihung der Abbaubarkeit, insbesondere der biologischen Abbaubarkeit, oder der Entfernbarkeit unter definierten Bedingungen, insbesondere unter milden oder moderaten Bedingungen, insbesondere unter den Bedingungen, die während Recycling- oder Reinigungsprozessen herrschen, vorzugsweise unter neutralen oder basischen (alkalischen) Bedingungen, an Polymersysteme, die das Copolymer oder die Polymerzusammensetzung enthalten.

**16.** Klebstoff, insbesondere Haftklebstoff, der unter definierten Bedingungen, insbesondere unter milden oder moderaten Bedingungen, insbesondere unter den Bedingungen, die bei Recycling- oder Reinigungsprozessen verwendet werden, vorzugsweise unter neutralen oder basischen (alkalischen) Bedingungen, abbaubar oder entfernbar ist, wobei der Klebstoff ein Copolymer gemäß einem der vorstehenden Ansprüche oder eine Polymerzusammensetzung gemäß einem der vorstehenden Ansprüche umfasst.

**17.** Beschichtungsmaterial, das insbesondere unter definierten Bedingungen, insbesondere unter milden oder moderaten Bedingungen, insbesondere unter den bei Recycling- oder Reinigungsprozessen verwendeten Bedingungen, vorzugsweise unter neutralen oder basischen (alkalischen) Bedingungen, abbaubar oder entfernbar ist, insbesondere Beschichtungsmaterial, ausgewählt aus Farben, Lacken, Lasuren, Imprägnierungen, Glasuren, Emaille, Veredelungen und Schutzbeschichtungen,
wobei das Beschichtungsmaterial ein Copolymer gemäß einem der vorstehenden Ansprüche oder eine Polymerzusammensetzung gemäß einem der vorstehenden Ansprüche umfasst.

**18.** Produkt, ausgewählt aus der Gruppe bestehend aus (i) Schmiermitteln; (ii) landwirtschaftlichen Erzeugnissen, insbesondere ausgewählt aus Saatgut und saatgutbezogenen Erzeugnissen, Bodenbehandlungsmitteln, Bodenverbesserungsmitteln und Düngemitteln, insbesondere Saatgutbeschichtungen oder Bodenverbesserungsmitteln; (iii) Haushaltsreinigern, insbesondere Waschmitteln und Handwaschmitteln; (iv) Druckfarben; (v) Körperpflegeprodukten, insbesondere Gesichts- und Körperpflegeprodukten; (vi) Kosmetika; (vii) Arzneimitteln; (viii) Verpackungen, insbesondere Lebensmittelverpackungen und anderen Verpackungen; (ix) Arzneimittelabgabesystemen, insbesondere für pharmazeutische oder ernährungsphysiologische Anwendungen; (x) Additiven oder Kompatibilisierungsmitteln (Kompatibilisatoren), die zur Verwendung in Polymersystemen bestimmt sind, insbesondere wobei das Produkt unter definierten Bedingungen, insbesondere unter milden oder moderaten Bedingungen, insbesondere unter den bei Recycling- oder Reinigungsprozessen verwendeten Bedingungen, vorzugsweise unter neutralen oder basischen (alkalischen) Bedingungen, abbaubar oder entfernbar ist,
wobei das Produkt ein Copolymer gemäß einem der vorstehenden Ansprüche oder eine Polymerzusammensetzung gemäß einem der vorstehenden Ansprüche umfasst.

## Revendications

**1.** Procédé de production d'un copolymère à base d'acétals de cétène et d'esters crotoniques, lequel copolymère étant particulièrement approprié pour être utilisé comme ingrédient ou composant de préférence dégradable dans des adhésifs, des matériaux de revêtement, des lubrifiants, des produits agricoles, des produits d'entretien ménager, des encres, des produits de soins personnels, des cosmétiques, des produits pharmaceutiques, des emballages, des systèmes d'administration de médicaments,

où le procédé comprend la production, par polymérisation radicalaire, d'un copolymère pouvant être obtenu par copolymérisation de monomères (groupements) (i), (ii) et le cas échéant (iii) selon la définition suivante et chacun étant différent les uns des autres:

(i) au moins un premier monomère éthyléniquement insaturé choisi parmi les acétals de cétène cycliques selon la formule générale (I)

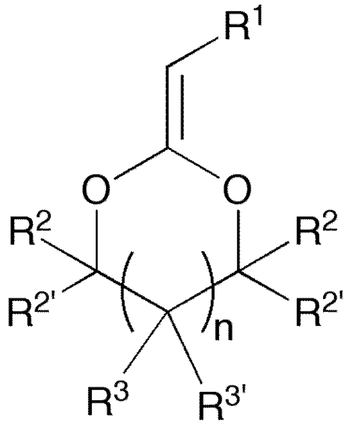

(I)

où, dans la formule générale (I):

- n désigne un nombre entier 0, 1 ou 2;
- $R^1$ désigne un atome d'hydrogène ou un groupe alkyle en $C_1$-$C_{12}$;
- $R^2$ et $R^{2'}$, indépendamment l'un de l'autre, désignent chacun un atome d'hydrogène, un groupe $C_1$-$C_{12}$-alkyle, un groupe phényle ou vinyle; ou $R^2$ et $R^{2'}$ forment une double liaison exocyclique; ou lorsque n est égal à 0, les deux radicaux $R^2$ forment avec les atomes de carbone auxquels ils sont liés, un cycle benzénique condensé, tandis que les deux radicaux $R^{2'}$ font partie d'une double liaison ou les deux radicaux $R^2$ forment ensemble avec les atomes de carbone auxquels ils sont liés un cycle cycloaliphatique en $C_3$-$C_7$ condensé, tandis que $R^{2'}$ représente l'hydrogène;
- $R^3$ et $R^{3'}$, indépendamment l'un de l'autre, désignent chacun un atome d'hydrogène, un groupe $C_1$-$C_{12}$-alkyle, phényle ou vinyle; ou $R^3$ et $R^{3'}$ forment une double liaison exocyclique ou un groupe spirocycloaliphatique ou un groupe spiro-2-méthylène-1,3-dioxépane; ou lorsque n est égal à 2, les deux radicaux $R^3$ forment avec les atomes de carbone auxquels ils sont liés, un cycle benzénique condensé, tandis que les deux radicaux $R^{3'}$ font partie d'une double liaison ou les deux radicaux $R^3$ forment ensemble avec les atomes de carbone auxquels ils sont liés un cycle cycloaliphatique en $C_3$-$C_7$ condensé tandis que $R^{3'}$ est un atome d'hydrogène;

(ii) au moins un deuxième monomère éthyléniquement insaturé choisi parmi les composés crotoniques selon la formule générale (II)

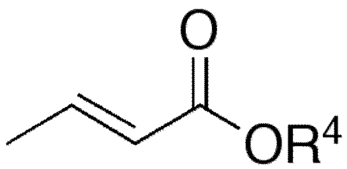

(II)

où, dans la formule générale (II), $R^4$ représente un groupe alkyle en $C_1$-$C_{20}$ linéaire ou ramifié, saturé ou insaturé, en particulier un groupe alkyle en $C_1$-$C_{20}$, de préférence un groupe alkyle en $C_2$-$C_{10}$-alkyle, plus préférentiellement $C_2$-$C_8$-alkyle, qui peut le cas échéant comprendre au moins un hétéroatome choisi parmi l'oxygène, l'azote et l'halogène et/ou au moins un radical aromatique ou non aromatique cyclique, et désigne de préférence un groupe aliphatique $C_1$-$C_{20}$-alkyle linéaire ou ramifié, saturé ou insaturé, en particulier $C_1$-$C_{20}$-alkyle, plus préférentiellement $C_2$-$C_{10}$-alkyle, plus préférentiellement $C_2$-$C_8$-alkyle et encore plus préférentiellement désigne $C_1$-$C_{20}$-alkyle, en particulier $C_1$-$C_{20}$-alkyle, de préférence $C_2$-$C_{10}$-alkyle, plus préférentiellement $C_2$-$C_8$-alkyle;

(iii) le cas échéant, au moins un troisième monomère éthyléniquement insaturé différent de (i) et (ii) et comprenant au moins une liaison éthyléniquement insaturée;

où la polymérisation radicalaire est réalisée sous forme d'une polymérisation radicalaire alternée avec ouverture partielle du cycle de (i) le au moins un premier monomère éthyléniquement insaturé choisi parmi les acétals de cétène cycliques selon la formule générale (I);

où l'ouverture du cycle est induite et/ou a lieu pour 10 % à 99 % de (i) le ou les premiers monomères éthyléniquement insaturés choisis parmi les acétals de cétène cycliques selon la formule générale (I), où la polymérisation radicalaire est réalisée sous forme de polymérisation en masse ou dans au moins un solvant organique aprotique exempt d'eau.

**2.** Procédé selon la revendication 1, où (i) le au moins un premier monomère éthyléniquement insaturé choisi parmi les acétals de cétène cycliques selon la formule générale (I) est choisi parmi les composés suivants:

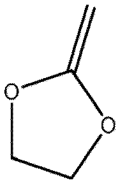 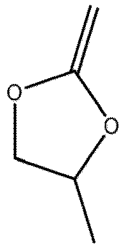 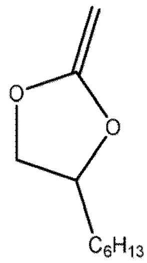 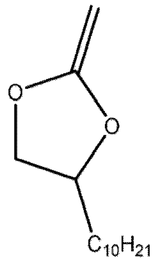 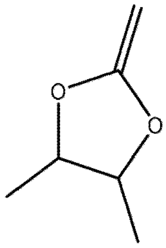 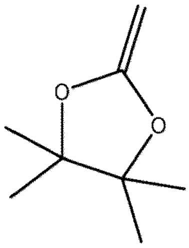

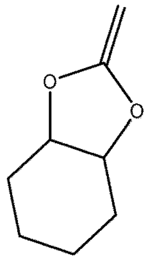 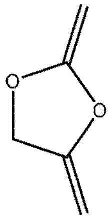 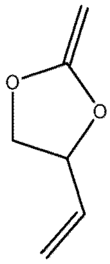 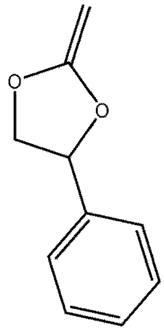 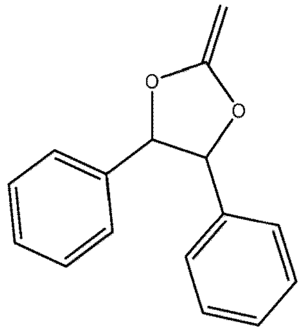

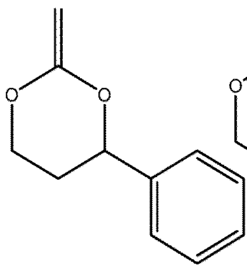 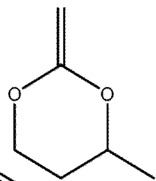 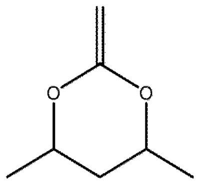 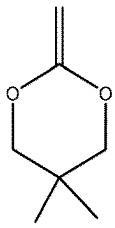 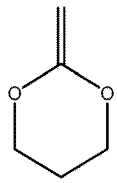

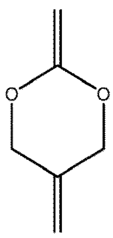 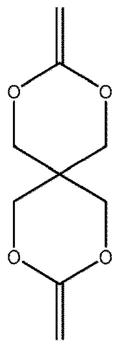 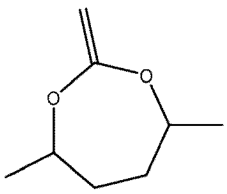 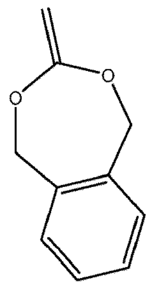 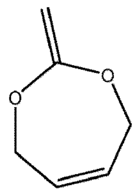

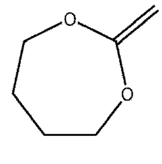

3. Procédé selon la revendication 1 ou la revendication 2, où (i) le au moins un premier monomère éthyléniquement insaturé choisi parmi les acétals de cétène cycliques selon la formule générale (I) est le 2-méthylène-1,3-dioxépane (MDO):

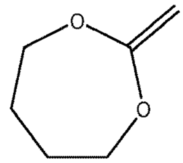

4. Procédé selon l'une quelconque des revendications précédentes,

où (ii) le au moins un deuxième monomère éthyléniquement insaturé choisi parmi les composés crotoniques selon la formule générale (II) est:

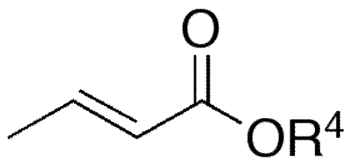 (II)

où, dans la formule générale (II), $R^4$ représente un groupe éthyle, butyle, en particulier n-butyle, octyle, en particulier 2-octyle, (iso)bornyle ou stéaryle, de préférence un groupe éthyle, n-butyle ou 2-octyle.

5. Procédé selon l'une quelconque des revendications précédentes,

où la polymérisation radicalaire est effectuée en présence (supplémentaire) de (iv) au moins un agent de réticulation;
en particulier où le au moins un agent de réticulation comprend au moins deux liaisons éthyléniquement insaturées (liaisons doubles carbone-carbone); et/ou
en particulier lorsque le ou les agents de réticulation (agents de réticulation) sont des agents de réticulation di- ou polyfonctionnels comprenant au moins deux liaisons éthyléniquement insaturées (liaisons doubles carbone-carbone); et/ou
en particulier lorsque le ou les agents de réticulation (agents de réticulation) sont différents des monomères (i) et (ii) et du monomère facultatif (iii); et/ou
en particulier où le ou les agents de réticulation (agents de réticulation) sont choisis dans le groupe constitué par (i) les di(méth)acrylates; (ii) les allyl(méth)acrylates, (iii) les maléates de diallyle; (iv) les dicrotonates; et (v) les oligoesters qui comprennent au moins deux liaisons éthyléniquement insaturées (doubles liaisons carbone-carbone) et qui comprennent en outre des groupements (unités) dérivés de l'ε-caprolactone (1-oxa-2-oxocycloheptane) et/ou des groupements (unités) dérivés du lactide (3,6-diméthyl-1,4-dioxan-2,5-dione), en particulier des groupements (unités) dérivés de l'ε-caprolactone (1-oxa-2-oxocycloheptane) et des groupements (unités) dérivés du lactide (3,6-diméthyl-1,4-dioxan-2,5-dione); ainsi que des combinaisons de ceux-ci; et/ou
en particulier où le au moins un agent de réticulation est un oligoester, en particulier un (macro)monomère ou un oligomère, qui comprend au moins deux liaisons éthyléniquement insaturées (liaisons doubles carbone-carbone) et qui comprend en outre des groupements (unités) dérivés de l'ε-caprolactone (1-oxa-2-oxocycloheptane) et/ou des groupements (unités) dérivés du lactide (3,6-diméthyl-1,4-dioxane-2,5-dione), en particulier des groupements (unités) dérivés de l'ε-caprolactone (1-oxa-2-oxocycloheptane) et des groupements (unités) dérivés du lactide (3,6-diméthyl-1,4-dioxane-2,5-dione), dans lesquels les groupements (unités) dérivés de l'ε-caprolactone sont représentés par la formule suivante (1):

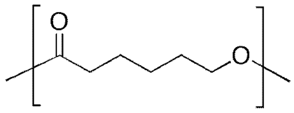

(1)

et où les groupements (unités) dérivés du lactide sont représentés par la formule (2) suivante:

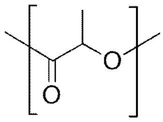

(2).

6. Procédé selon l'une quelconque des revendications précédentes,
où la polymérisation radicalaire est effectuée dans au moins un solvant organique aprotique exempt d'eau choisi dans le groupe constitué par le 2,2,5,5-tétraméthyloxolane (TMO), l'acétone, l'acétonitrile, le benzène, le chloroforme, le cyclohexane, le dichlorométhane, le diméthylformamide, le diméthylsulfoxyde, le dioxane, l'acétate d'éthyle, méthyléthylcétone, tétrahydrofurane, toluène et xylène.

7. Procédé selon l'une quelconque des revendications précédentes,
où le procédé aboutit à la production d'un copolymère à base d'acétals de cétène et d'esters crotoniques, lequel copolymère comprend les unités structurales suivantes:

(I) des unités structurales de formule générale (I A) et des unités structurales de formule générale (I B)

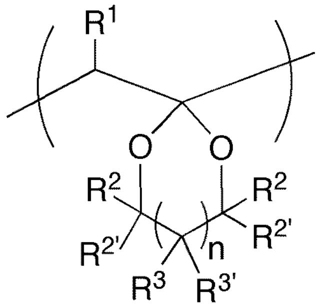

(I A)

et

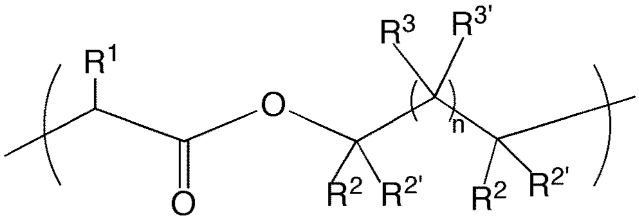

(I B)

dans lesquelles, dans les formules générales (I A) et (I B):

- n désigne un nombre entier 0, 1 ou 2;
- $R^1$ désigne un atome d'hydrogène ou un groupe alkyle en $C_1$-$C_{12}$;
- $R^2$ et $R^{2'}$, indépendamment l'un de l'autre, désignent chacun un atome d'hydrogène, un groupe $C_1$-$C_{12}$-alkyle, un groupe phényle ou vinyle; ou $R^2$ et $R^{2'}$ forment une double liaison exocyclique; ou lorsque n est égal à 0, les deux radicaux $R^2$ forment avec les atomes de carbone auxquels ils sont liés, un cycle benzénique condensé, tandis que les deux radicaux $R^{2'}$ font partie d'une double liaison ou les deux radicaux $R^2$ forment ensemble avec les atomes de carbone auxquels ils sont liés un cycle cycloaliphatique en $C_3$-$C_7$ condensé tandis que $R^{2'}$ est un atome d'hydrogène;
- $R^3$ et $R^{3'}$, indépendamment l'un de l'autre, désignent chacun un atome d'hydrogène, un groupe $C_1$-$C_{12}$-

alkyle, phényle ou vinyle; ou $R^3$ et $R^{3'}$ forment une double liaison exocyclique ou un groupe spirocycloaliphatique ou un groupe spiro-2-méthylène-1,3-dioxépane; ou lorsque n est égal à 2, les deux radicaux $R^3$ forment avec les atomes de carbone auxquels ils sont liés, un cycle benzénique condensé, tandis que les deux radicaux $R^{3'}$ font partie d'une double liaison ou les deux radicaux $R^3$ forment ensemble avec les atomes de carbone auxquels ils sont liés un cycle cycloaliphatique en $C_3$-$C_7$ condensé tandis que $R^{3'}$ est un atome d'hydrogène;

(II) unités structurales de formule générale (II A)

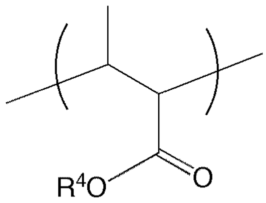

(II A)

où, dans la formule générale (II A), $R^4$ représente:

- un groupe alkyle en $C_1$-$C_{20}$ linéaire ou ramifié, saturé ou insaturé, en particulier en $C_1$-$C_{20}$-alkyle, de préférence $C_2$-$C_{10}$-alkyle, plus préférentiellement $C_2$-$C_8$-alkyle, qui peut le cas échéant comprendre au moins un hétéroatome choisi parmi l'oxygène, l'azote et l'halogène et/ou au moins un radical cyclique aromatique ou non aromatique,
- un radical cyclique aromatique ou non aromatique,
- un radical $- CH_2 - (O - CH_2 - CH_2)_{n'} - X$ ou $- CH_2 - [O - CH(CH_3) - CH_2]_{n'} - X$ où X désigne un hydroxyle, un hydrogène ou un groupe alkyle en $C_1$-$C_8$ et où n' est un nombre entier compris entre 2 et 100,
- un radical $- (CH_2)_{m'} - Y$, où Y désigne un groupe hydroxyle ou un halogène et où m' est un nombre entier compris entre 2 et 8,
- un radical $- (CH_2)_{m''} - N R''_2$ où R", indépendamment les uns des autres, désignent chacun un atome d'hydrogène ou un groupe alkyle en $C_1$-$C_{20}$ linéaire ou ramifié, saturé ou insaturé, et où m" est un nombre entier compris entre 2 et 8,
- un radical $- CH_2 - C(O) - O - (C_1$-$C_{20}$-alkyle),
- un radical $- CH_2 - C(O) - N R'''_2$ où R''', indépendamment les uns des autres, représentent chacun un atome d'hydrogène ou un groupe alkyle en $C_1$-$C_{20}$ linéaire ou ramifié, saturé ou insaturé,
- un groupe alkyle en $C_1$-$C_{20}$ substitué par un groupe (N-imidazolyle).

**8.** Copolymère à base d'acétals de cétène et d'esters crotoniques, particulièrement approprié pour être utilisé comme ingrédient ou composant de préférence dégradable dans des adhésifs, des matériaux de revêtement, des lubrifiants, des produits agricoles, des produits d'entretien ménager, des encres, des produits de soins personnels, des cosmétiques, des produits pharmaceutiques, des emballages, des systèmes d'administration de médicaments,
où le copolymère peut être obtenu par un procédé tel que défini dans l'une quelconque des revendications précédentes et/ou où le copolymère est obtenu par un procédé tel que défini dans l'une quelconque des revendications précédentes.

**9.** Copolymère à base d'acétals de cétène et d'esters crotoniques, particulièrement approprié pour être utilisé comme ingrédient ou composant de préférence dégradable dans des adhésifs, des matériaux de revêtement, des lubrifiants, des produits agricoles, des produits d'entretien ménager, des encres, des produits de soins personnels, des cosmétiques, des produits pharmaceutiques, des emballages, des systèmes d'administration de médicaments,

où le copolymère comprend les unités structurales (A 1) et (A 2) suivantes, de formules générales (A 1) et (A 2) suivantes

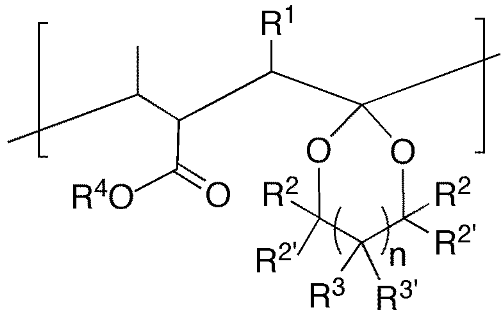

(A 1)

et

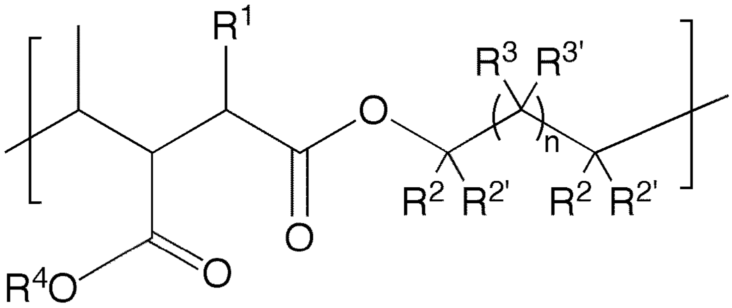

(A 2)

dans lesquelles, dans les formules générales (A 1) et (A 2):

- n désigne un nombre entier 0, 1 ou 2;
- $R^1$ désigne un atome d'hydrogène ou un groupe alkyle en $C_1$-$C_{12}$;
- $R^2$ et $R^{2'}$, indépendamment l'un de l'autre, désignent chacun un atome d'hydrogène, un groupe $C_1$-$C_{12}$-alkyle, un groupe phényle ou vinyle; ou $R^2$ et $R^{2'}$ forment une double liaison exocyclique; ou lorsque n est égal à 0, les deux radicaux $R^2$ forment avec les atomes de carbone auxquels ils sont liés, un cycle benzénique condensé, tandis que les deux radicaux $R^{2'}$ font partie d'une double liaison ou les deux radicaux $R^2$ forment ensemble avec les atomes de carbone auxquels ils sont liés un cycle cycloaliphatique en $C_3$-$C_7$ condensé, tandis que $R^{2'}$ représente l'hydrogène;
- $R^3$ et $R^{3'}$, indépendamment l'un de l'autre, désignent chacun un atome d'hydrogène, un groupe $C_1$-$C_{12}$-alkyle, phényle ou vinyle; ou $R^3$ et $R^{3'}$ forment une double liaison exocyclique ou un groupe spirocycloaliphatique ou un groupe spiro-2-méthylène-1,3-dioxépane; ou lorsque n est égal à 2, les deux radicaux $R^3$ forment avec les atomes de carbone auxquels ils sont liés, un cycle benzénique condensé, tandis que les deux radicaux $R^{3'}$ font partie d'une double liaison ou les deux radicaux $R^3$ forment, avec les atomes de carbone auxquels ils sont liés, un cycle cycloaliphatique en $C_3$-$C_7$ condensé, tandis que $R^{3'}$ est un atome d'hydrogène;
- $R^4$ désigne:

  - un groupe alkyle en $C_1$ à $C_{20}$ linéaire ou ramifié, saturé ou insaturé, en particulier en $C_1$ à $C_{20}$-alkyle, de préférence $C_2$-$C_{10}$-alkyle, plus préférentiellement $C_2$-$C_8$-alkyle, qui peut le cas échéant comprendre au moins un hétéroatome choisi parmi l'oxygène, l'azote et l'halogène et/ou au moins un radical cyclique aromatique ou non aromatique,
  - un radical cyclique aromatique ou non aromatique,
  - un radical - $CH_2$ - (O - $CH_2$ - $CH_2)_{n'}$ - X ou $CH_2$ - [O - $CH(CH_3)$ - $CH_2]_{n'}$ - X où X désigne un hydroxyle, un hydrogène ou un groupe alkyle en $C_1$-$C_8$ et où n' est un nombre entier compris entre 2 et 100,
  - un radical - $(CH_2)_{m'}$ - Y, où Y désigne un groupe hydroxyle ou un halogène et où m' est un nombre entier compris entre 2 et 8,
  - un radical - $(CH_2)_{m''}$ - N $R''_2$ où R'', indépendamment les uns des autres, désignent chacun un atome d'hydrogène ou un groupe alkyle en $C_1$-$C_{20}$ linéaire ou ramifié, saturé ou insaturé, et où m'' est un nombre entier compris entre 2 et 8,
  - un radical - $CH_2$ - C(O) - O - ($C_1$-$C_{20}$-alkyle),
  - un radical - $CH_2$ - C(O) - N $R'''_2$ où R''', indépendamment les uns des autres, représentent chacun un

atome d'hydrogène ou un groupe alkyle en $C_1$-$C_{20}$ linéaire ou ramifié, saturé ou insaturé,
- un groupe alkyle en $C_1$-$C_{20}$ substitué par un groupe (N-imidazolyle).

**10.** Le copolymère selon la revendication 9,
où, dans les formules générales (A 1) et (A 2):

- n est égal à 2
- $R^1$ désigne un atome d'hydrogène ou un groupe alkyle en $C_1$-$C_{12}$, de préférence un atome d'hydrogène;
- $R^2$ et $R^{2'}$, indépendamment l'un de l'autre, désignent chacun un atome d'hydrogène, un groupe alkyle en $C_1$-$C_{12}$, un groupe phényle ou un groupe vinyle, de préférence un atome d'hydrogène;
- $R^3$ et $R^{3'}$, indépendamment l'un de l'autre, désignent chacun un atome d'hydrogène, un groupe $C_1$-$C_{12}$-alkyle, phényle ou vinyle; ou $R^3$ et $R^{3'}$ forment une double liaison exocyclique ou un groupe spirocycloaliphatique ou un groupe spiro-2-méthylène-1,3-dioxépane; ou les deux radicaux $R^3$ forment avec les atomes de carbone auxquels ils sont liés, un cycle benzénique condensé, tandis que les deux radicaux $R^{3'}$ font partie d'une double liaison ou les deux radicaux $R^3$ forment ensemble avec les atomes de carbone auxquels ils sont liés un cycle cycloaliphatique en $C_3$-$C_7$ condensé, tandis que $R^{3'}$ représente un atome d'hydrogène;
- $R^4$ désigne un groupe alkyle en $C_1$-$C_{20}$ linéaire ou ramifié, saturé ou insaturé, en particulier un groupe alkyle en $C_1$-$C_{20}$, de préférence un groupe alkyle en $C_2$-$C_{10}$-alkyle, de préférence $C_2$-$C_8$-alkyle, qui peut le cas échéant comprendre au moins un hétéroatome choisi parmi l'oxygène, l'azote et l'halogène et/ou au moins un radical cyclique aromatique ou non aromatique, et désigne de préférence un groupe aliphatique $C_1$-$C_{20}$-alkyle, en particulier $C_1$-$C_{20}$-alkyle, de préférence $C_2$-$C_{10}$-alkyle, plus préférentiellement $C_2$-$C_8$-alkyle.

**11.** Le copolymère selon la revendication 9 ou la revendication 10,
où, dans les formules générales (A 1) et (A 2):

- n est égal à 2;
- $R^1$, $R^2$, $R^{2'}$, $R^3$ et $R^{3'}$ représentent chacun un atome d'hydrogène;
- $R^4$ représente un groupe éthyle, butyle, en particulier n-butyle, octyle, en particulier 2-octyle, (iso)bornyle ou stéaryle, de préférence un groupe éthyle, n-butyle ou 2-octyle.

**12.** Le copolymère selon l'une quelconque des revendications 9 à 11,

où, par rapport au copolymère, les unités structurales (A 1) et (A 2) sont présentes dans un rapport molaire de [unité structurale (A 2)] : [unité structurale (A 1)] comprise entre 10 : 90 et 99 : 1, en particulier comprise entre 15 : 85 et 98 : 2, de préférence comprise entre 20 : 80 et 95 : 5, plus préférablement comprise entre 25 : 75 et 90 : 10; et/ou
où le copolymère a une température de transition vitreuse Tg comprise entre -60 °C et 100 °C, en particulier entre -55 °C et 75 °C, de préférence entre -50 °C et 50 °C, de préférence de -45 °C à -0 °C, en particulier telle que déterminée par analyse calorimétrique différentielle, de préférence selon la norme DIN EN ISO 11357-2:2014; et/ou
où le copolymère a une polydispersité, notamment telle que déterminée par chromatographie d'exclusion de taille (SEC), comprise entre 1,05 et 4, notamment comprise entre 1,1 et 3,5, de préférence comprise entre 1,15 et 3,5, plus préférablement comprise entre 1,2 et 3; et/ou
où le copolymère est dégradable, en particulier biodégradable, lorsqu'il est exposé à des conditions de pH comprises dans la plage de 7 à 14, plus particulièrement dans la plage de 7,5 à 12; et/ou
où le copolymère conduit, lorsqu'il est incorporé dans une composition polymère, à la dégradabilité et/ou à l'éliminabilité de celle-ci dans des conditions neutres ou basiques (alcalines) à température ambiante ou à des températures comprises dans la plage de 20 à 120 °C, de préférence dans la plage de 23 à 100 °C, encore plus préférablement dans la plage de 25 à 90 °C.

**13.** Composition polymère, particulièrement appropriée pour être utilisée comme ingrédient ou composant de préférence dégradable d'adhésifs, de matériaux de revêtement, de lubrifiants, de produits agricoles, de produits d'entretien ménager, d'encres, de produits de soins personnels, de cosmétiques, de produits pharmaceutiques, d'emballages, de systèmes d'administration de médicaments,
où la composition polymère comprend au moins un copolymère tel que défini dans l'une quelconque des revendications précédentes.

**14.** Utilisation d'un copolymère tel que défini dans l'une quelconque des revendications précédentes ou d'une composition polymère telle que définie dans l'une quelconque des revendications précédentes comme ou dans un adhésif, en particulier un adhésif sensible à la pression.

**15.** Utilisation d'un copolymère tel que défini dans l'une quelconque des revendications précédentes ou d'une composition polymère telle que définie dans l'une quelconque des revendications précédentes

en tant que ou dans un matériau de revêtement, en particulier un matériau de revêtement choisi parmi les peintures, les laques, les vernis, les couleurs, les imprégnations, les glaçures, les émaux, les finitions et les revêtements protecteurs; et/ou
comme additifs ou agents compatibilisants, en particulier pour des systèmes polymères; et/ou
pour former des films, en particulier des films adhésifs ou des films de revêtement, sur des surfaces de matériaux; et/ou
en tant qu'ingrédient ou composant de préférence dégradable de (i) adhésifs, en particulier adhésifs sensibles à la pression (PSA); (ii) des matériaux de revêtement, en particulier des matériaux de revêtement choisis parmi les peintures, les laques, les vernis, les colorants, les imprégnations, les glaçures, les émaux, les finitions et les revêtements protecteurs; (iii) des lubrifiants; (iv) des produits agricoles, en particulier choisis parmi les semences et les produits liés aux semences, les agents de traitement du sol, les amendements et les engrais, en particulier les enrobages de semences ou les amendements; (v) des produits d'entretien ménager, en particulier les détergents pour le linge et les savons pour les mains; (vi) encres; (vii) produits de soins personnels, en particulier les produits de soins du visage et du corps; (viii) cosmétiques; (ix) produits pharmaceutiques; (x) emballages, en particulier les emballages alimentaires et autres; (xi) systèmes d'administration de médicaments, en particulier pour des applications pharmaceutiques ou nutritives; (xii) additifs ou agents compatibilisants (compatibiliseurs) destinés à être utilisés dans des systèmes polymères; et/ou
pour ou dans (i) les adhésifs, en particulier les adhésifs sensibles à la pression (PSA); (ii) matériaux de revêtement, en particulier les matériaux de revêtement choisis parmi les peintures, les laques, les vernis, les couleurs, les imprégnations, les glaçures, les émaux, les finitions et les revêtements protecteurs; (iii) lubrifiants; (iv) produits agricoles, en particulier choisis parmi les semences et les produits liés aux semences, les agents de traitement du sol, les amendements et les engrais, en particulier les enrobages de semences ou les amendements; (v) produits d'entretien ménager, en particulier les détergents pour le linge et les savons pour les mains; (vi) encres; (vii) produits de soins personnels, en particulier les produits de soins du visage et du corps; (viii) cosmétiques; (ix) produits pharmaceutiques; (x) emballages, en particulier les emballages alimentaires et autres; (xi) systèmes d'administration de médicaments, en particulier pour des applications pharmaceutiques ou nutritives; (xii) additifs ou agents compatibilisants (compatibiliseurs) destinés à être utilisés dans des systèmes polymères; et/ou
pour conférer une dégradabilité, en particulier une biodégradabilité, ou une éliminabilité dans des conditions définies, en particulier dans des conditions douces ou modérées, en particulier dans les conditions utilisées lors des processus de recyclage ou de nettoyage, de préférence dans des conditions neutres ou basiques (alcalines), à des systèmes polymères comprenant le copolymère ou la composition polymère.

**16.** Adhésif, en particulier adhésif sensible à la pression, en particulier dégradable ou éliminable dans des conditions définies, en particulier dans des conditions douces ou modérées, en particulier dans les conditions utilisées lors des processus de recyclage ou de nettoyage, de préférence dans des conditions neutres ou basiques (alcalines),
où l'adhésif comprend un copolymère tel que défini dans l'une quelconque des revendications précédentes ou une composition polymère telle que définie dans l'une quelconque des revendications précédentes.

**17.** Matériau de revêtement, en particulier dégradable ou éliminable dans des conditions définies, en particulier dans des conditions douces ou modérées, en particulier dans les conditions utilisées lors de processus de recyclage ou de nettoyage, de préférence dans des conditions neutres ou basiques (alcalines), en particulier un matériau de revêtement choisi parmi les peintures, les laques, les vernis, les couleurs, les imprégnations, les glaçures, les émaux, les finitions et les revêtements protecteurs,
où le matériau de revêtement comprend un copolymère tel que défini dans l'une quelconque des revendications précédentes ou une composition polymère telle que définie dans l'une quelconque des revendications précédentes.

**18.** Un produit choisi parmi le groupe comprenant (i) les lubrifiants; (ii) les produits agricoles, en particulier les semences et les produits liés aux semences, les agents de traitement du sol, les amendements et les engrais, en particulier les enrobages de semences ou les amendements; (iii) les produits d'entretien ménager, en particulier les détergents pour le linge et les savons pour les mains; (iv) les encres; (v) les produits de soins personnels, en particulier les produits de soins du visage et du corps; (vi) les cosmétiques; (vii) les produits pharmaceutiques; (viii) les emballages, en

particulier les emballages alimentaires et autres; (ix) les systèmes d'administration de médicaments, en particulier pour des applications pharmaceutiques ou nutritives; (x) additifs ou agents compatibilisants (compatibilisants) destinés à être utilisés dans des systèmes polymères, en particulier lorsque le produit est dégradable ou éliminable dans des conditions définies, notamment dans des conditions douces ou modérées, en particulier dans les conditions utilisées lors des processus de recyclage ou de nettoyage, de préférence dans des conditions neutres ou basiques (alcalines),

dans lesquels le produit comprend un copolymère tel que défini dans l'une quelconque des revendications précédentes ou une composition polymère telle que définie dans l'une quelconque des revendications précédentes.

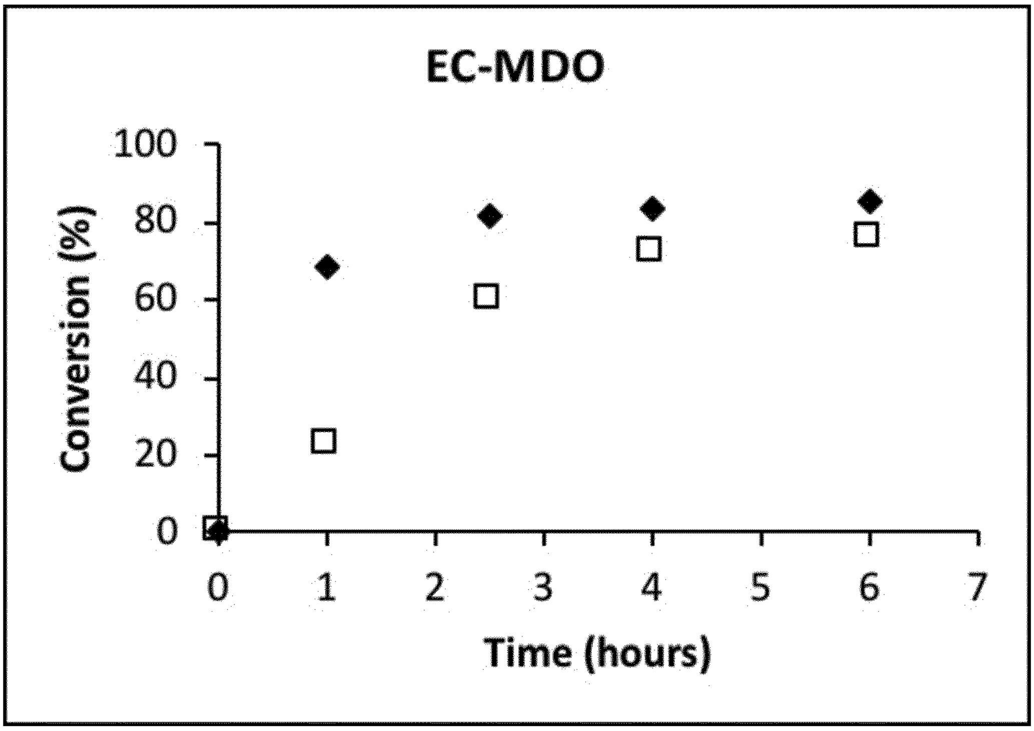
EC-MDO
100
80
60
40
20
0
Conversion (%)
0
1
2
3
4
5
6
7
Time (hours)

Fig. 1

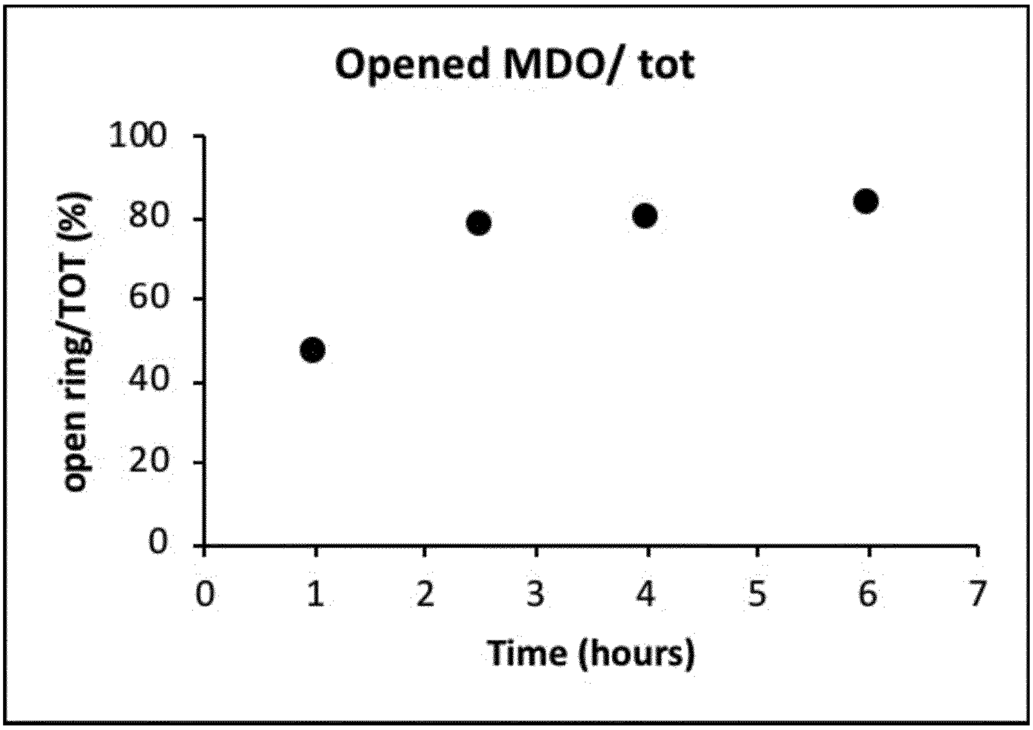
Opened MDO/ tot
100
80
60
40
20
0
open ring/TOT (%)
0
1
2
3
4
5
6
7
Time (hours)

Fig. 2

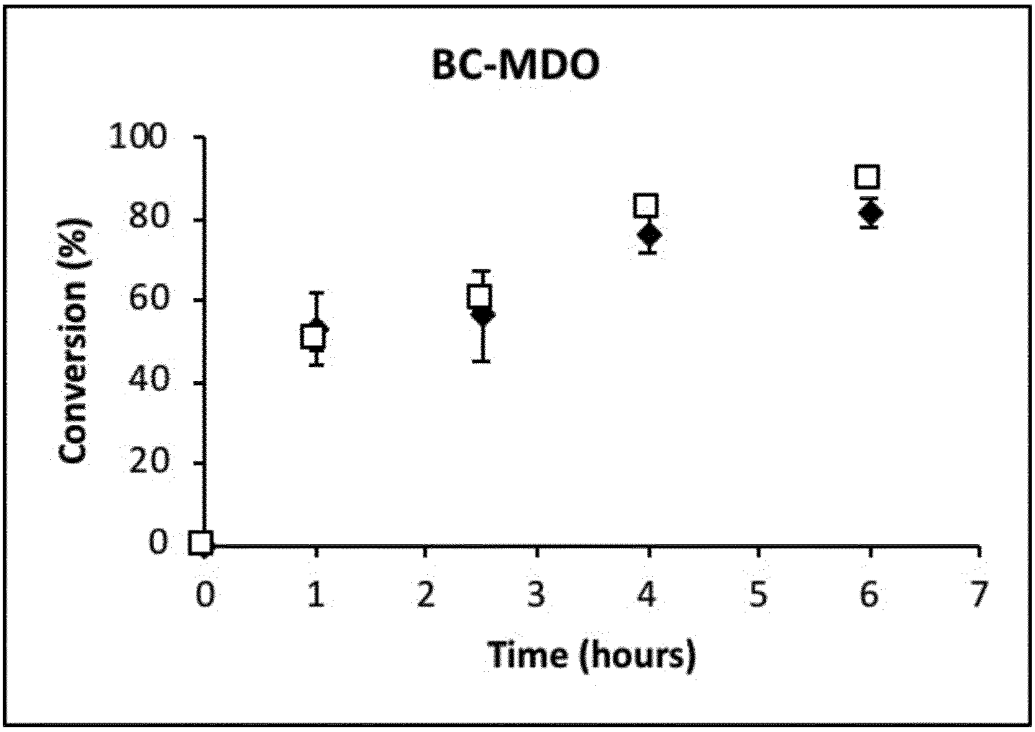
BC-MDO
Conversion (%)
100
80
60
40
20
0
0
1
2
3
4
5
6
7
Time (hours)

Fig. 3

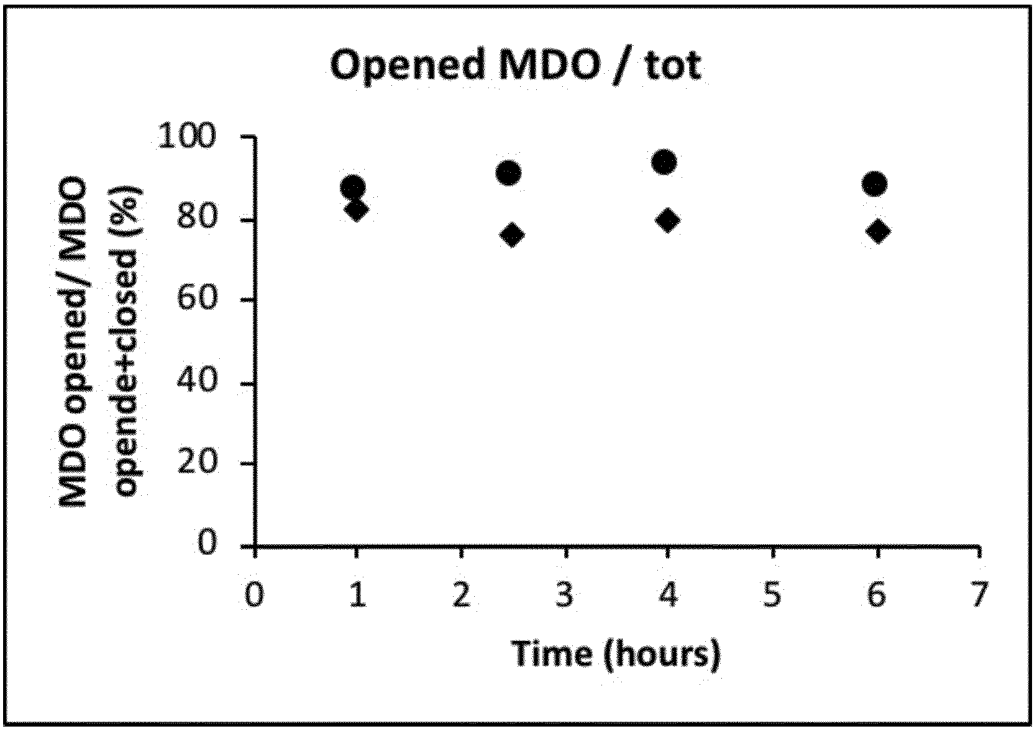
Opened MDO / tot
MDO opened/ MDO opende+closed (%)
100
80
60
40
20
0
0
1
2
3
4
5
6
7
Time (hours)

Fig. 4

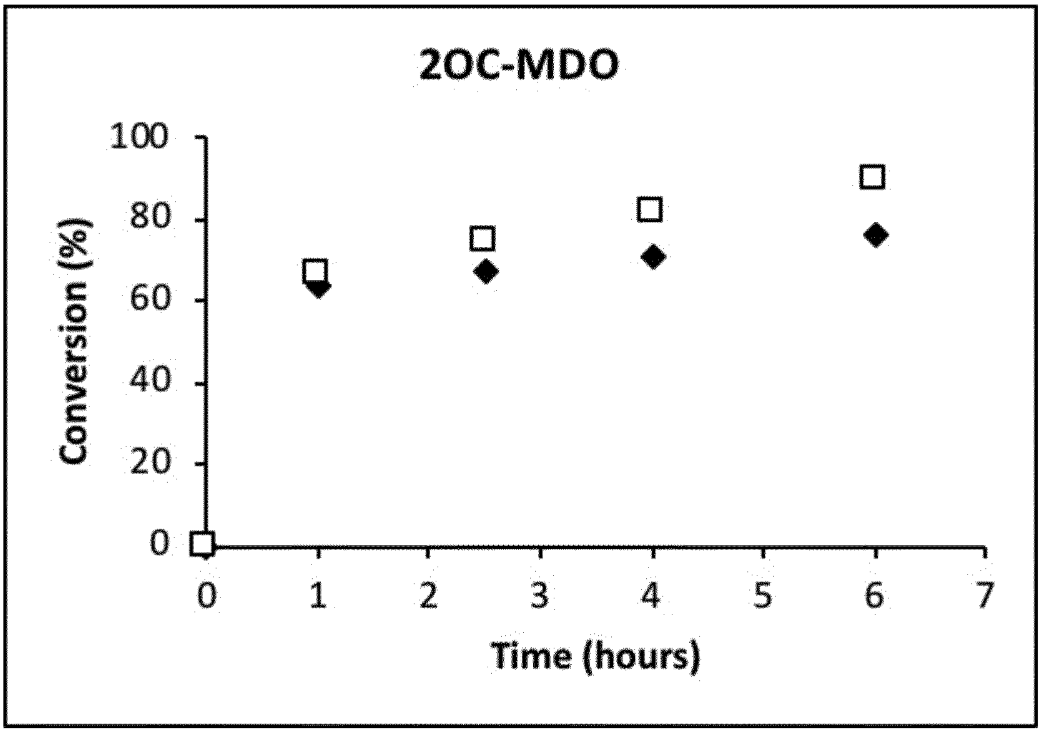
2OC-MDO
100
80
60
40
20
0
Conversion (%)
0
1
2
3
4
5
6
7
Time (hours)

Fig. 5

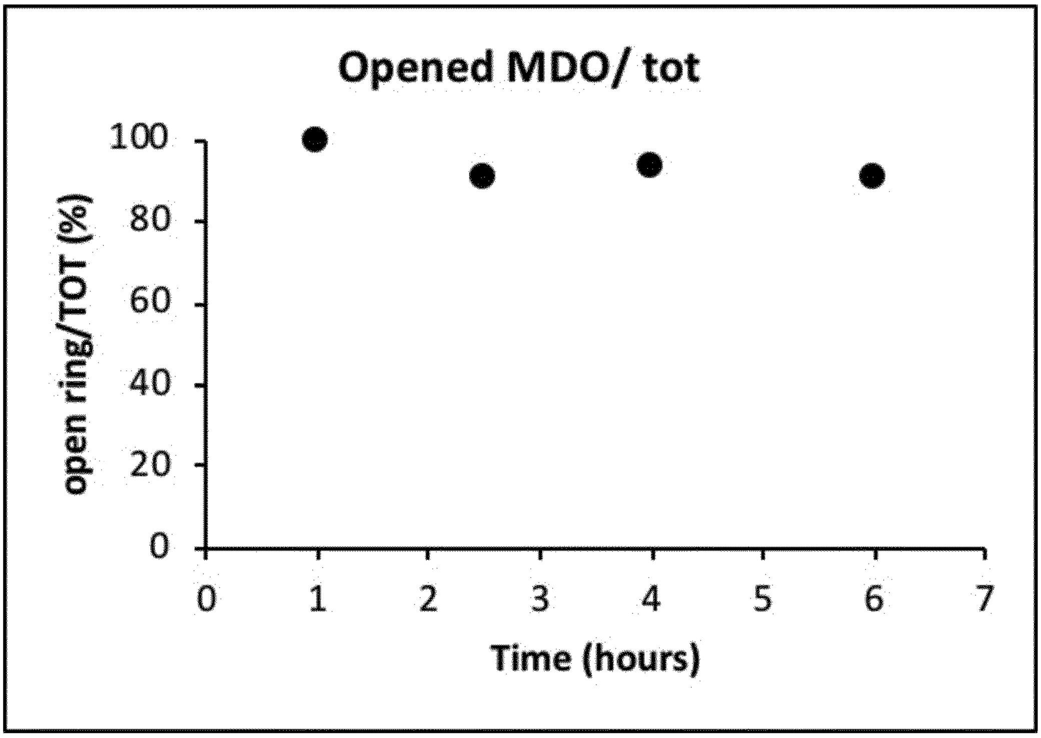
Opened MDO/ tot
100
80
60
40
20
0
open ring/TOT (%)
0
1
2
3
4
5
6
7
Time (hours)

Fig. 6

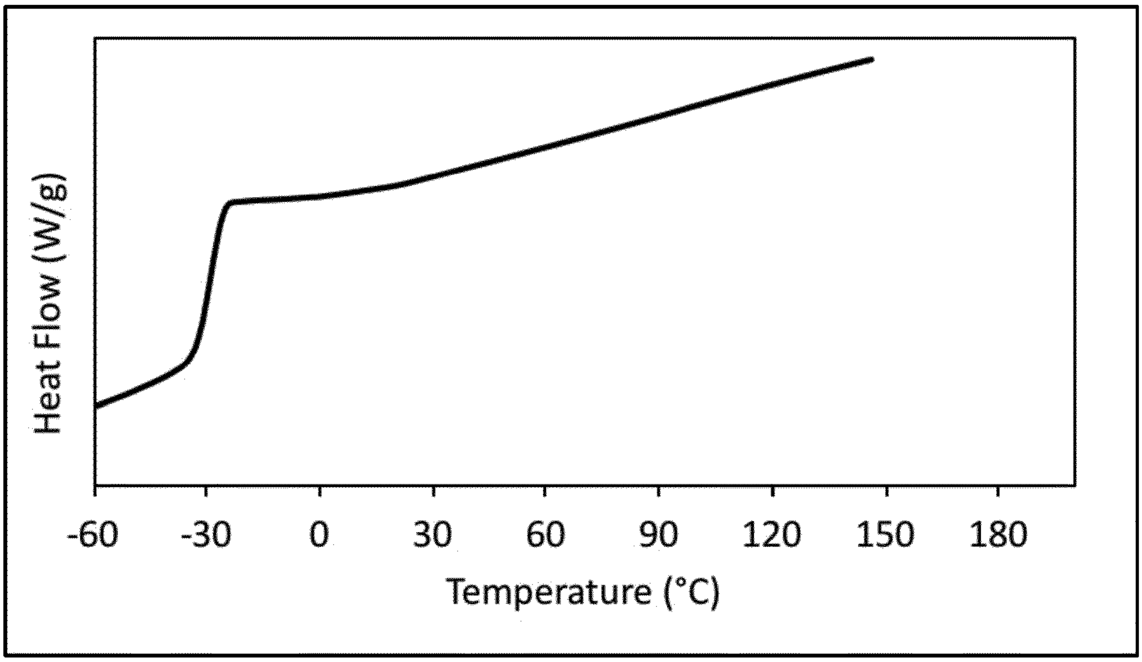
Heat Flow (W/g)
-60
-30
0
30
60
90
120
150
180
Temperature (°C)

Fig. 7

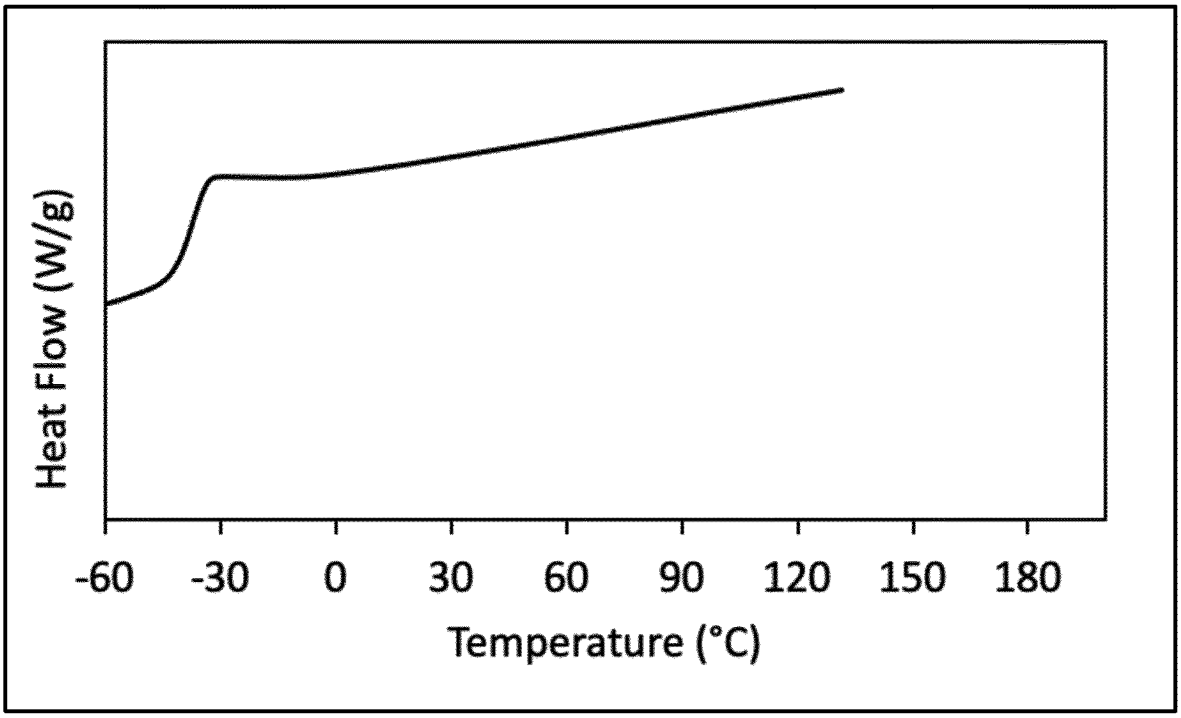
Heat Flow (W/g)
-60
-30
0
30
60
90
120
150
180
Temperature (°C)

Fig. 8

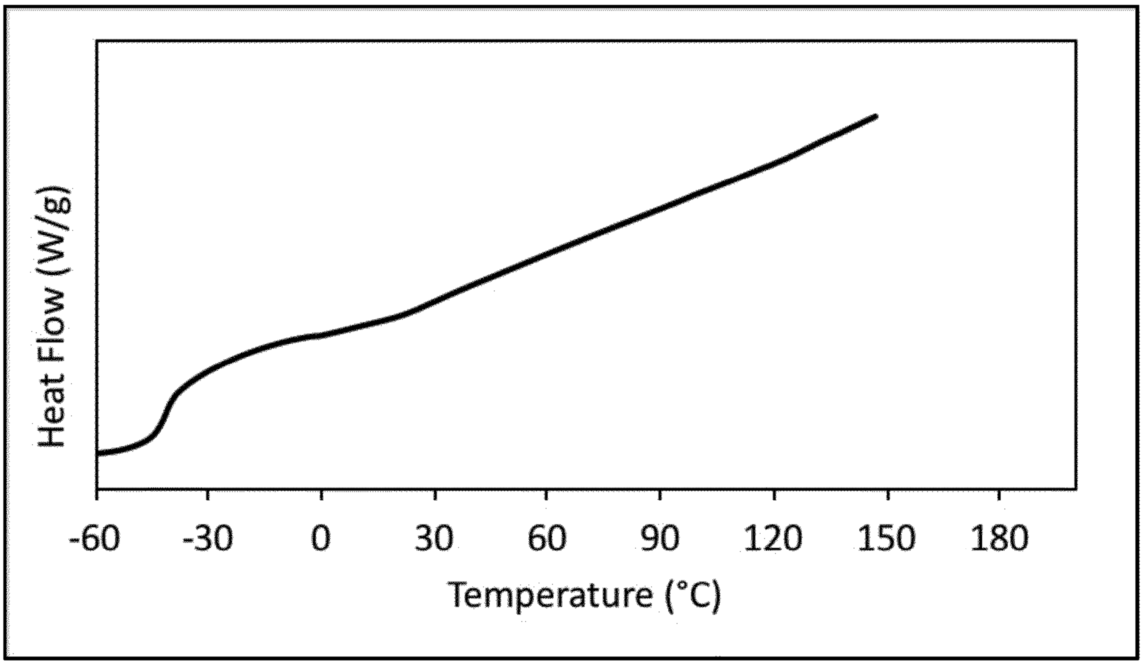
Heat Flow (W/g)
-60
-30
0
30
60
90
120
150
180
Temperature (°C)

Fig. 9

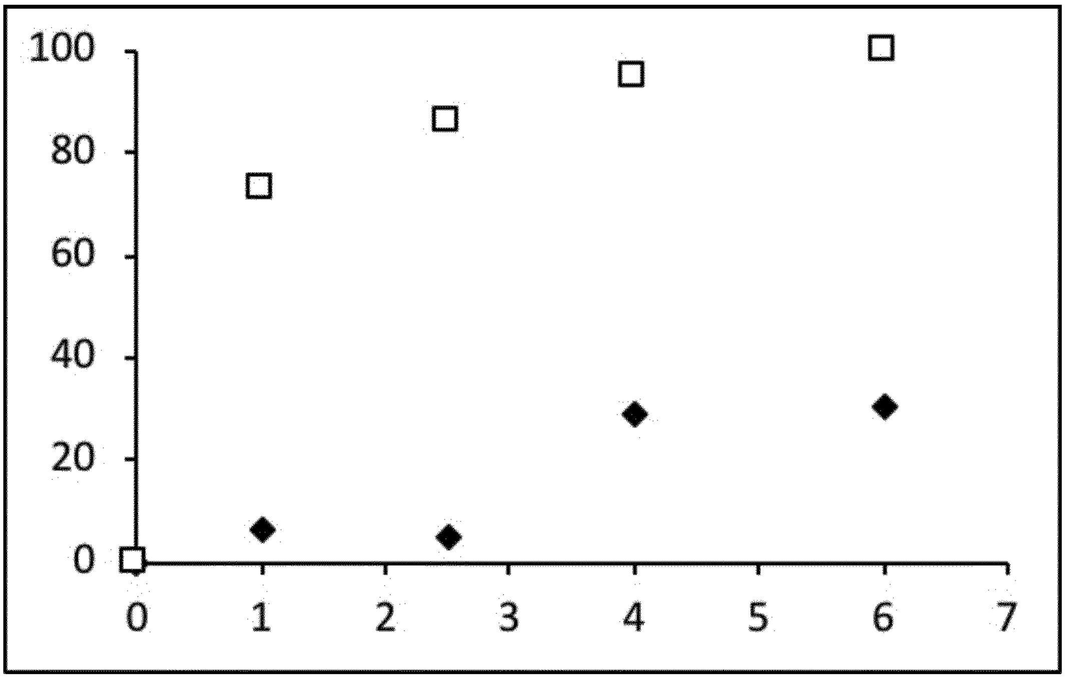
100
80
60
40
20
0
0
1
2
3
4
5
6
7

Fig. 10

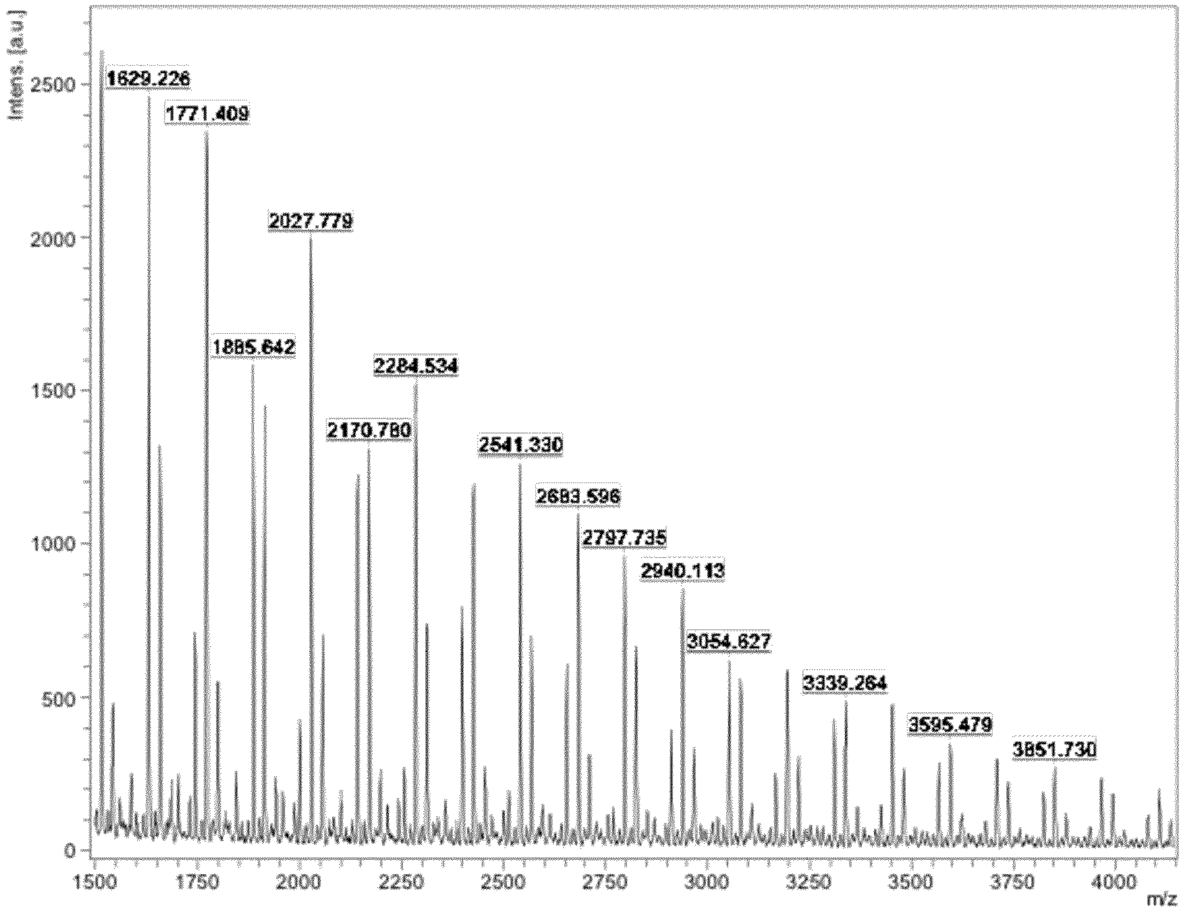
Intens. [a.u.]
2500
2000
1500
1000
500
0
1629.226
1771.409
2027.779
1885.642
2284.534
2170.780
2541.330
2683.596
2797.735
2940.113
3054.627
3339.264
3595.479
3851.730
1500
1750
2000
2250
2500
2750
3000
3250
3500
3750
4000
m/z

Fig. 11

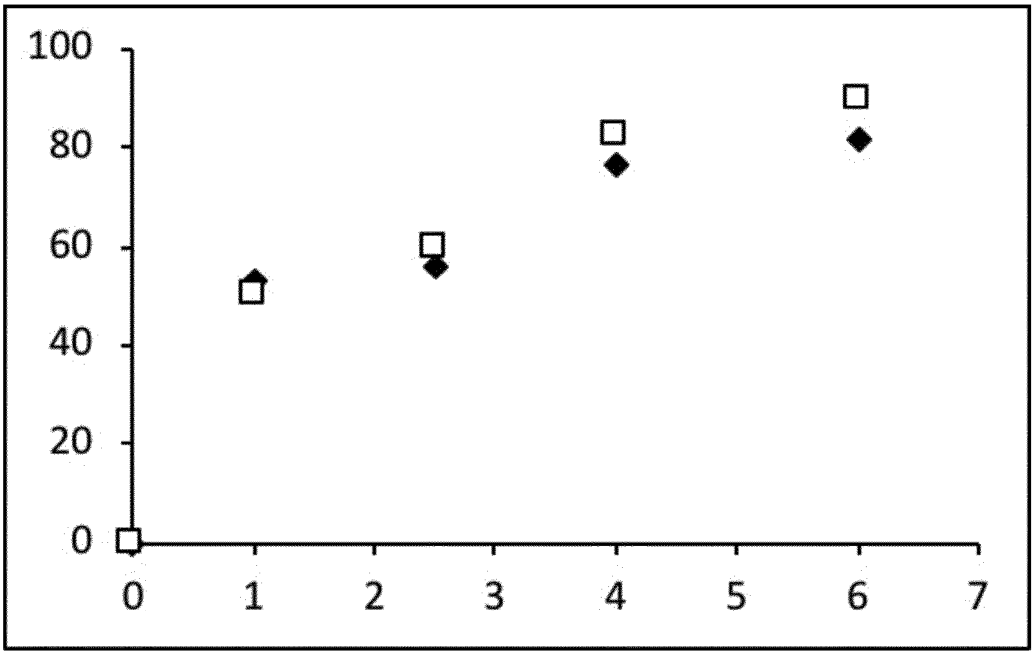
100
80
60
40
20
0
0
1
2
3
4
5
6
7

Fig. 12

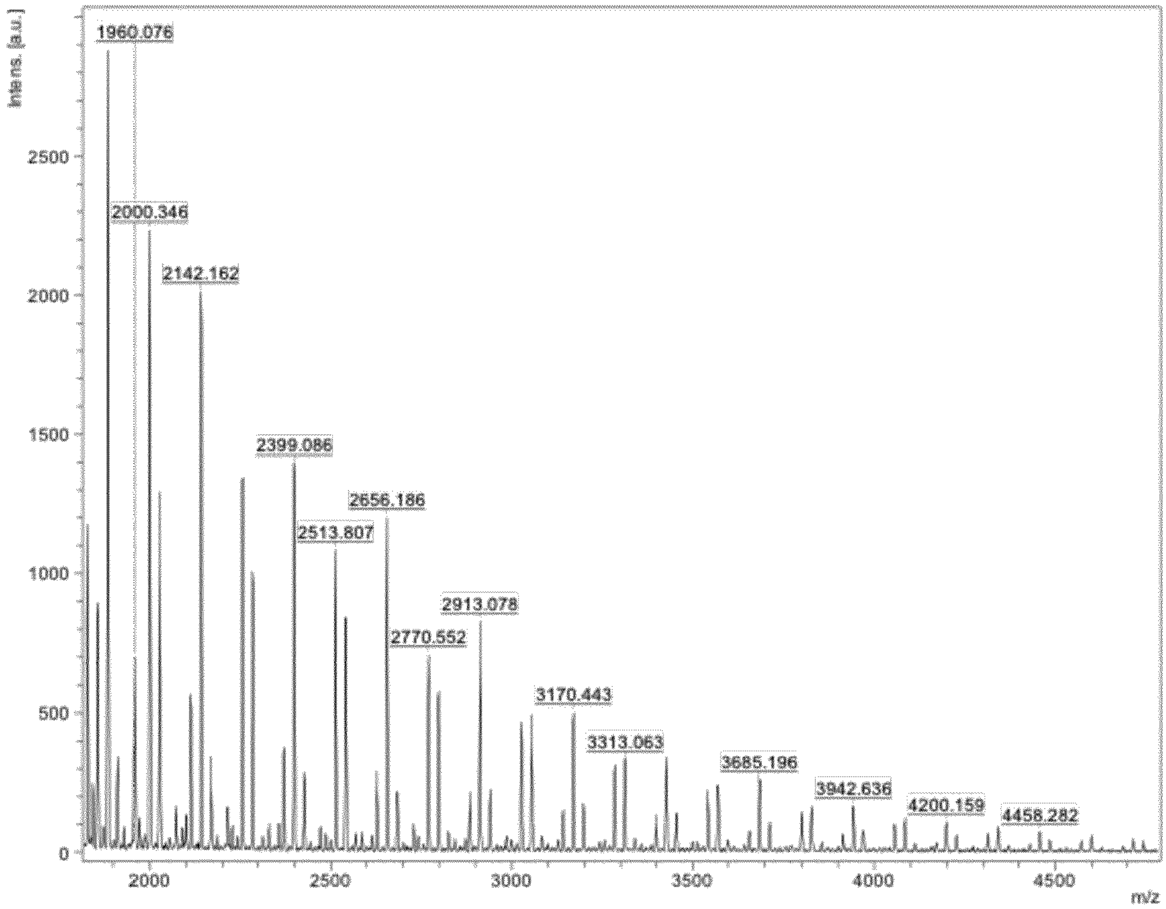
Intens. [a.u.]
1960.076
2000.346
2142.162
2399.086
2513.807
2656.186
2913.078
2770.552
3170.443
3313.063
3685.196
3942.636
4200.159
4458.282
2500
2000
1500
1000
500
0
2000
2500
3000
3500
4000
4500
m/z

Fig. 13

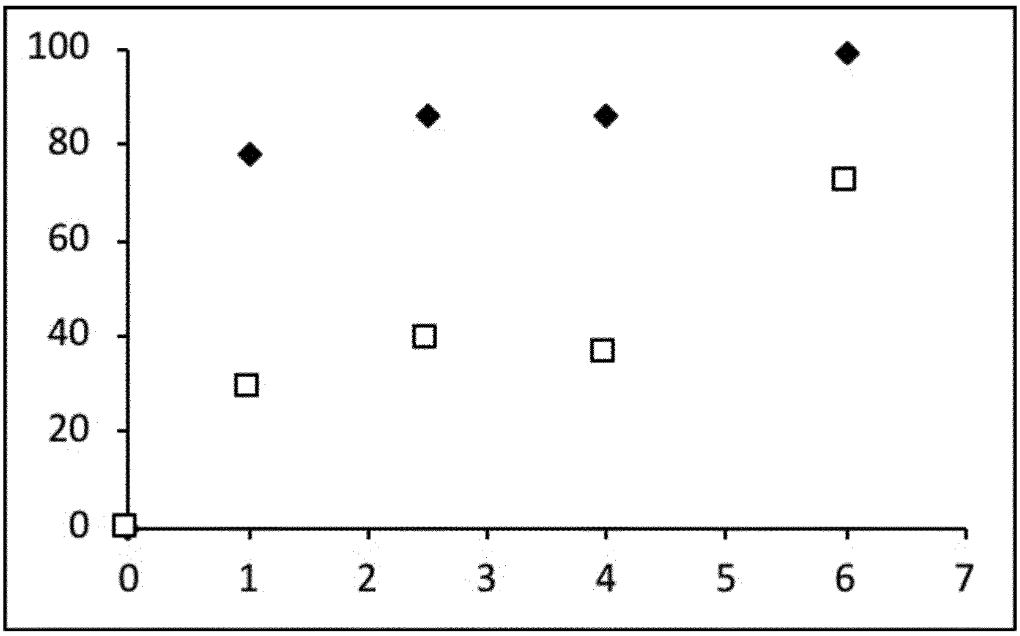
100
80
60
40
20
0
0
1
2
3
4
5
6
7

Fig. 14

Fig. 15

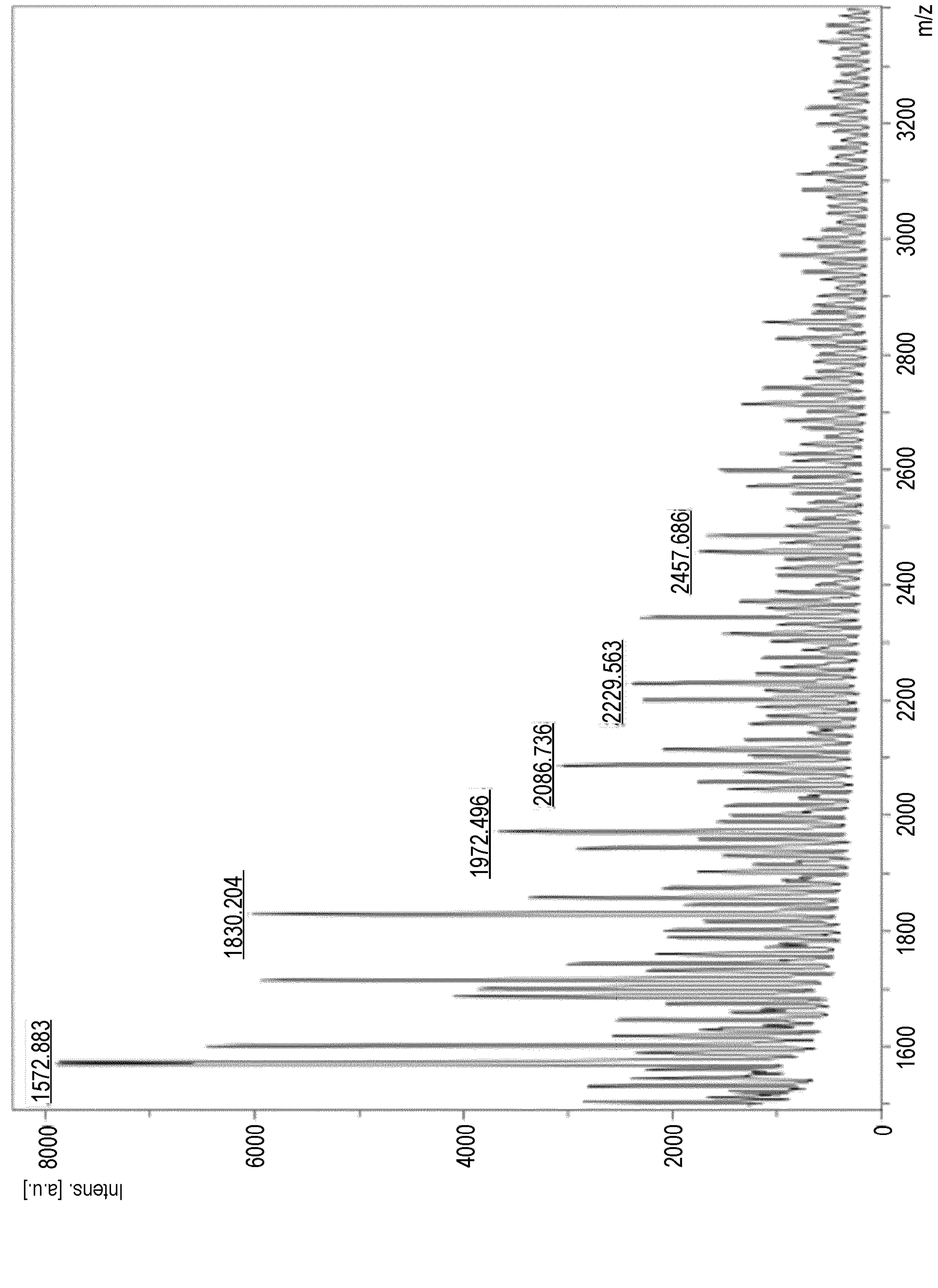
1572.883
1830.204
1972.496
2086.736
2229.563
2457.686
Intens. [a.u.]
8000
6000
4000
2000
0
1600
1800
2000
2200
2400
2600
2800
3000
3200
m/z

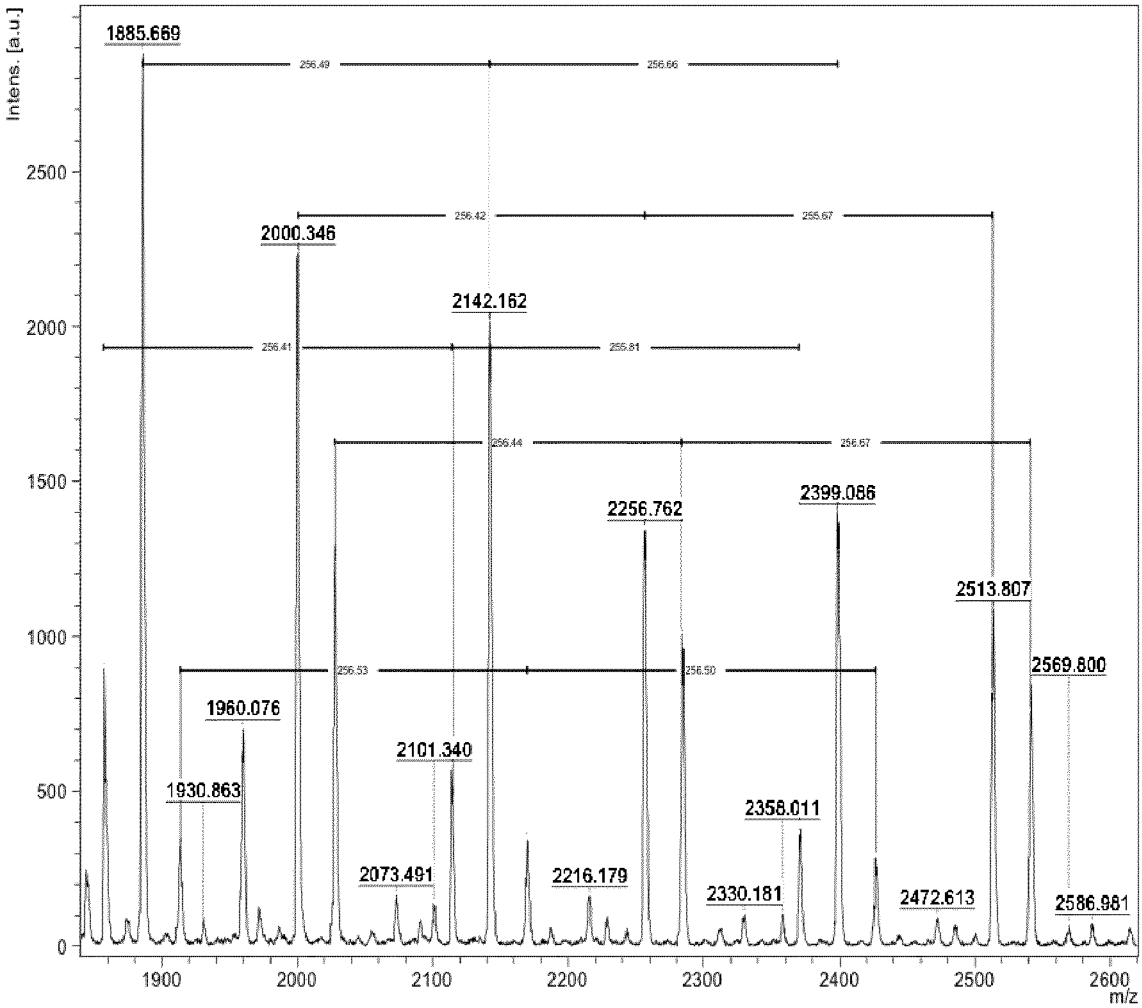
Intens. [a.u.]
2500
2000
1500
1000
500
0
1900
2000
2100
2200
2300
2400
2500
2600
m/z
1885.669
2000.346
2142.162
2256.762
2399.086
2513.807
2569.800
1960.076
1930.863
2101.340
2073.491
2216.179
2330.181
2358.011
2472.613
2586.981
256.49
256.66
256.42
255.67
256.41
255.81
256.44
256.67
256.53
256.50

Fig. 16

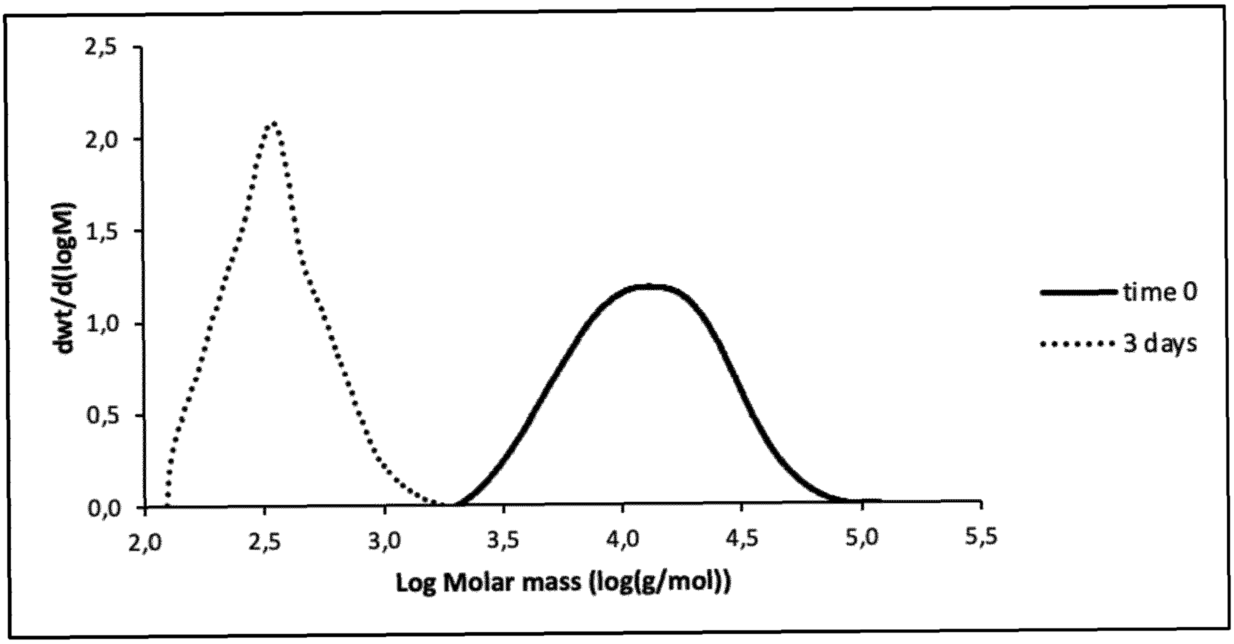
2,5
2,0
1,5
1,0
0,5
0,0
dwt/d(logM)
2,0
2,5
3,0
3,5
4,0
4,5
5,0
5,5
Log Molar mass (log(g/mol))
time 0
3 days

Fig. 17

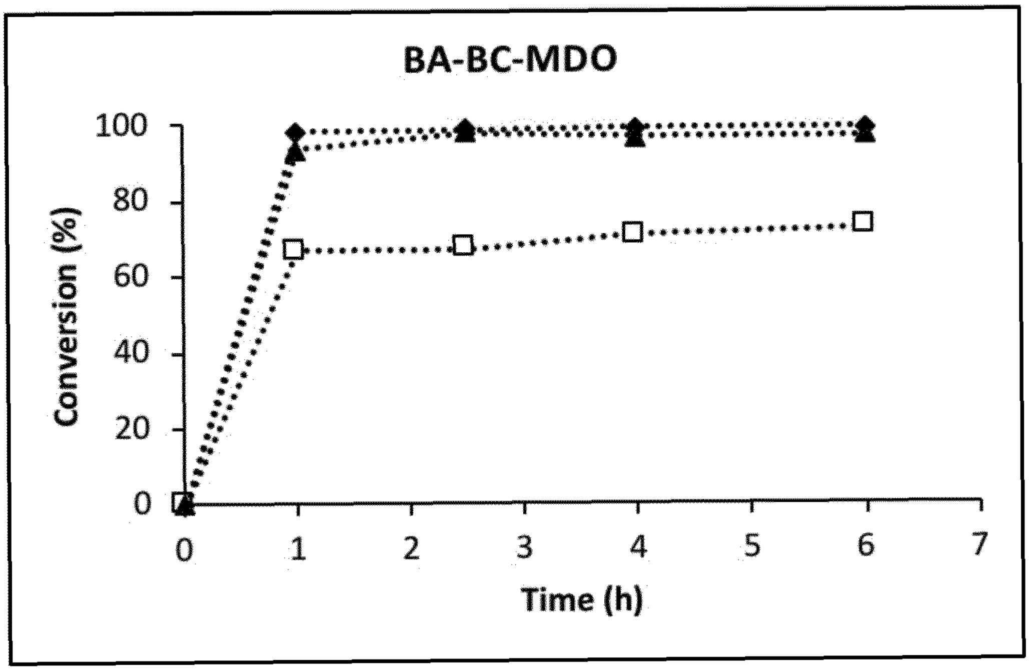
BA-BC-MDO
100
80
60
40
20
0
Conversion (%)
0
1
2
3
4
5
6
7
Time (h)

Fig. 18

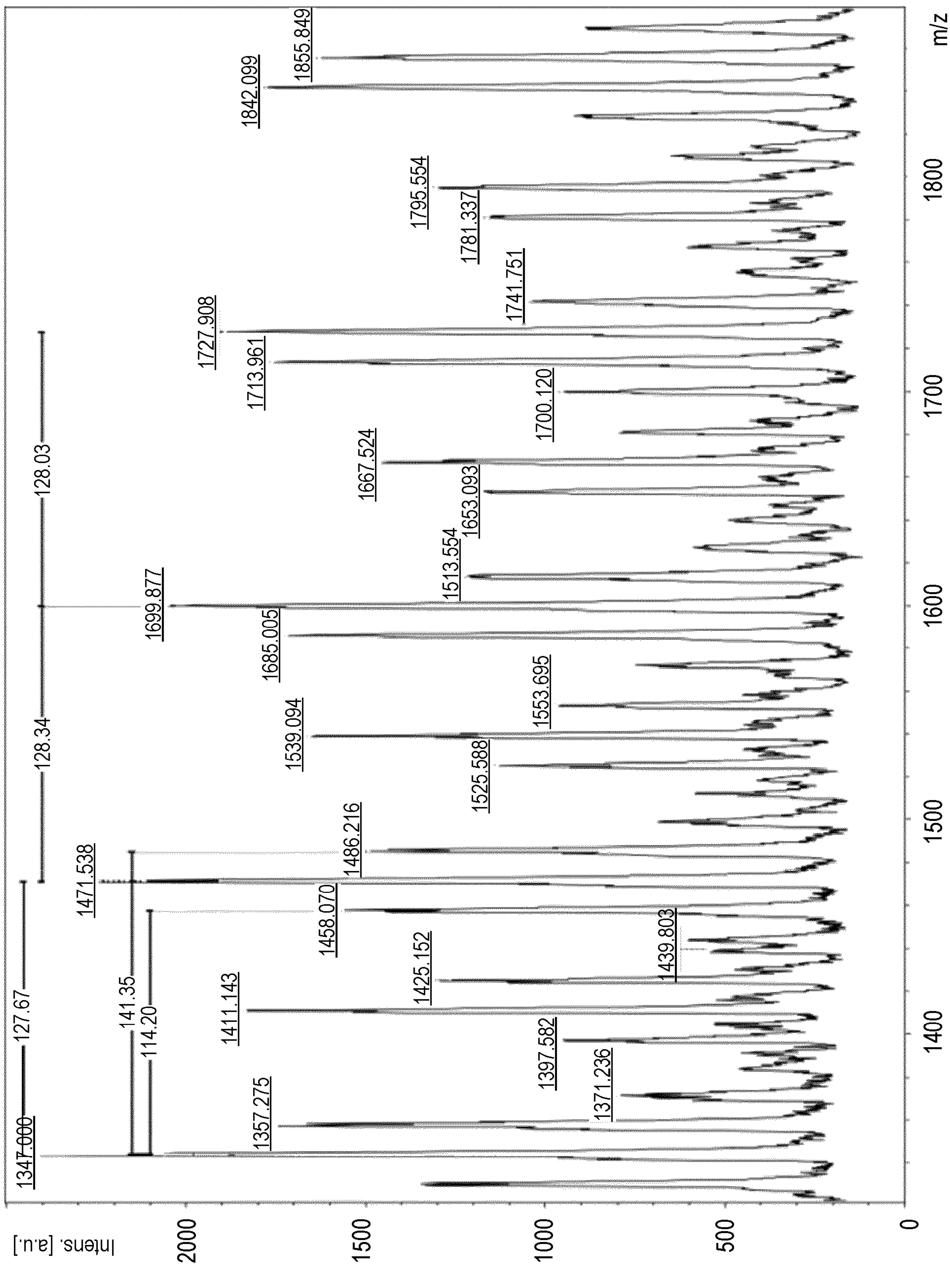
Intens. [a.u.]
2000
1500
1000
500
0
1400
1500
1600
1700
1800
m/z
1347.000
127.67
141.35
114.20
1357.275
1371.236
1397.582
1411.143
1425.152
1439.803
1458.070
1471.538
1486.216
128.34
1525.588
1539.094
1553.695
1685.005
1699.877
1513.554
128.03
1653.093
1667.524
1700.120
1713.961
1727.908
1741.751
1781.337
1795.554
1842.099
1855.849

Fig. 19

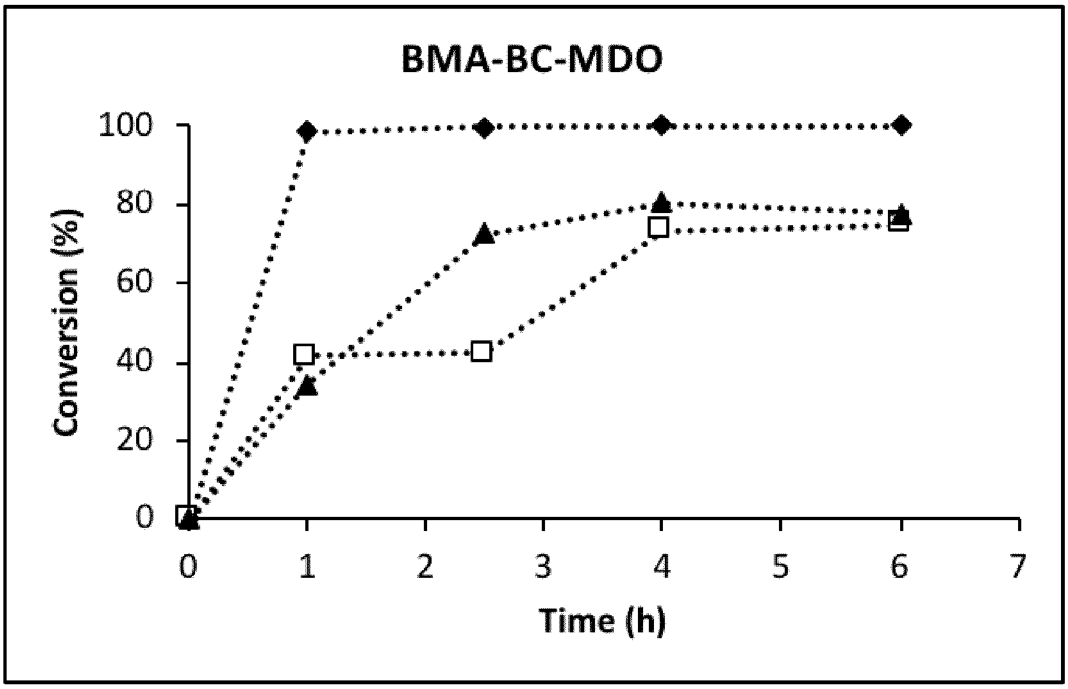


Fig. 20

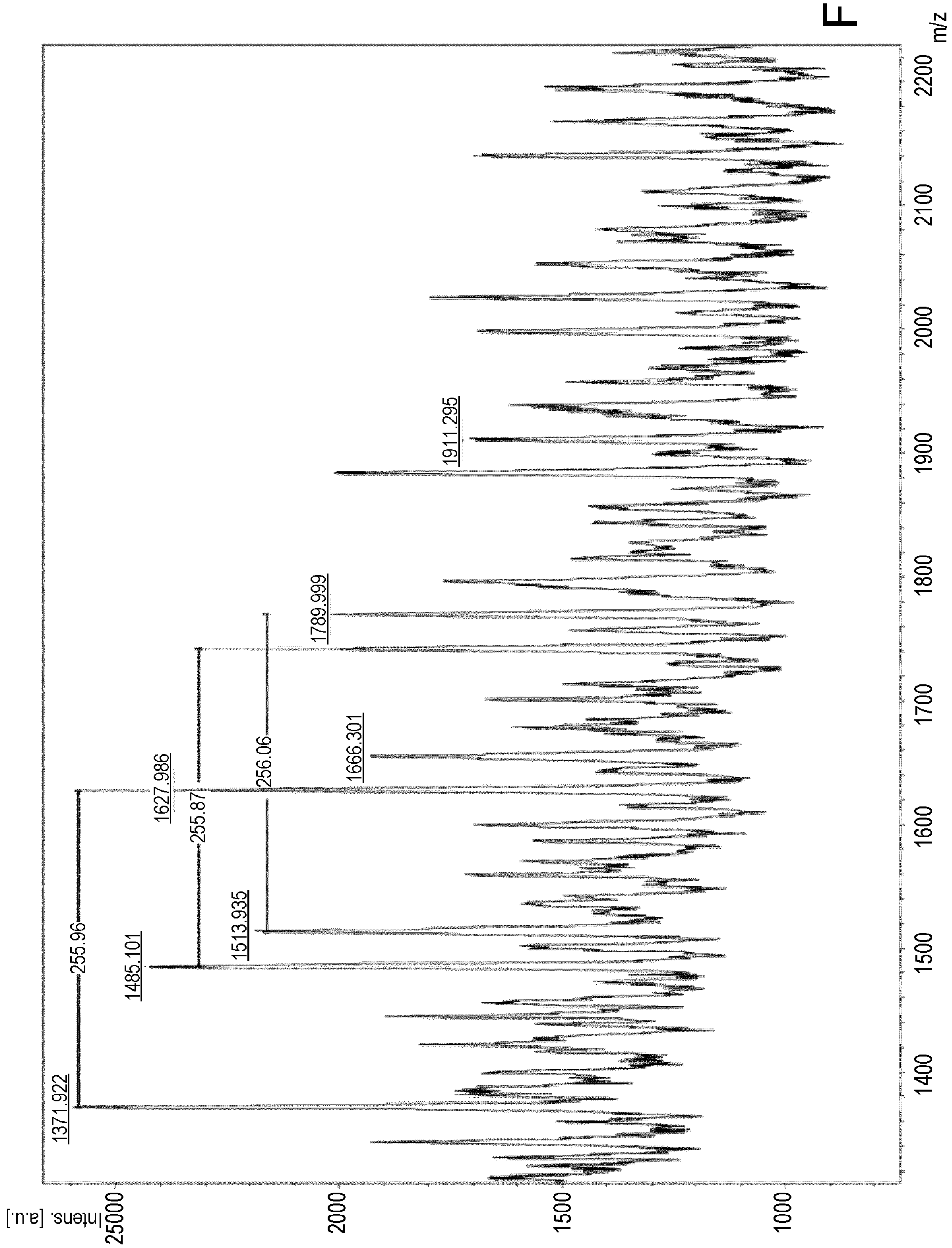
Intens. [a.u.]
25000
2000
1500
1000
m/z
1400
1500
1600
1700
1800
1900
2000
2100
2200
1371.922
255.96
1485.101
1513.935
255.87
1627.986
256.06
1666.301
1789.999
1911.295

Fig. 21

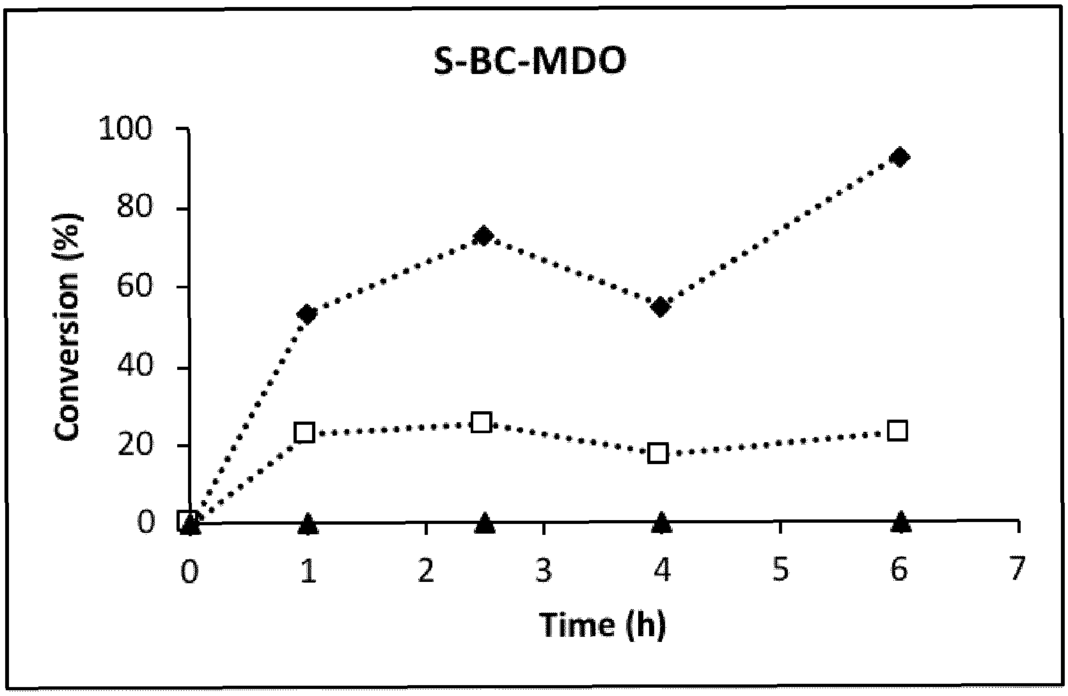


Fig. 22

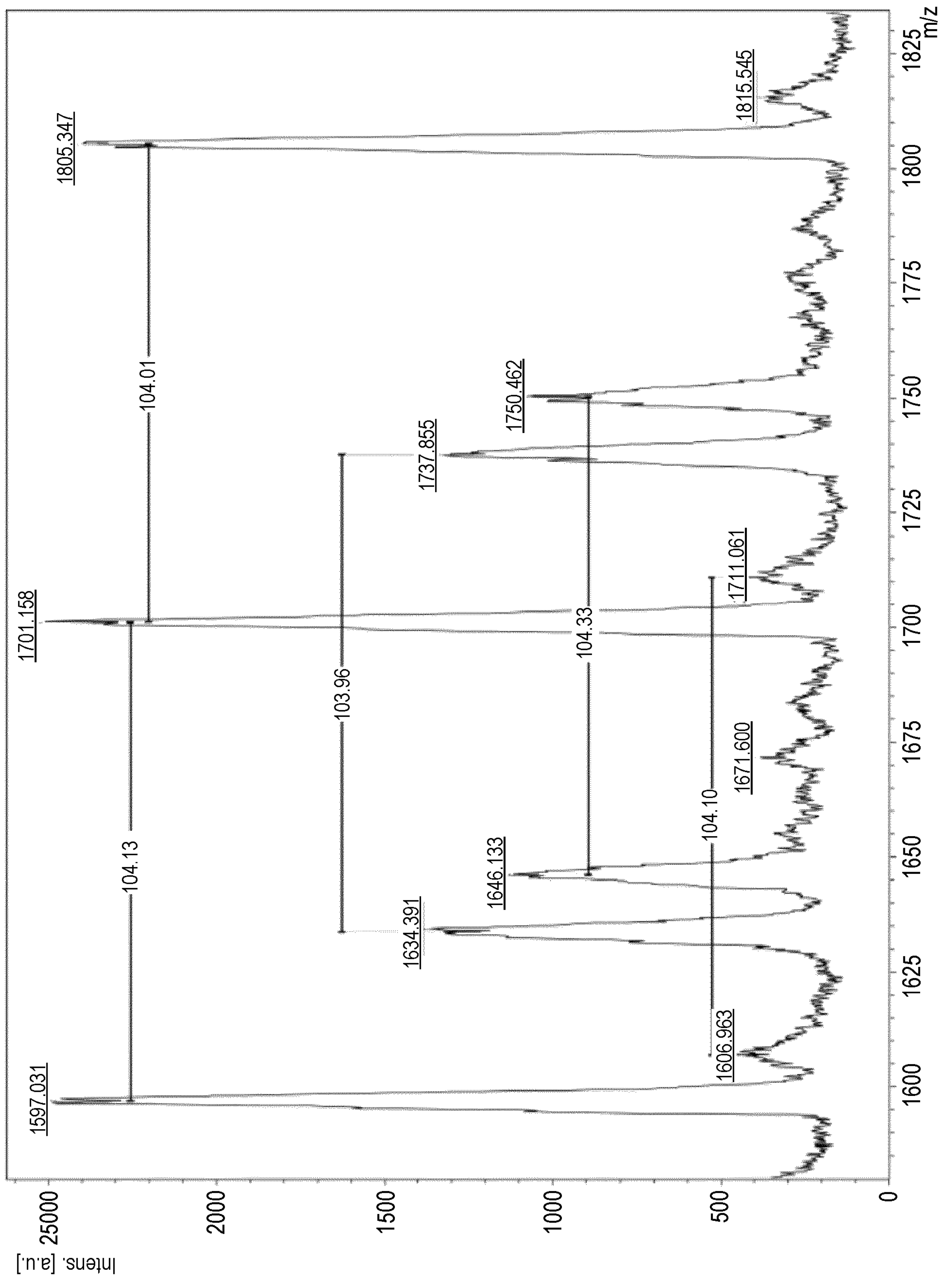

Intens. [a.u.]
25000
2000
1500
1000
500
0
1600
1625
1650
1675
1700
1725
1750
1775
1800
1825
m/z
1597.031
1606.963
1634.391
1646.133
1671.600
1701.158
1711.061
1737.855
1750.462
1805.347
1815.545
104.13
104.10
103.96
104.33
104.01


Fig. 23

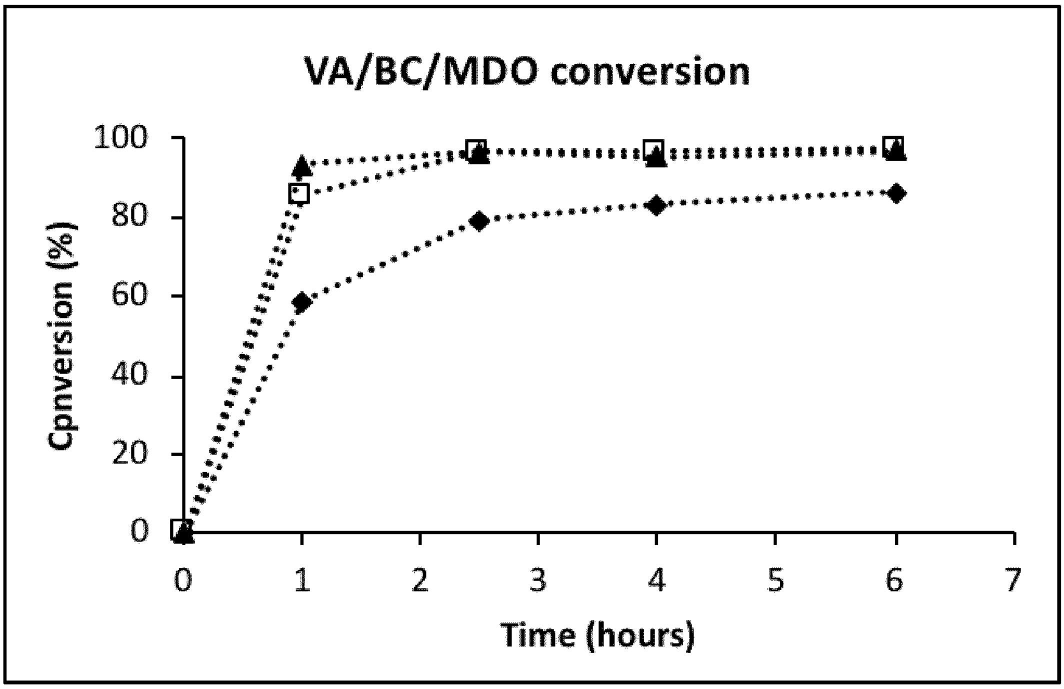
VA/BC/MDO conversion
Cpnversion (%)
100
80
60
40
20
0
0
1
2
3
4
5
6
7
Time (hours)

Fig. 24

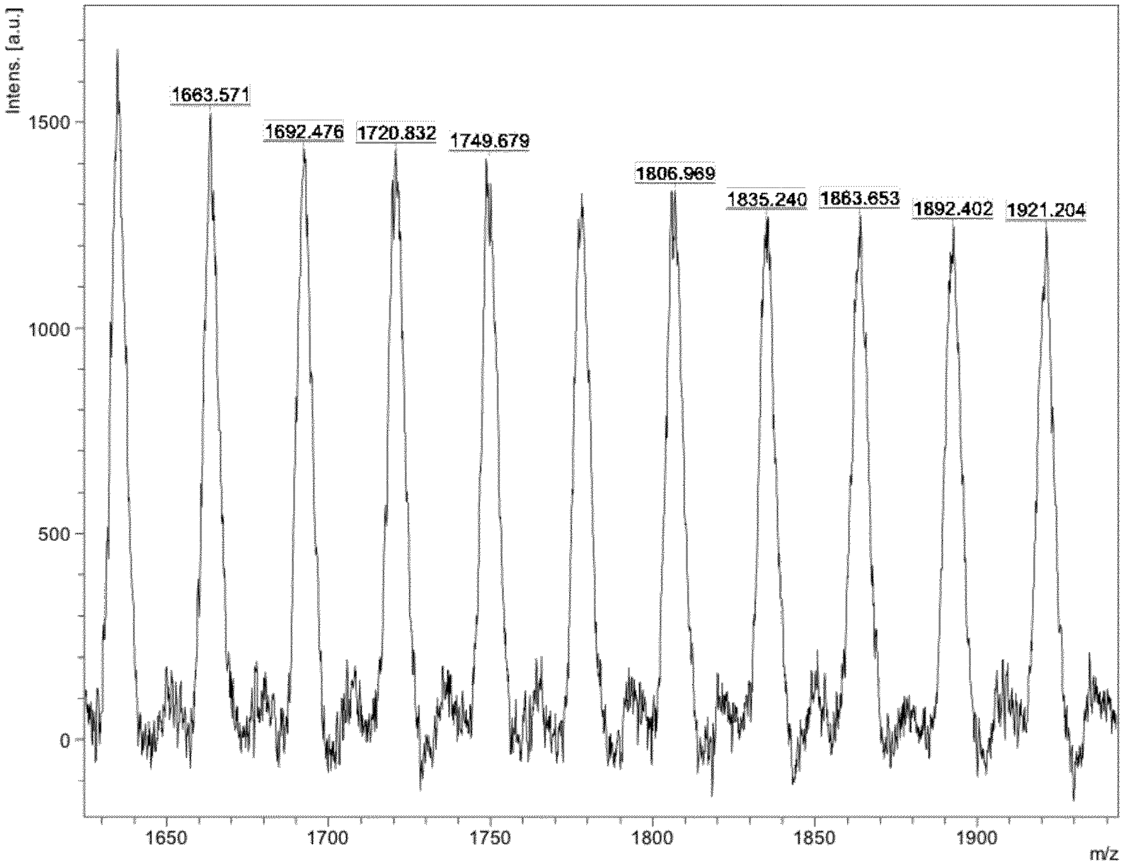
Intens. [a.u.]
1500
1000
500
0
1663.571
1692.476
1720.832
1749.679
1806.969
1835.240
1863.653
1892.402
1921.204
1650
1700
1750
1800
1850
1900
m/z

Fig. 25

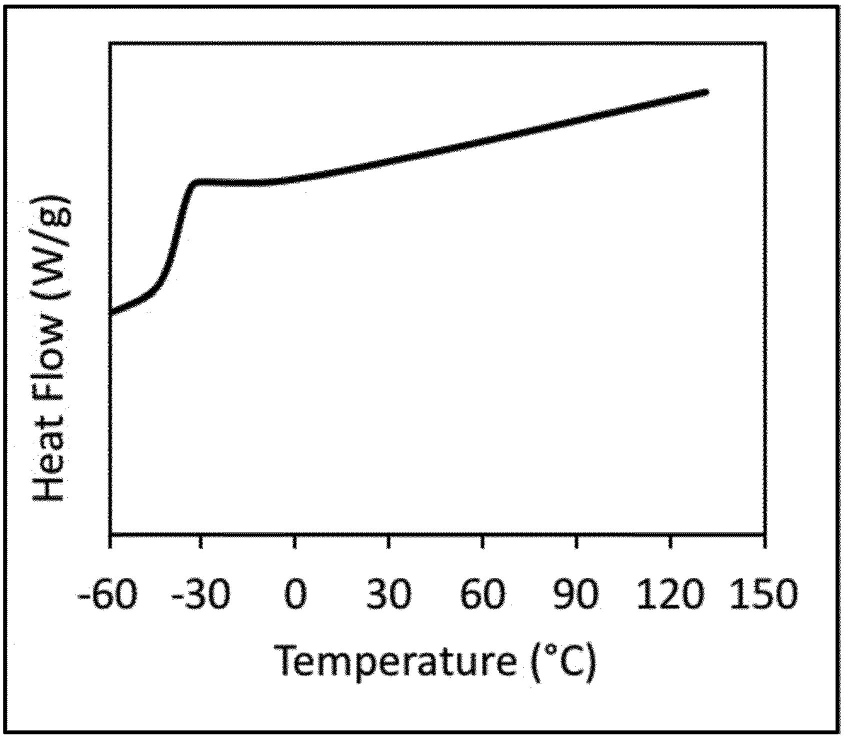
Heat Flow (W/g)
-60
-30
0
30
60
90
120
150
Temperature (°C)

Fig. 26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3722334 A1
- WO 2011141522 A1
- WO 2021058122 A1


### Non-patent literature cited in the description


- **S. RAMESHKUMAR et al.** Bio-based and biodegradable polymers - State-of-the-art, challenges and emerging trends. *Current Opinion in Green and Sustainable Chemistry*, 2020, vol. 21, 75-81, https://doi.org/10.1016/j.cogsc.2019.12.005
- **HUGO FOUILLOUX et al.** Production and Polymerization of Biobased Acrylates and Analogs. *Macromolecular Rapid Communications*, 12 January 2021, vol. 42 (3), 2000530
- Free-Radical Copolymerization Behaviour of 5,6-Benzo-2-Methylene-1,3-Dioxepane and Methacrylic Acid vie the in situ Generation of 3-Methyl-1,5-Dihydrobenzo(e)(1,3)dioxepin-3-yl Methacrylate and 2-(Acetoxymethyl)benzyl Methacrylate. **REN L. et al.** Macromolecules. American Chemical Society, 30 October 2007, vol. 40, 7834-7841
- **DING DONGDONG et al.** A degradable copolymer of 2-methylene-1,3-dioxepane and vinyl acetate by photo-induced cobalt-mediated radical polymerization. *Polymer Chemistry*, 01 January 2016, vol. 7 (33), 5258-5264
- **SUN L. F. et al.** Synthesis and Enzymatic Degradation of 2-Methylene-1,3-dioxepane and Methyl Acrlyate Copolymers. *Department of Chemistry, Wuhan University*, 30 June 2003, 2898-2904
- **F. WENZEL et al.** Kinetics of Radical Ring Opening Polymerization of the Cyclic Ketene Acetal 2-Methylene-1,3-dioxepane with Vinyl Monomers. *Ind. Eng. Chem. Res.*, 2021, vol. 60 (29), 10479-10488, https://doi.org/10.1021/acs.iecr.0c04117
- **A. PARODI et al.** Bio-based crotonic acid from polyhydroxybutyrate: synthesis and photocatalyzed hydroacylation. *Green Chemistry*, 2021, vol. 23 (9), 3420-3427, https://doi.org/10.1039/d1gc00421b
- **Y. TAKENAKA et al.** Group-Transfer Polymerization of Various Crotonates Using Organic Acid Catalysts. *Macromolecules*, 2019, vol. 52 (11), 4052-4058, https://doi.org/10.1021/acs.macromol.9b00272